(19) Europäisches Patentamt
European Patent Office
Office européen des brevets

(11) **EP 3 339 117 A1**

(12) **EUROPÄISCHE PATENTANMELDUNG**

(43) Veröffentlichungstag:
**27.06.2018  Patentblatt 2018/26**

(51) Int Cl.:
*B60T 8/172* *(2006.01)*

(21) Anmeldenummer: **17002041.6**

(22) Anmeldetag: **19.12.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **21.12.2016  DE 102016015268**

(71) Anmelder:
• **Karlsruher Institut für Technologie**
  **76131 Karlsruhe (DE)**
• **Compagnie Générale des Etablissements Michelin**
  **63000 Clermont-Ferrand (FR)**

(72) Erfinder:
• **Zhou, Yaoqun**
  **76131 Karlsruhe (DE)**
• **Gauterin, Frank**
  **76829 Leinsweiler (DE)**
• **Unrau, Hans-Joachim**
  **76227 Karlsruhe (DE)**
• **Frey, Michael**
  **76275 Ettlingen (DE)**
• **Haas, André**
  **63040 Clermont-Ferrand Cedex 9 (FR)**
• **Levrard, Benjamin**
  **63040 Clermont-Ferrand Cedex 9 (FR)**

(74) Vertreter: **Müller-Boré & Partner**
  **Patentanwälte PartG mbB**
  **Friedenheimer Brücke 21**
  **80639 München (DE)**

(54) **VERFAHREN ZUR ANSTEUERUNG EINER FAHRZEUGBREMSANLAGE ZUR OPTIMIERUNG DES BREMSVORGANGES**

(57)    Die Erfindung betrifft ein Verfahren, eine Vorrichtung und ein Computerprogrammprodukt zur Steuerung einer Bremsanlage eines Rades (4) in einem Fahrzeug (2), in welchem ein Fahrzeugaufbau (6) mittels eines Rad-Fahrwerk-Systems an das Rad (4) gekoppelt ist, wobei das Verfahren die Schritte umfasst:
- Ermitteln eines Beobachtungswerts $x$, welcher eine Abweichung $\tilde{x} - x_0$ eines momentanen Wertes $\tilde{x}$ eines Bewegungszustandes des Rad-Fahrwerk-Systems von einem Sollwert $x_0$ während eines Bremsvorgangs beschreibt, wobei der Beobachtungswert zumindest eine Komponente umfasst, die den Bewegungszustand in zumindest einem translatorischen Freiheitsgrad des Rades (4) und/oder des Aufbaus (6) beschreibt; und
- Bereitstellen eines Steuersignals auf Basis einer Rückführmatrix $K$ derart, dass das Steuersignal ausgelegt ist, mittels der Bremsanlage eine Bremsmomentänderung $u$ gemäß

$$u = -K \cdot x$$

zur Reduzierung des Beobachtungswertes $x$ zu erzeugen, wobei die Rückführmatrix $K$ mittels eines linear-quadratischen Reglers durch die Minimierung eines vom Beobachtungswert $x$ abhängigen Funktionals $J$ bestimmt wird.

Fig. 5

EP 3 339 117 A1

**Beschreibung**

Die Erfindung liegt auf dem Gebiet der Steuerung bzw. Regelung von Radbremsen, insbesondere von Radbremsen für Kraftfahrzeuge.

Bei der Verbesserung von Bremsanlagen für Fahrzeuge spielen insbesondere zwei Kriterien eine wichtige Rolle für die Sicherheit im Straßenverkehr. Ein erstes wichtiges Kriterium ist die Länge des Anhaltewegs. Hierbei spielen die Reaktionszeit der Bremsanlage und die Verzögerungsleistung eine entscheidende Rolle. Ein zweites wichtiges Kriterium betrifft die Kontrollierbarkeit, insbesondere die Lenkbarkeit, des Fahrzeugs während des Bremsvorgangs.

Zur Verbesserung der Verkehrssicherheit sind diverse Lösungswege bekannt. Ein häufig verwendetes Hilfsmittel ist dabei ein Bremsregler mit einem Anti-Blockier-System (ABS), welcher typischerweise in Kraftfahrzeugen zur Ansteuerung bzw. Regelung der Bremsanlage verwendet wird. Die Verwendung von ABS führt zwar in der Regel nicht unbedingt zu einer Verkürzung des Bremsweges, verbessert aber insbesondere während eines starken Bremsvorgangs die Lenkbarkeit eines Fahrzeugs, um eventuell auch noch während des Bremsvorgangs einem Hindernis ausweichen zu können.

Darauf aufbauende Verfahren, welche aus dem Stand der Technik bekannt sind, stellen beispielsweise ferner darauf ab, Nick-Bewegungen des Fahrzeugs aufgrund von Radlastschwankungen während des Bremsvorgangs zu berücksichtigen oder zu kompensieren. Derartige Ansätze sind beispielsweise in der Veröffentlichung "Bremswegverkürzungspotential bei Informationsaustausch und Koordination zwischen semiaktiver Dämpfung und ABS" Fortschrittberichte VDI, Reihe 12, Verkehrstechnik, Fahrzeugtechnik, 738, Darmstadt, Techn., Univ., Diss. Düsseldorf: VDI-Verlag, 2011 vorgeschlagen. Insbesondere wird dabei ein semi-aktives Dämpferelement verwendet, um die Stabilität des Fahrzeugs während eines Bremsvorgangs erhöhen zu können.

Eine zentrale Bedeutung kommt bei einem Bremsvorgang ferner der Bestimmung des Schlupfes eines zu bremsenden Rades zu. Auch mittels verbesserter Verfahren zur zuverlässigen Bestimmung eines Raddrehzahlsignals und des Schlupfes wurde bereits versucht, die Bremsregelung zu optimieren, um den Bremsweg zu verkürzen bzw. die Lenkbarkeit des Fahrzeugs während eines Bremsvorganges zu verbessern. Ein physikalisches Modell zur genaueren Beschreibung der Dynamik eines Fahrzeugs während eines Bremsvorgangs ist beispielsweise aus Schwarz, R., Willimowski, M., Willimowski, P.: "Modellbasierte Rekonstruktion der Einflußgrößen von Radaufhängungs- und Reifendynamik auf den Schlupf". VDI Berichte, 1350, VDI Verlag, Düsseldorf 1997, S 155-184 bekannt.

Dennoch ist man auch weiterhin bestrebt, die Kontrollierbarkeit eines Fahrzeugs insbesondere während eines starken Bremsvorganges zu verbessern, ohne den Bremsweg dabei unangemessen zu verlängern. Idealerweise sollte der Bremsweg sogar verkürzt werden. Die vorliegende Erfindung bietet als eine Lösung hierfür ein Verfahren, eine Vorrichtung und ein Computerprogrammprodukt mit den in den unabhängigen Ansprüchen angegebenen Merkmalen. Bevorzugte Ausführungsformen sind Gegenstand der abhängigen Ansprüche.

Beispielsweise kann die Erfindung in einem Fahrzeug zur Anwendung kommen, welches zumindest ein gebremstes bzw. bremsbares Rad und einen Aufbau (Fahrzeugaufbau) umfasst, welche über ein Fahrwerk miteinander gekoppelt sind. Der Aufbau kann beispielsweise eine Karosserie, einen Motor und andere damit (vorzugsweise fest) verbundene Komponenten eines Fahrzeugs umfassen. Das Fahrwerk lässt mechanische Bewegungen des Rades relativ zum Aufbau zu, unterstützt bzw. beeinflusst also gewisse mechanische Bewegungsfreiheitsgrade des Rades und des Aufbaus. Neben einer Raddrehung können dies insbesondere eine vertikale Bewegung des Rades und/oder des Aufbaus und/oder eine longitudinale Bewegung (also parallel zur Fahrtrichtung) des Rades und/oder des Aufbaus sein.

Üblicherweise ist die Freiheit einer relativen vertikalen Bewegung zwischen Rad und Aufbau durch ein eigenständiges Feder- und Schwingungsdämpfersystem (Stoßdämpfer) des Fahrwerks bestimmt und meist größer als die Freiheit einer relativen longitudinalen Bewegung zwischen Rad und Aufbau, welche sich aus einer begrenzten Steifigkeit des Fahrwerks ergeben kann. Bei genauer Betrachtung kann auch eine innere Dynamik des Rades berücksichtigt werden, welche insbesondere aufgrund einer Deformierbarkeit des Reifens zu einer Bewegung einer Radfelge relativ zu einer Auflagefläche des Reifens (Reifenlatsch) auf der Fahrbahn führt.

Während einer Fahrt werden sowohl durch äußere Einflüsse, wie beispielsweise eine unebene Fahrbahn, als auch durch Beschleunigung und Verzögerung des Fahrzeugs Kräfte auf das Rad und/oder den Aufbau ausgeübt, welche zum Teil über das Fahrwerk vermittelt werden. So führt beispielsweise eine Fahrbahnerhöhung während der Fahrt zunächst zu einer vertikalen Beschleunigung bzw. Bewegung des Rades nach oben. Über das Fahrwerk bewirkt eine vertikale Bewegung des Rades auch eine Kraft auf den Aufbau und damit eine vertikale Beschleunigung des Aufbaus. Eine über das Rad vermittelte Antriebsbeschleunigung sowie eine Bremsverzögerung führen einerseits zu einer longitudinalen Kraft auf das Rad und über das Fahrwerk auch auf den Aufbau. Gleichzeitig kann je nach Lage eines Schwerpunktes des Aufbaus bei einer Beschleunigung oder Bremsung die Trägheit (Masse des Aufbaus) als dynamische Radlastverlagerung auch zu einer vertikalen Kraft auf den Aufbau im Bereich des Rades führen. Eine dadurch bewirkte Veränderung der vertikalen Position bzw. Bewegung des Aufbaus führt über das Fahrwerk wiederum zu einer Kraft auf das Rad und somit zu einer vertikalen bzw. normalen Kraft auf die Fahrbahn.

Insgesamt kann das Rad-Fahrwerk-System somit als ein dynamisches System angesehen werden, welches vorzugsweise durch gedämpfte Schwingungen einzelner mechanischer Bewegungsfreiheitsgrade beschrieben werden kann. Im Rahmen der vorliegenden Erfindung wurde erkannt, dass mechanische Bewegungen innerhalb dieses dynamischen Systems eine beeinflussbare Wirkung auf einen Bremsvorgang haben. Dies gilt insbesondere in extremen Bremssituationen, in denen herkömmlich beispielsweise ein Anti-Blockier-System in den Bremsvorgang eingreift. Vor allem in solchen extremen Bremssituationen kann es in diesem dynamischen System beispielsweise zu Schwingungen kommen, die die Lenkbarkeit des Fahrzeugs und/oder den Bremsweg ungünstig beeinflussen.

Im Rahmen der Erfindung wurde aber auch erkannt, dass es möglich und sogar sehr effizient ist, die Lenkbarkeit des Fahrzeugs zu verbessern und/oder den Bremsweg zu verkürzen, indem solche Schwingungen erfasst und durch eine gezielte Veränderung des auf das Rad wirkenden Bremsmoments verringert oder zumindest teilweise kompensiert bzw. rückgeführt werden. So wurde insbesondere erkannt, dass eine Regelung des Bremsmoments einen sehr effizienten Einfluss auf zumindest die vertikale Bewegung des Rades und/oder die vertikale Bewegung des Aufbaus und/oder die longitudinale Bewegung des Rades und/oder die Drehbewegung des Rades hat.

Während der Einfluss des Bremsmoments auf die Rotation des Rades unmittelbar nachvollziehbar ist, erfolgt die Beeinflussung der longitudinalen Bewegung des Rades durch das Bremsmoment über die tangentiale Reibungs- bzw. Haftkraft des Rades an der Fahrbahn, welche zu einer Kopplung der Rotation des Rades mit dessen Bewegung in Fahrtrichtung führt. Die longitudinale Bewegung des Rades wiederum koppelt über das Fahrwerk an die longitudinale Bewegung des Aufbaus, also die Beschleunigung oder Abbremsung des Aufbaus in Fahrtrichtung, und beeinflusst damit eine dynamische Radlastverlagerung (z.B. eine Nickbewegung) des Aufbaus. Auf diese Weise beeinflusst das Bremsmoment (indirekt) die vertikale Bewegung des Aufbaus im Bereich des Rades. Insbesondere bei einer Berücksichtigung einer inneren Dynamik des Rades in Form einer relativen Bewegung der Felge zum Reifenlatsch (z.B. Kompressibilität des Reifens) beeinflusst die vertikale Bewegung des Aufbaus über das Fahrwerk auch die vertikale Bewegung des Reifens bzw. der Felge. Damit sind zumindest die oben genannten Bewegungsfreiheitsgrade durch das Bremsmoment direkt oder indirekt beeinflussbar.

Während herkömmliche Anti-Blockier-Systeme üblicherweise ein Bremsmoment dahingehend regeln, dass ein Schlupf zwischen Reifen und Fahrbahn möglichst innerhalb eines vorgegebenen Wertebereichs gehalten wird, beschränkt die vorliegende Erfindung die Überwachung und Regelung nicht auf einen Wert des Schlupfes, sondern ermittelt die insbesondere aufgrund von Schwingungen des Systems entstehenden Abweichungen eines Wertes eines Zustands des Rad-Fahrwerk-Systems im Hinblick auf die beobachteten Bewegungsfreiheitsgrade von einem vorbestimmten Wert des Zustandes, welcher im Wesentlichen einen Gleichgewichtswert darstellt, um den herum insbesondere eine solche Schwingung erfolgt. Dabei ist es nicht unbedingt erforderlich, dass Abweichungen in allen der oben erwähnten möglichen Bewegungsfreiheitsgrade ermittelt und ausgeglichen werden. Vielmehr führt eine Regelung des Bremsmoments im Hinblick auf eine zumindest teilweise Rückführung der Werte bereits eines dieser Freiheitsgrade schon zu einer Verbesserung des Bremsverhaltens. Besonders bevorzugt betrifft dies in einer Ausführungsform die longitudinale Position des Rades und/oder des Aufbaus.

In einem ersten Aspekt betrifft die Erfindung somit ein Verfahren zur Steuerung einer Bremsanlage eines Rades in einem Fahrzeug, in welchem ein Fahrzeugaufbau mittels eines Rad-Fahrwerk-Systems an das Rad gekoppelt ist. Insbesondere lässt sich diese Kopplung und deren Dynamik gemäß der vorangegangenen Einführung erklären und verstehen.

Als Zustand des Rad-Fahrwerk-Systems wird dabei insbesondere ein Zustandsvektor angesehen, dessen Koordinaten die Positionen und die Geschwindigkeiten der zu berücksichtigenden Bewegungsfreiheitsgrade beschreiben. Die Dimension des Zustandsvektors hängt in diesem Fall somit direkt von der Anzahl an Bewegungsfreiheitsgraden ab, die bei der Implementierung der Erfindung berücksichtigt werden. Vorzugsweise ist die Dimension des Zustandsvektor somit doppelt so groß wie die Anzahl an berücksichtigten Bewegungsfreiheitsgraden.

Aufgrund von inneren Schwingungen im Rad-Fahrwerk-System kann der momentane Wert (Zustandsvektor $\tilde{x}$) des Zustands des Rad-Fahrwerk-Systems von einem Sollwert $x_0$ abweichen. Der Sollwert ist dabei insbesondere ein Wert, welchen das Rad-Fahrwerk-System während eines Bremsvorgangs als Zielvorgabe einnehmen soll.

Diese Zielvorgabe muss dabei nicht notwendigerweise statisch sein. So kann beispielsweise durchaus auch eine relative Bewegung zwischen Rad und Aufbau als Zielvorgabe erforderlich oder gewünscht sein. Dies kann insbesondere dann geeignet sein, wenn das Rad und der Aufbau beispielsweise im Wesentlichen in ihrer vertikalen Position und/oder Geschwindigkeit den Fahrbahnunebenheiten folgen, ohne dass dabei reine interne Schwingungen und/oder Schwankungen des Rad-Fahrwerk-Systems auftreten.

Dabei wird in einem erfindungsgemäßen Verfahren zunächst die Abweichung des momentanen Werts vom Sollwert als Beobachtungswert $x = \tilde{x} - x_0$ ermittelt. Dies kann mittels eines Zustandsbeobachtermoduls erfolgen, welches den Beobachtungswert anhand von Messungen einzelner Bewegungsgrößen, wie z.B. Position(en), Geschwindigkeit(en) und/oder Beschleunigung(en) direkt oder indirekt ermittelt. Nicht für alle Bewegungsfreiheitsgrade ist eine direkte Messung aller Zustandsparameter einfach möglich. Insbesondere können also nicht alle Koordinatenwerte des momentanen Zustands(vektors) $\tilde{x}$ oder des Beobachtungswertes $x$ mit einfachen Mitteln direkt gemessen werden. Beispielsweise ist es technologisch schwieriger bzw. aufwändiger, eine Position und/oder eine Geschwindigkeit einer vertikalen oder longitudinalen Bewegung zu messen als eine vertikale bzw. longitudinale Beschleunigung. Daher wird der Beobachtungswert $x$ vorzugsweise auf Basis von Messungen entsprechender Beschleunigungen ermittelt. Dies kann in einfacherweise durch eine zeitliche Integration von gemessenen Beschleunigungswerten erfolgen. Besonders bevorzugt wird hierfür aber ein Zustandsbeobachtermodell eingesetzt, das beispielsweise auf dem bekannten Prinzip eines Kalman-Filters basiert, wie dies später noch beispielhaft beschrieben wird.

Im Rahmen der vorliegenden Erfindung wird der Beobachtungswert $x$ jedenfalls derart ermittelt, dass er zumindest eine Komponente umfasst, die den Zustand (Bewegungszustand) des Rad-Fahrwerksystems in zumindest einem translatorischen Freiheitsgrad des Rades und/oder des Aufbaus beschreibt. Dieser zumindest eine translatorische Freiheitsgrad umfasst vorzugsweise zumindest einen der folgenden Freiheitsgrade: eine vertikale Bewegung des Aufbaus und/oder eine vertikale Bewegung des Rades und/oder eine longitudinale Bewegung des Aufbaus und/oder eine longitudinale Bewegung des Rades. Insbesondere wurde erkannt, dass ungünstige Schwingungen in diesen Freiheitsgraden durch eine direkte Ansteuerung eines auf das Rad wirkenden Bremsmoments mittels der Bremsanlage mit konstruktionstechnisch sehr einfachen Mitteln sehr wirkungsvoll gedämpft bzw. (zumindest teilweise) kompensiert werden können. Insbesondere können hierfür in den meisten Fahrzeugen vorhandene mechanische Komponenten zur Ansteuerung eines Bremsdruckes bzw. einer Bremskraft weiterbenutzt werden, so dass die Nutzung der vorliegenden Erfindung durch eine einfache Nachrüstung eines entsprechenden elektronischen Reglermoduls möglich ist.

Basierend auf dem ermittelten Beobachtungswert $x$ wird in einem erfindungsgemäßen Verfahren somit ein Steuersignal bereitgestellt, welches die Bremsanlage derart steuert, dass die Bremsanlage eine Änderung $u = u_0 - \tilde{u}$ des Bremsmoments von einem momentanen Wert $\tilde{u}$ des Bremsmoments hin zu einem Sollwert $u_0$ des Bremsmoments zur Reduzierung des Beobachtungswertes $x$ gemäß

$$u = -K \cdot x$$

erzeugt. Dabei bezeichnet $K$ eine mittels eines linear-quadratischen Reglers durch die Minimierung eines vom Beobachtungswert $x$ abhängigen Funktionals $J$ bestimmte Rückführmatrix.

Das Prinzip des linear-quadratische Reglers (auch Riccati-Regler genannt) ist in der Regelungstechnik grundsätzlich bekannt, um Regelungsgrößen wie z.B. Rückführmatrizen in Regelkreisen zu ermitteln. Der linear-quadratische Regler ist dabei ein Zustandsregler für ein dynamisches System, das durch den linear-quadratischen Regler vorzugsweise zumindest in guter Näherung als ein lineares dynamisches System beschrieben wird. Durch eine Minimierung (Ermitteln eines Minimalwerts) eines quadratisch vom Beobachtungswert $x$ abhängigen Funktionals $J$, d.h. eines Kostenfunktionals des Reglers, kann die Rückführmatrix $K$ ermittelt werden, was ebenfalls später noch beispielhaft beschrieben wird.

Im Rahmen der vorliegenden Erfindung wurde erkannt, dass gerade der Einsatz des Prinzips eines linear-quadratischen Reglers zur Ermittlung bzw. Beschreibung der Rückführmatrix, welche konkret den Beobachtungswert $x$ in der angegebenen linearen Form mit der Bremsmomentänderung $u$ koppelt, besonders effizient und bevorzugt ist. Auch wenn linear-quadratische Regler in der Regelungstechnik grundsätzlich bekannt sind, wird die mögliche Nutzung des Prinzips solcher linearquadratischer Regler im Rahmen der vorliegenden Erfindung später anhand einiger bevorzugter Ausführungsformen noch beispielhaft näher beschrieben.

Insgesamt kann also das Bremsmoment bzw. dessen Änderung $u$ als eine Eingangsgröße des erfindungsgemäßen Regler-Prinzips betrachtet werden. Mit anderen Worten erfolgt die Regelung mittels des linear-quadratischen Reglers zur Minimierung der Abweichung $x$ mittels der Bremsmomentänderung $u$ als insbesondere einzige Eingangsgröße. In anderen Worten erfolgt die Einwirkung der Regelung auf das zu regelnde System, d.h. auf das Rad-Fahrwerk-System, mittels des Bremsmoments, welches mittels der Bremsanlage bereitgestellt bzw. erzeugt bzw. geändert wird.

Das Steuersignal ist dabei vorzugsweise ein Signal, welches, wenn dies der Bremsanlage bzw. den das Bremsmoment erzeugenden Komponenten (Aktor bzw. Aktoren) der Bremsanlage (z.B. Bremszylinder, Bremsdruckventil, ...) zugeführt wird, die Bremsanlage bzw. die Komponenten der Bremsanlage ansteuert und diese zu einer Aktion veranlasst. Beispielsweise kann das Steuersignal ein elektrisches bzw. elektronisches Signal sein und bestimmt bzw. geeignet sein, die Bremsanlage zur Erzeugung oder Abänderung eines Bremsdrucks und/oder Hydraulikdrucks und/oder Bremsmoments zu veranlassen.

Dabei kann in einer bevorzugten Ausführungsform das bereitgestellte Steuersignal ein Maß für die gesamte, resultierende Bremskraft bzw. den Bremsdruck sein, der von einem Aktor für das zu bremsende Rad erzeugt wird. In einer anderen bevorzugten Ausführungsform legt das bereitgestellte Steuersignal lediglich eine erforderliche Änderung der momentanen Bremskraft bzw. des momentanen Bremsdruckes fest. Dies ist insbesondere dann besonders bevorzugt, wenn die vorliegende Erfindung als Zusatzmodul in einer bereits bestehenden bzw. entwickelten Bremsanlage nachgerüstet wird. Dabei kann beispielsweise ein Ausgangssignal eines vorhandenen Bremskraftregelmoduls (z.B. Antiblockiersystem, Antischlupfregelsystem, ESP-Modul, usw.) weiter genutzt werden, während das im Rahmen der vorliegenden Erfindung bereitgestellte Steuersignal vorzugsweise lediglich mit dem vorhandenen Ausgangssignal kombiniert (z.B. zu diesem addiert oder mit diesem multipliziert) wird, um dieses vorhandene Ausgangssignal zu modifizieren. Dies ermöglicht eine sehr einfache und effiziente Nachrüstung von Fahrzeugen für die Nutzung der vorliegenden Erfindung.

Die Bestimmung der Rückführmatrix $K$ bzw. die Minimierung des Funktionals $J$ erfolgt dabei entweder in Echtzeit, d.h. bei bzw. nach jeweils einer Vielzahl von Ermittlungen der Abweichung $x$, insbesondere bei bzw. nach jeder Ermittlung der Abweichung $x$, oder sie wird im Vorfeld durchgeführt. Bei einer Verwendung des erfindungsgemäßen Verfahrens in einem Fahrzeug kann beispielsweise die Rückführmatrix $K$ während eines Bremsvorgangs bei einer Vielzahl von Ermittlungen der Abweichung $x$ von neuem erfolgen.

Eine Bestimmung der Rückführmatrix $K$ in Echtzeit kann dabei den Vorteil haben, dass die Regelung zur Reduzierung bzw. Minimierung der Abweichung $x$ besonders präzise und schnell erfolgen kann. Die Verwendung einer vorbestimmten Rückführmatrix $K$ und darauf basierender Übertragungsfunktionen kann vorteilhaft sein, um die dafür erforderliche Rechenleistung gering zu halten und/oder die Hardware-Anforderungen an die entsprechende Kontrolleinheit bzw. Recheneinheit gering zu halten.

Mit dem erfindungsgemäßen Verfahren können während eines Bremsvorgangs auftretende Schwingungen und Kraftschwankungen im Rad-Fahrwerk-System sehr effizient reduziert werden. Schwingungen und Kraftschwankungen im Rad-Fahrwerk-System verursachen beispielsweise eine Auslenkung des Rades und/oder des Aufbaus aus einer Sollposition. Oftmals ist die Bremswirkung während einer Bremsung des Fahrzeugs dann optimal, wenn sich das Rad bzw. das Rad-Fahrwerk-System während des Bremsvorgangs in einer vorbestimmten Stellung bzw. Position befindet. Dadurch ergibt sich auch eine gleichbleibend gute Kraft des Reifens auf die Fahrbahn, was einerseits die Verzögerungsleistung und andererseits die Kontrollierbarkeit des Fahrzeugs während des Bremsvorgangs begünstigt. Beispielsweise können durch Schwingungen und/oder Kraftschwankungen im Rad-Fahrwerk-System Änderungen des Schlupfes zwischen einer Kontaktfläche bzw. Rollfläche des Rades und einer Auflagefläche, auf welcher die Kontaktfläche aufliegt, beispielsweise einer Fahrbahnoberfläche, Abweichungen von einem gewünschten Schlupfwert auftreten. Insbesondere kann ein derartiger gewünschter Schlupfwert dem Schlupf eines Arbeitspunktes auf einer Reibwert-Schlupfkurve ($\mu$-$\lambda$-Kurve) entsprechen. Der Arbeitspunkt kann dabei derart gewählt bzw. vorbestimmt sein, dass der Reibwert $\mu_0$ welcher bei einem Schlupfwert $\lambda_0$ auftritt bzw. erwartet wird, eine gute Bremswirkung bei gleichzeitig ausreichender Stabilität bzw. Kontrollierbarkeit des Fahrzeugs erzielt und/oder verspricht. Somit ist der Sollwert $x_0$ des Bewegungszustands des Rad-Fahrwerk-Systems vorzugsweise derart bestimmt, dass während eines Bremsvorgangs das Rad einen vorbestimmten Schlupfwert $\lambda_0$ insbesondere gemäß einem vorbestimmten Arbeitspunkt auf der Reibwert-Schlupfkurve einnimmt.

Ein Vorteil des erfindungsgemäßen Verfahrens ist, dass dadurch Abweichungen vom vorbestimmten Arbeitspunkt auf der Reibwert-Schlupfkurve reduziert werden können und somit ungewünschte Reduzierungen der Bremswirkung und Kontrollierbarkeit des Fahrzeugs verringert werden können.

Im Rahmen der vorliegenden Erfindung wurde unter anderem erkannt, dass es insbesondere während eines sehr starken Bremsvorgangs zu Schwingungen oder Schwankungen des Zustandes des Rad-Fahrwerk-Systems kommen kann, die nicht notwendigerweise allein bzw. unmittelbar den äußeren Einflüssen (z.B. irgendwelchen Fahrbahnunebenheiten) folgen, sondern durch eine innere Dynamik des Rad-Fahrwerk-Systems insbesondere aufgrund dessen nicht-linearen Verhaltens begünstigt werden und die insbesondere auch aufgrund dieser Nicht-Linearität kaum im Vorfeld vermieden oder nur schwer durch konstruktive Maßnahmen unterdrückt werden können, die aber das Bremsverhalten mitunter sehr negativ beeinflussen können.

Ein weiterer Vorteil des erfindungsgemäßen Verfahrens ist, dass für eine derartige Reduzierung der Schwingungen und/oder Kraftschwankungen im Rad-Fahrwerk-System kein zusätzlicher Aktor benötigt wird, sondern dass für eine entsprechende Reduzierung eine Regelung des Bremsmoments ausreichend ist, d.h. dass durch eine geeignete Bereitstellung und/oder Anpassung des Steuersignals für die Bremsanlage des Rades im Rad-Fahrwerk-System bereits eine erfindungsgemäße Verbesserung erzielt werden kann. Dies erlaubt somit, eine verbesserte Bremswirkung zu erzielen, ohne dafür weitere Aktoren in ein Bremssystem bereitstellen zu müssen. Dies geschieht erfindungsgemäß durch das Bereitstellen und/oder Anpassen eines Bremsmoments bzw. durch das Bereitstellen des entsprechenden Steuersignals für die Bremsanlage, welche sodann auf Basis dieses Steuersignals ein derartiges Bremsmoment bereitstellt und/oder ein Bremsmoment entsprechend anpasst.

Folglich kann mit dem erfindungsgemäßen Verfahren auf besonders effiziente Weise die Bremswirkung während eines Bremsvorgangs verbessert werden. Bei einer Anwendung des erfindungsgemäßen Verfahrens in einem Fahrzeug kann dadurch beispielsweise der Bremsweg des Fahrzeugs während einer Bremsung, insbesondere während einer starken Bremsung, verkürzt werden.

Vorzugsweise umfasst das Ermitteln des Beobachtungswertes $x$ ein Messen einer Beschleunigung des Rades und/oder des Aufbaus insbesondere in vertikaler und/oder in longitudinaler Richtung. Besonders bevorzugt umfasst dabei der Beobachtungswert $x$ als zumindest eine Koordinate bzw. Komponente eine Position und/oder eine Geschwindigkeit in Richtung der gemessenen Beschleunigung des Rades bzw. des Aufbaus.

Vorzugsweise erfolgt das Ermitteln des Beobachtungswertes mittels eines Kalman-Filters. Dabei erfolgt das Ermitteln des Beobachtungswerts $x$ besonders bevorzugt zu diskreten Zeitpunkten $k$ (insbesondere periodisch, bzw.) in (periodischen) zeitlichen Abständen $T_a$ als Beobachtungswert $x_k$ rekursiv gemäß

$$x_{k+1} = \Phi x_k + \Gamma u_k + \Phi \widehat{P}_k C^T \left( C \widehat{P}_k C^T + F \widehat{Q} F^T + \widehat{R} \right)^{-1} \cdot (y_k - C x_k - D u_k)$$

auf Basis einer rekursiven Bestimmung einer Schätzfehler-Kovarianzmatrix $\hat{P}_k$ gemäß

$$\widehat{P}_{k+1} = \Phi \widehat{P}_k \Phi^T + G \widehat{Q} G^T - \Phi \widehat{P}_k C^T \left( C \widehat{P}_k C^T + F \widehat{Q} F^T + \widehat{R} \right)^{-1} C \widehat{P}_k \Phi^T$$

anhand von Messwerten $y_k$ einer Ausgangsgröße $y$ und Werten $u_k$ der Bremsmomentänderung u zu den diskreten Zeitpunkten $k$,

wobei $\Phi = e^{AT_a}$ eine zeitdiskrete Systemmatrix, $\Gamma = \int_0^{T_a} e^{A\tau} d\tau\, B$ eine zeitdiskrete Eingangsmatrix und $G = \int_0^{T_a} e^{A\tau} d\tau\, E$ eine zeitdiskrete Störeingangsmatrix des Rad-Fahrwerk-Systems beschreibt, in welchem unter Berücksichtigung von Störungen $w$ aufgrund von Fahrbahnunebenheiten, welche durch eine Störung-Kovarianzmatrix $\hat{Q}$ beschrieben werden, und von Messrauschen der Messwerte $y_k$, welches durch eine Messrauschen-Kovarianzmatrix $\hat{R}$ beschrieben wird, die Bedingungen

$$\dot{x} = A \cdot x + B \cdot u + E \cdot w$$

$$y = C \cdot x + D \cdot u + F \cdot w + v$$

mit einer Systemmatrix $A$, einer Eingangsmatrix $B$, einer Ausgangsmatrix $C$, einer Durchgangsmatrix $D$, einer Störeingangsmatrix $E$ und einer Störausgangsmatrix $F$ gelten. Beispiele für diese Matrizen gemäß bevorzugten Ausführungsform werden für verschiedene Zusammensetzungen des Beobachtungswerts $x$ und der Ausgangsgröße $y$ sowie für beispielhafte Störungen $w$ später noch beschrieben.

Dabei ist $x_k$ insbesondere der Beobachtungswert $x$ des Zustands zu dem Zeitpunkt $k$ und $u_k$ die Eingangsgröße $u$ zu dem Zeitpunkt $k$. Das Funktional $J$ basiert somit vorzugsweise auf den diskreten Werten $x_k$ zu dem jeweiligen Zeitpunkt $k$.

Vorzugsweise wird zum Ermitteln einer zeitlichen Änderung $\dot{x}$ des Beobachtungswerts $x$ die Ausgangsgröße $y_k$ ermittelt insbesondere gemessen, wobei die Ausgangsgröße $y_k$ vorzugsweise zumindest eine Beschleunigung in einem Bewegungsfreiheitsgrad des Rades und/oder des Aufbaus umfasst. Vorzugsweise wird die Ausgangsgröße $y_k$ zu einer Mehrzahl von diskreten Zeitpunkten ermittelt, welche vorzugsweise in periodischen Zeitabständen mit einer Periodendauer von $T_a$ auftreten.

Insbesondere wird die Ausgangsgröße $y_k$ bzw. $y$ mittels geeigneter Sensoren gemessen. Beispielsweise können dies Beschleunigungssensoren sein, welche am Rad und/oder am Aufbau angebracht sein können. Alternativ kann die entsprechende Ausgangsgröße $y$ auch anderweitig ermittelt werden, beispielsweise ausgelesen werden, sofern dieser bereits im System vorhanden ist. Beispielsweise kann eine Kontrolleinheit bereits eine entsprechende Ausgangsgröße $y$ vorhalten, sofern diese an anderer Stelle im System bereits ermittelt wurde. Beispielsweise kann im Falle eines Fahrzeuges eine Ausgangsgröße y bereits zu einem anderen Zweck bestimmt worden sein. Dabei gilt: $y|_k = y_k = y(t = k)$.

Die Ausgangsgröße $y$ ist dabei eine Größe, welche im zu regelnden System ermittelbar bzw. messbar ist und/oder ermittelt bzw. gemessen wird. In anderen Worten ist das Rad-Fahrwerk-System über die Ausgangsgröße $y$ beobachtbar, d.h. dass der Beobachtungswert $x$ anhand der Ausgangsgröße $y$ ermittelt werden kann.

Vorzugsweise erfolgt das Ermitteln des Beobachtungswerts $x_{k+1}$ für einen Zeitpunkt $k + 1$ auf Basis zumindest einer zu dem Zeitpunkt $k$ bestimmten bzw. gemessenen Ausgangsgröße $y_k$ und zumindest einer zu dem Zeitpunkt $k$ gehörigen Bremsmomentänderung $u_k$ und unter Berücksichtigung von Werten $x_j$ für die Zeitpunkte $j$, wobei $j = 0,...,k$, des Zustands von vorherigen Zeitpunkten nach der oben angegebenen Iterationsvorschrift. Der Bestimmung des Beobachtungswerts $x_{k+1}$ zum Zeitpunkt $k + 1$ liegt dabei eine zeitdiskrete, rekursive Darstellung der Dynamik des Rad-Fahrwerk-Systems gemäß der mathematischen Zusammenhänge

$$x_{k+1} = \Phi x_k + \Gamma u_k + G w_k$$

$$y_k = C x_k + D u_k + F w_k + v_k$$

zugrunde.

Dabei ist $w_k$ eine Störgröße zum Zeitpunkt $k$ und $G$ eine zeitdiskrete Störeingangsmatrix, welche eine Koppelung der Störgröße $w_k$ mit dem Beobachtungswert $x_k$ festlegt. Die Störgröße $w_k$ ist dabei eine Größe, welche externe Einflüsse auf das Rad-Fahrwerk-System beschreibt, welche nicht durch die Regelung kontrollierbar sind. Insbesondere können im Falle eines Rad-Fahrwerk-Systems eines Fahrzeugs Fahrbahnunebenheiten wie etwa die Höhe von Unebenheiten und/oder die Tiefe von Schlaglöchern sowie die Steigung solcher Fahrbahnunebenheiten Parameter derartiger Einflüsse darstellen, welche die Störgröße $w_k$ beschreibt bzw. welche sich in der Störgröße $w_k$ niederschlagen.

$F$ ist dabei eine zeitdiskrete Störausgangsmatrix, welche eine Koppelung der Störgröße $w_k$ mit der Ausgangsgröße $y_k$ festlegt. $C$ ist eine Ausgangsmatrix, welche eine Koppelung der messbaren Ausgangsgröße $y$ mit dem Wert $x$ festlegt. $D$ ist eine Durchgangsmatrix, welche eine Koppelung der Bremsmomentänderung u mit der Ausgangsgröße $y$ festlegt.

$v_k$ ist eine Messrauschgröße, welche ein Messrauschen bei einer Messung der Ausgangsgröße $y_k$ beschreibt. Ein Messrauschen kann dabei insbesondere durch ein Signalrauschen beim Auslesen von verwendeten Messsensoren auftreten.

Da in vielen Fällen die Störgröße $w_k$ nicht bzw. nicht direkt erfasst und/oder gemessen werden kann, ist für eine Bestimmung des Beobachtungswertes $x$ oftmals eine Berechnung bzw. Schätzung vorteilhaft. Eine derartige Bestimmung des Wertes $x$ kann dabei beispielsweise mittels eines Kalman-Filters erfolgen. Ein Kalman-Filter verwendet ein die Dynamik des Rad-Fahrwerk-Systems beschreibendes mathematisches Modell (insbesondere auf Basis der erwähnten Matrizen $A, B, C, D, E,$ und $F$), die Bremsmomentänderung $u$ als Eingangssignal und das Ausgangssignal $y,$ um den Wert $x$ zu berechnen bzw. zu schätzen. Da die Störgröße $w_k$ oftmals unbekannt ist, können der durch den Kalman-Filter berechnete Wert $x$ des Zustands oftmals von dem tatsächlichen Wert abweichen. Die Differenz zwischen dem berechneten Wert und dem geschätzten Wert wird dabei als Schätzfehler bezeichnet. Entsprechend entsteht für jeden Zeitpunkt $k$, für den der Wert des Zustands berechnet wird, auch ein Schätzfehler $P_k$.

Vorzugsweise erfüllt das vom Beobachtungswert $x$ abhängige Funktional $J$ die Bedingung

$$J = \mathrm{E}\left(\sum_{k=0}^{n-1}(x_k^T Q x_k + u_k R u_k + 2u_k N x_k)\right) + \mathrm{E}(x_n^T S x_n)$$

Dabei ist $R$ ein Stellgrößengewichtungsparameter des linear-quadratischen Reglers, welcher eine Beeinflussbarkeit des momentanen Zustands $\tilde{x}$ bzw. des Beobachtungswerts $x$ des Rad-Fahrwerk-Systems bezüglich des zumindest einen mechanischen Freiheitsgrades festlegt. Sofern nur eine Eingangsgröße vorhanden ist, wie etwa die Bremsmomentänderung $u$, ist $R$ eine skalare Größe. Bei mehreren Eingangsgrößen ist $R$ eine quadratische Matrix. Je größer der skalare Wert bzw. die Matrixelemente auf der Diagonalen von $R$ ist bzw. sind oder gewählt wird bzw. werden, desto kleiner versucht der Regler Stellgrößen der Regelung wie etwa die Bremsmomentänderung $u$ zu halten.

$N$ bezeichnet eine Koppelungsmatrix, welche eine Koppelung des Beobachtungswerts $x$ mit der Bremsmomentänderung $u$ festlegt. Besonders bevorzugt wird $N = 0$ gesetzt.

$Q$ bezeichnet eine vorgegebene Zustandsgewichtungsmatrix, welche eine Regelgeschwindigkeit festlegt. Vorzugsweise erfüllt die Zustandsgewichtungsmatrix $Q$ die Bedingung, dass $(\Gamma, Q)$ beobachtbar ist. Dies ist insbesondere dann der Fall, wenn alle Diagonalelemente der Zustandsgewichtungsmatrix $Q$ größer als Null sind.

$S$ bezeichnet eine Lösungsmatrix, welche die positiv definite Lösung der dem linear-quadratischen Regler zugehörigen, zeitdiskreten Matrix-Riccatigleichung ist.

E bezeichnet den Erwartungswert einer sich darauf beziehenden Größe, welche in Klammern dahinter angegeben ist.

Vorzugsweise ist bzw. wird die Rückführmatrix $K$ gemäß

$$K = -(R + \Gamma^T S \Gamma)^{-1}(N + \Gamma^T S \Phi)$$

bestimmt.

Dabei ist *R* vorzugsweise der oben bereits beschriebene Stellgrößengewichtungsparameter des linear-quadratischen Reglers. **N** bezeichnet vorzugsweise die oben bereits erwähnte Koppelungsmatrix. **S** bezeichnet vorzugsweise die oben bereits beschriebene Lösungsmatrix.

$\Gamma$ bezeichnet vorzugsweise die bereits oben erwähnte zeitdiskrete Eingangsmatrix, welche eine Koppelung der Bremsmomentänderung *u* an den zumindest einen mechanischen Freiheitsgrad des Rad-Fahrwerk-Systems festlegt. In anderen Worten ist durch die zeitdiskrete Eingangsmatrix $\Gamma$ festgelegt, welchen Einfluss die Bremsmomentänderung *u* auf den Beobachtungswert *x* des Zustands bezüglich des zumindest einen mechanischen Freiheitsgrads hat und wie sich die Bremsmomentänderung *u* auf den Wert *x* des Zustands auswirkt.

$\Phi$ bezeichnet vorzugsweise die bereits oben erwähnte zeitdiskrete Systemmatrix, welche die Koppelung des Zustands mit der Dynamik des zumindest einen mechanischen Freiheitsgrades des Rad-Fahrwerk-Systems festlegt. Die zeitdiskrete Systemmatrix $\Phi$ basiert dabei auf den Bewegungsgleichungen der Dynamik des Rad-Fahrwerk-Systems. Somit ist insbesondere auch die Dimension der zeitdiskreten Systemmatrix $\Phi$ durch die Anzahl der bei der Regelung berücksichtigten Freiheitsgrade des Rad-Fahrwerk-Systems bedingt. In anderen Worten legt die zeitdiskrete Systemmatrix $\Phi$ das dynamische Verhalten eines mathematischen Modells fest, welches das Rad-Fahrwerk-System in mathematischen Zusammenhängen abbildet.

Der vorbestimmte Zustand $x_0$ des Rad-Fahrwerk-Systems ist vorzugsweise derart vorbestimmt, dass bei einer Bremsung des Rades durch die Bremsanlage das Rad an einer Kontaktfläche mit einer Auflagefläche, insbesondere mit einer Fahrbahn, einen festgelegten Reibwert $\mu_0$ und/oder einen festgelegten Schlupf $\lambda_0$ aufweist. Insbesondere entspricht ein durch den festgelegten Reibwert $\mu_0$ und durch den festgelegten Schlupf $\lambda_0$ definierter Punkt einem Arbeitspunkt auf der Reibwert-Schlupf-Kurve, d.h. auf der $\mu$-$\lambda$-Kurve. Häufig wird der Arbeitspunkt auf der $\mu$-$\lambda$-Kurve derart gewählt bzw. vorbestimmt, dass an diesem Arbeitspunkt eine gute Bremswirkung zusammen mit einer guten Kontrollierbarkeit des Fahrzeugs stabil erzielt werden kann. Oftmals wird dabei die $\mu$-$\lambda$-Kurve, bzw. deren Verlauf bzw. deren Ableitung nach dem Schlupf $\lambda$, als bekannt bzw. gegeben vorausgesetzt, so dass das Erreichen des Arbeitspunktes angenommen wird, wenn das entsprechende Rad einen Schlupf von $\lambda_0$ aufweist. Da das Ziel der Regelung unter anderem ist, eine gute Bremswirkung bei gleichzeitig guter Kontrollierbarkeit des Fahrzeugs zu erzielen, kann als ein Regelziel insbesondere die Erreichung des Arbeitspunktes auf der $\mu$-$\lambda$-Kurve, bzw. die Erreichung des Schlupfes $\lambda_0$ sein.

Vorzugsweise umfasst der Beobachtungswert *x* zumindest eine Komponente eines oder mehrerer der folgenden mechanischen Freiheitsgrade des Rad-Fahrwerk-Systems:

- eine vertikale Position $z_A$ des Aufbaus;
- eine vertikale Geschwindigkeit $\dot{z}_A$ des Aufbaus;
- eine vertikale Position $z_R$ des Rades;
- eine vertikale Geschwindigkeit $\dot{z}_R$ des Rades;
- eine longitudinale Position $x_R$ des Rades
- eine longitudinale Geschwindigkeit $\dot{x}_R$ des Rades;
- einen Drehwinkel $\theta_R$ des Rades;
- eine Drehwinkelrate $\dot{\theta}_R$ des Rades bzw. eine Raddrehzahl $\omega_R$.

Vorzugsweise umfasst der Beobachtungswert *x* als zumindest eine Komponente den Drehwinkel $\theta_R$ des Rades und/oder die Drehwinkelrate $\dot{\theta}_R$ des Rades und zumindest eine weitere Komponente aus den folgenden mechanischen Freiheitsgraden:

- die vertikale Position $z_A$ des Aufbaus;
- die vertikale Geschwindigkeit $\dot{z}_A$ des Aufbaus;
- die vertikale Position $z_R$ des Rades;
- die vertikale Geschwindigkeit $\dot{z}_R$ des Rades;
- die longitudinale Position $x_R$ des Rades
- die longitudinale Geschwindigkeit $\dot{x}_R$ des Rades

Besonders bevorzugt umfasst der Beobachtungswert *x* zu jeder als Komponente enthaltenen Position auch die zugehörige Geschwindigkeit des entsprechenden Bewegungsfreiheitsgrades.

Der Aufbau des Rad-Fahrwerk-Systems ist dabei insbesondere der Teil, welcher mit dem Rad und der Radaufhängung verbunden ist und von dem Rad getragen wird. Beispielsweise ist im Falle eines Fahrzeugs ein Anteil eines Fahrzeugaufbaus, welcher von einem bestimmten Rad getragen wird, der Aufbau des Rad-Fahrwerk-Systems desselben Rades. Gemäß diesem Beispiel kann der Aufbau insbesondere eine Karosserie, Motorisierung und ähnliches zumindest teilweise umfassen. Beispielsweise kann sich der Anteil, den der Aufbau eines bestimmten Rades am Gesamtaufbau eines Fahrzeugs hat, dadurch ergeben, dass der Anteil gleich dem Verhältnis der Radlast des bestimmten Rades zu dem Gesamtgewicht des Fahrzeugs ist.

Vorzugsweise wird zum Ermitteln des Beobachtungswerts $x$ eine zeitliche Änderung $\dot{x}$ des Beobachtungswerts $x$ bestimmt. Das Bestimmen der Änderung $\dot{x}$ umfasst dabei vorzugsweise ein Ermitteln der Ausgangsgröße $y$, wobei die Ausgangsgröße $y$ vorzugsweise eine oder mehrere Komponenten einer Liste umfassend

- eine vertikale Beschleunigung ($\ddot{z}_A$) des Aufbaus;
- eine longitudinale Beschleunigung ($\ddot{x}_A$) des Aufbaus;
- eine vertikale Radbeschleunigung ($\ddot{z}_R$) des zumindest einen Rades;
- eine longitudinale Beschleunigung ($\ddot{x}_R$) des Rades;
- eine Raddrehbeschleunigung $\dot{\omega}_R$ und/oder einer Drehwinkelbeschleunigung des Rades;

aufweist.

Dabei bedeutet longitudinal insbesondere im Wesentlichen entlang der Fahrtrichtung des Fahrzeugs, also entlang der Fortbewegungsrichtung des Fahrzeugs, wenn es auf dem zumindest einen Rad rollt. Vertikal beschreibt dabei im Wesentlichen die Richtung, welche senkrecht auf der longitudinalen Richtung steht und senkrecht auf der Kontaktfläche bzw. Rollfläche des Rades steht. "Im Wesentlichen longitudinal" bedeutet dabei, dass es zu Abweichungen kommen kann, wenn beispielsweise die Bewegungsrichtung des Fahrzeugs zumindest teilweise durch eine Querfahrt, also durch eine seitwärts gerichtete Bewegung, welche nicht entlang der Rollrichtung der Räder ist, bestimmt ist. "Im Wesentlichen vertikal" bedeutet dabei, dass es zu Abweichungen kommen kann, wenn beispielsweise die Kontaktfläche stark gekrümmt ist und daher die Richtung der lokalen Flächennormalen sich entlang der Laufrichtung des Rades stark ändert. Bewegt sich das Rad auf einer Ebene, welche senkrecht zur Erdanziehungskraft ist, so ist die longitudinale Richtung innerhalb dieser Ebene, auf welcher sich das Rad bewegt, und die vertikale Richtung parallel zur Erdanziehungskraft. Bewegt sich das Rad auf einer Ebene entlang des Potenzialgradienten, welche nicht senkrecht zur Erdanziehungskraft ist, so ist die longitudinale Richtung parallel zur Hangabtriebskraft und die vertikale Richtung parallel zur Normalkraft.

Vorzugsweise erfolgt das Ermitteln der Ausgangsgröße $y$ mittels eines am Aufbau angebrachten Beschleunigungsaufnehmers und/oder mittels eines an dem Rad und/oder an einem Radträger angebrachten Beschleunigungsaufnehmers, wobei das Rad vorzugsweise an dem Radträger befestigt ist.

Zum Ermitteln der Ausgangsgröße $y$ kann ein einziger Beschleunigungsaufnehmer oder eine Mehrzahl von Beschleunigungsaufnehmern am Aufbau und/oder ein einziger Beschleunigungsaufnehmer oder eine Mehrzahl von Beschleunigungsaufnehmern am Rad bzw. Radträger befestigt sein. Der bzw. die Beschleunigungsaufnehmer können dabei ausgelegt sein, eine Beschleunigung in eine Raumrichtung oder mehrere Beschleunigungen in jeweils verschiedene Raumrichtungen aufzunehmen bzw. zu messen.

Vorzugsweise erfolgt das Ermitteln des Wertes der Drehwinkelbeschleunigung $\dot{\omega}_R$ und/oder des Wertes der Raddrehzahl $\omega_R$ des Rades durch einen am Radträger oder am Rad angebrachten Drehbeschleunigungssensor oder aus einem bereitgestellten Drehzahlsignal.

In einer bevorzugten Ausführungsform kann beispielsweise der Wert der Raddrehzahl $\omega_R$ des Rades bereits in einem Kontrollsystem des Fahrzeugs bekannt sein. Beispielsweise kann das Fahrzeug mit einer Kontrolleinheit ausgestattet sein, welche ausgelegt ist, ein ABS Bremssignal breitzustellen. Zu diesem Zweck kann das Ermitteln des Wertes der Drehwinkelbeschleunigung $\dot{\omega}_R$ und/oder des Wertes der Raddrehzahl $\omega_R$ des Rades vorteilhaft oder notwendig sein. Dabei kann dieser beispielsweise für ein ABS-Bremssignal genutzte Wert auch gleichzeitig bei dem erfindungsgemäßen Verfahren genutzt werden.

Beispielsweise kann die Kontrolleinheit zur Bereitstellung des ABS Bremssignals dieselbe Kontrolleinheit sein, welche auch das erfindungsgemäße Verfahren zur Bereitstellung eines Steuersignals für die Bremsanlage durchführt. In diesem Fall kann beispielsweise das durch das erfindungsgemäße Verfahren bereitgestellte Steuersignal ein anderweitiges ABS Bremssignal, welches durch dieselbe Kontrolleinheit bereitgestellt wird, angepasst werden. Eine derartige Anpassung kann beispielsweise durch eine Kombination und/oder Addition des Steuersignals mit dem ABS Bremssignal erfolgen. Alternativ kann das ABS Bremssignal und das durch das erfindungsgemäße Verfahren bereitgestellte Steuersignal als ein einziges Signal generiert werden, welches sowohl auf dem ABS Bremssignal als auch auf dem durch das erfindungsgemäße Verfahren bereitgestellten Steuersignal basiert.

Alternativ können die Kontrolleinheit, welche das ABS Bremssignal erzeugt, und die Kontrolleinheit, welche das erfindungsgemäße Verfahren zur Bereitstellung eines Steuersignals ausführt, separate Kontrolleinheiten sein. In diesem Fall können das ABS Bremssignal sowie das durch das erfindungsgemäße Verfahren bereitgestellte Steuersignal zu einem einzigen Signal für die Bremsanlage kombiniert werden. Beispielsweise ist es denkbar, ein Fahrzeug, welches mit einer herkömmlichen ABS Kontrolleinheit ausgestattet ist, mit einer weiteren separaten Kontrolleinheit auszustatten, welche das erfindungsgemäße Verfahren zur Bereitstellung eines Steuersignals ausführen kann, so dass die Vorteile einer besseren Bremswirkung bzw. des kürzeren Bremsweges aufgrund des erfindungsgemäße Verfahrens auch nachträglich verfügbar gemacht werden können. Auch in diesem Fall ist es möglich, dass zur Bereitstellung des Steuersignals das Ermitteln des Wertes der Drehwinkelbeschleunigung $\dot{\omega}_R$ und/oder des Wertes der Raddrehzahl $\omega_R$ des Rades aus einem bereitgestellten Drehzahlsignal erfolgt.

Unter Berücksichtigung der obigen Ausführungen umfasst ein erfindungsgemäßes Verfahren in bevorzugten Ausführungsformen somit einen oder mehrere der nachfolgenden Schritte:

- Bereitstellen einer Systemmatrix $A$; und/oder
- Bereitstellen einer Eingangsmatrix $B$; und/oder
- Bereitstellen einer Ausgangsmatrix $C$; und/oder
- Bereitstellen einer Durchgangsmatrix $D$; und/oder
- Bereitstellen einer Störeingangsmatrix $E$; und/oder
- Bereitstellen einer Störausgangsmatrix $F$; und/oder
- Bereitstellen einer zeitdiskreten Systemmatrix $\Phi$; und/oder
- Bereitstellen einer zeitdiskreten Eingangsmatrix $\Gamma$; und/oder
- Bereitstellen einer zeitdiskreten Störeingangsmatrix $G$; und/oder
- Bereitstellen einer Kopplungsmatrix $N$; und/oder
- Bereitstellen einer Zustandsgewichtungsmatrix $Q$; und/oder
- Bereitstellen eines Stellgrößengewichtungsparameters $R$;
- Ermitteln einer Lösungsmatrix $S$, welche die positiv definite Lösung der dem linear-quadratischen Regler zugehörigen (zeitdiskreten) Matrix-Riccatigleichung ist;

In einem weiteren Aspekt betrifft die Erfindung demnach eine Vorrichtung zur Steuerung einer Bremsanlage eines Rades in einem Fahrzeug, in welchem ein Fahrzeugaufbau mittels eines Rad-Fahrwerk-Systems an das Rad gekoppelt ist, wobei die Vorrichtung umfasst:

- ein Zustandsbeobachtermodul zum Ermitteln eines Beobachtungswerts $x$, welcher eine Abweichung $\tilde{x}$ - $x_0$ eines momentanen Wertes $\tilde{x}$ eines Bewegungszustandes des Rad-Fahrwerk-Systems von einem Sollwert $x_0$ während eines Bremsvorgangs beschreibt, wobei der Beobachtungswert zumindest eine Komponente umfasst, die den Bewegungszustand in zumindest einem translatorischen Freiheitsgrad des Rades und/oder des Aufbaus beschreibt; und
- ein Signalmodul zum Bereitstellen eines Steuersignals auf Basis einer Rückführmatrix $K$ derart, dass das Steuersignal ausgelegt ist, mittels der Bremsanlage eine Bremsmomentänderung $u$ gemäß

$$u = -K \cdot x$$

zur Reduzierung des Beobachtungswertes $x$ zu erzeugen, wobei die Rückführmatrix $K$ mittels eines linear-quadratischen Reglers durch die Minimierung eines vom Beobachtungswert $x$ abhängigen Funktionals $J$ bestimmt wird.

Insbesondere kann eine erfindungsgemäße Vorrichtung als eine Kontrolleinheit ausgebildet sein. Die Vorrichtung kann dabei eine Computereinheit und/oder eine CPU und/oder ein Speichermedium umfassen. Vorzugsweise ist die Vorrichtung ausgelegt, ein erfindungsgemäßes Verfahren insbesondere gemäß einer der hier beschriebenen bevorzugten Ausführungsformen auszuführen.

Vorzugsweise umfasst die erfindungsgemäße Vorrichtung einen Aufbausensor, welcher insbesondere in oder an einem Aufbau des Fahrzeugs angebracht oder anbringbar ist und ausgelegt ist, eine vertikale Bewegung des Aufbaus und/oder eine longitudinale Bewegung des Aufbaus zu erfassen, insbesondere direkt zu messen. Die vertikale Bewegung des Aufbaus und die longitudinale Bewegung des Aufbaus können dabei von einem Sensor oder von mehreren Sensoren separat und/oder redundant erfasst werden. Alternativ oder zusätzlich umfasst die erfindungsgemäße Vorrichtung vorzugsweise einen Radsensor, welcher insbesondere im oder am Rad und/oder im oder am Radträger angebracht oder anbringbar ist und ausgelegt ist, eine vertikale und/oder longitudinale Bewegung des Rades zu erfassen. Die vertikale Bewegung des Rades und die longitudinale Bewegung des Rades können dabei von einem Sensor oder von mehreren Sensoren separat und/oder redundant erfasst werden. Der Aufbausensor und/oder der Radsensor können dabei beispielsweise als Beschleunigungssensoren bzw. als Beschleunigungssensor ausgebildet sein. Ferner kann die erfindungsgemäße Vorrichtung eine Mehrzahl von Aufbausensoren und/oder eine Mehrzahl von Radsensoren umfassen.

Ferner kann die erfindungsgemäße Vorrichtung ausgelegt sein, den Wert der Drehwinkelbeschleunigung $\omega_R$ und/oder den Wert der Raddrehzahl $\omega_R$ des Rades mittels eines am Radträger und/oder am Rad angebrachten Drehbeschleunigungssensor und/oder aus einem bereitgestellten Drehzahlsignal zu bestimmen.

In einem weiteren Aspekt betrifft die Erfindung ein Computerprogrammprodukt, insbesondere in Form eines Datenträgers oder eine Signalfolge, umfassend computerausführbare Anweisungen, welche wenn in ein Computersystem geladen und dort ausgeführt, das Computersystem veranlassen, ein Verfahren gemäß einer der hier beschriebenen Ausführungsformer der Erfindung auszuführen.

Weitere Vorteile, Eigenschaften und Merkmale der Erfindung werden nachfolgend mit Bezug auf Zeichnungen bevorzugter Ausführungsformen beispielhaft beschrieben. Obwohl Merkmale von verschiedenen Ausführungsformen gegebenenfalls voneinander getrennt beschrieben werden, können diese einzeln zu neuen Ausführungsformen kombiniert werden. Insbesondere Merkmale, welche mit Bezug auf bestimmte Ausführungsformen beschrieben sind, können auch in anderen Ausführungsformen verwirklicht sein bzw. werden, selbst wenn diese mit Bezug auf diese anderen Ausführungsformen nicht nochmals explizit erwähnt und/oder beschrieben sind. Es zeigt:

**Fig.1** eine beispielhafte schematische Darstellung des Funktionsprinzips der Anwendung eines Verfahrens in einem Kraftfahrzeug gemäß einer bevorzugten Ausführungsform der vorliegenden Erfindung;

**Fig. 2** eine schematische Darstellung eines umfassenden analytischen, physikalischen Modells gemäß einer bevorzugten Ausführungsform der vorliegenden Erfindung;

**Fig. 3** eine beispielhafte Reibwert-Schlupf-Kurve;

**Fig. 4** eine schematische Darstellung eines reduzierten Zustandsmodells des Rad-Fahrwerk-Systems in einer bevorzugten Ausführungsform der vorliegenden Erfindung; und

**Fig. 5** eine schematische Darstellung des Funktionsprinzips einer Vorrichtung gemäß einer bevorzugten Ausführungsform der vorliegenden Erfindung.

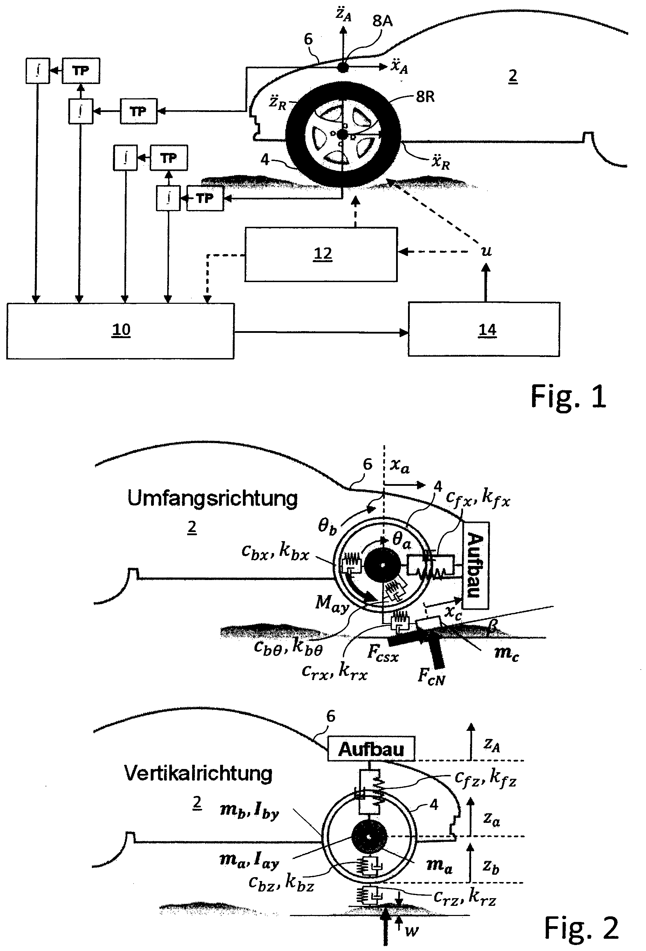

**Fig. 1** zeigt eine schematische Darstellung einer Bremsanlage zur Beschreibung eines Verfahrens insbesondere gemäß einer ersten bevorzugten Ausführungsform der vorliegenden Erfindung. In der ersten bevorzugten Ausführungsform handelt es sich um ein Verfahren zur Steuerung einer Bremsanlage eines Fahrzeugs 2. Vorzugsweise wird die Bremsanlage für jedes Rad 4 des Fahrzeugs 2 individuell gesteuert. Dazu wird vorzugsweise die Dynamik des Rad-Fahrwerk-Systems für jedes Rad 4 des Fahrzeugs 2 separat bzw. individuell bestimmt.

Das Fahrzeug 2 umfasst einen Aufbau 6, wobei jedes der Räder 4 des Fahrzeugs 2 anteilsmäßig einen Teil der Masse des Aufbaus 6 trägt. Der Anteil des Aufbaus 6, welcher von einem bestimmten Rad 4 getragen wird, kann beispielsweise durch die Achslast bzw. die Last, welche auf diesem Rad 4 lastet, bestimmt sein. Im Folgenden soll, sofern nicht anders angegeben, mit "Aufbau" der Anteil des Aufbaus gemeint sein, welcher auf dem entsprechenden bzw. zugehörigen Rad 4 lastet. Beispielsweise kann bei einem Fahrzeug 2 mit vier Rädern 4 der Anteil eine Viertel-Fahrzeug-Ecke umfassen oder aus dieser bestehen.

In der dargestellten, bevorzugten Ausführungsform ist sowohl am Aufbau 6 als auch am Rad 4 jeweils zumindest ein Sensor 8 vorgesehen. Diese Sensoren sollen im Folgenden als Aufbausensor 8A bzw. als Radsensor 8R bezeichnet werden. Die Sensoren 8 sind dabei vorzugsweise als Beschleunigungssensoren ausgelegt, um eine translatorische Beschleunigung des Aufbaus 6 bzw. des Rades 4 insbesondere in vertikaler und/oder longitudinaler Richtung zu messen. Als longitudinale Richtung wird hier eine Richtung parallel zu Fahrtrichtung (insbesondere bei einer Geradeausfahrt) verstanden.

Für die weiteren Betrachtungen unterschiedlicher Bewegungsfreiheitsgrade im Rad-Fahrwerk-System wird ein $x$-$y$-$z$-Koordinatensystem eingeführt, dessen $x$-Richtung in Fahrtrichtung (longitudinal), dessen $z$-Richtung nach oben (vertikal) und dessen $y$-Richtung seitlich zeigt. Positionen innerhalb dieses Koordinatensystems können so mit den Koordinaten $(x,y,z)$ bezeichnet werden, wobei die Koordinaten insbesondere für entsprechende Positionen des Rades mit dem Index "R" und für entsprechende Positionen des Aufbaus mit dem Index "A" versehen werden. Zeitliche Änderungen der Positionen, also Geschwindigkeiten, werden mit einem Punkt über der Koordinaten-Angabe (z.B. $\dot{x}_A$) und Beschleunigungen mit zwei Punkten über der Koordinaten-Angabe (z.B. $\ddot{x}_A$) abgekürzt.

Vorzugsweise ist der Aufbausensor 8A somit ausgelegt, die vertikale Beschleunigung des Aufbaus $\ddot{z}_A$ und/oder die longitudinale Beschleunigung des Aufbaus $\ddot{x}_A$ zu messen. Der Radsensor ist vorzugsweise ausgelegt, die longitudinale Beschleunigung des Rades $\ddot{x}_R$ und/oder die vertikale Beschleunigung des Rades $\ddot{z}_R$ zu messen. Dies kann eine Integration über die Zeit der gemessenen bzw. ermittelten Beschleunigungen umfassen. Ferner können Tiefpassfilter TP vorgesehen sein, welche eine Tiefpassfilterung der ermittelten Beschleunigung ermöglichen, um die ermittelten Beschleunigungssignale von eventuell auftretenden störenden Einflüssen zu bereinigen.

Das Auftreten von Beschleunigungen am Aufbau ebenso wie am Rad sowohl in vertikaler als auch in longitudinaler Richtung kann unterschiedliche Ursachen haben. Insbesondere können solche Beschleunigungen beispielsweise durch Fahrbahnunebenheiten aber auch durch ungewollte Schwingungen im Rad-Fahrwerk-System des Fahrzeugs 2 vor allem bei sehr starken Bremsvorgängen hervorgerufen werden. Vor allem interne Schwingungen im Rad-Fahrwerk-System können einen Bremsvorgang ungünstig beeinflussen. Insbesondere im Grenzbereich sehr starker Verzögerungen, also im Übergangsbereich zum teilweisen oder vollständigen Blockieren der Räder oder eines Rades können Schwingungen im Rad-Fahrwerk-System einerseits die erreichbare Bremsverzögerung andererseits die Lenkbarkeit des Fahrzeugs negativ beeinflussen.

In der dargestellten, bevorzugten Ausführungsform umfasst die Bremsanlage ein Zustandsbeobachtermodul 10, welches ausgelegt ist, die gemessenen Beschleunigungen $\ddot{x}_A$, $\ddot{x}_R$, $\ddot{z}_A$ und/oder $\ddot{z}_R$ zu erfassen und eine Abweichung $\boldsymbol{x}$ eines momentanen Wertes $\tilde{\boldsymbol{x}}$ von einem vorbestimmten Wert bzw. Sollwert $\boldsymbol{x}_0$ des Bewegungszustands des Rad-Fahrwerk-Systems zu ermitteln. Die Abweichung $\boldsymbol{x}$ wird daher hier auch als Beobachtungswert bezeichnet. Je nach Ausführungsform stellt der Beobachtungswert $\boldsymbol{x}$ einen Vektor mit einer Vielzahl von Vektorkomponenten dar, von denen jede eine Zustandsvariable beschreibt. Insbesondere legt der momentane Wert $\tilde{\boldsymbol{x}}$ den Zustandsvektor des Rad-Fahrwerk-Systems fest und spannt damit den Zustandsraum des Rad-Fahrwerk-Systems vorzugsweise im Rahmen aller berücksichtigter Bewegungsfreiheitsgrade auf. Die nachfolgend im Detail beschriebenen bevorzugten Ausführungsformen unterscheiden sich insbesondere in der Anzahl und/oder Auswahl der berücksichtigten Bewegungsfreiheitsgrade, wobei in den gezeigten Ausführungsformen der Beobachtungswert $\boldsymbol{x}$ (und damit auch der Zustandsraum) jeweils zumindest einen translatorischen Freiheitsgrad (insbesondere in longitudinaler und/oder vertikaler Richtung) des Rades und/oder des Aufbaus festlegt oder beschreibt.

Ferner können dem Zustandsbeobachtermodul 10 gemäß der bevorzugten Ausführungsform weitere Informationen durch andere Kontrolleinheiten bereitgestellt werden. Vorzugsweise wird durch eine Kontrolleinheit zur Bereitstellung des ABS Bremssignals 12 beispielsweise eine Winkelgeschwindigkeit $\omega_R = \dot{\Theta}_R$ des Rades 4 (auch als Raddrehzahl bezeichnet) und/oder eine Winkelbeschleunig des Rades $\dot{\omega}_R = \ddot{\Theta}_R$ bereitgestellt, welche ebenfalls in die Bestimmung der Abweichung $\boldsymbol{x}$ durch das Zustandsbeobachtermodul 10 einfließen können.

Anhand der durch das Zustandsbeobachtermodul 10 erfassten Abweichung $\boldsymbol{x}$ ermittelt ein Signalmodul 14 ein Steuersignal, welches die Bremsanalage veranlasst, an dem Rad eine Bremsmomentänderung $u$ auszuüben, so dass die Abweichung $\boldsymbol{x}$ reduziert wird.

Dabei kann das Steuersignal derart ausgelegt sein, dass der Bremsvorgang fortgesetzt wird, während das Bremsmoment angepasst wird, um während des Bremsvorgangs die Abweichung $\boldsymbol{x}$ zu reduzieren, wobei das Steuersignal beispielsweise direkt an die Bremsanlage bzw. eine Kontrolleinheit der Bremsanlage ausgegeben werden kann. Alternativ kann das Steuersignal auch mit einem eventuellen Bremssignal kombiniert werden, welches von der Kontrolleinheit zur Bereitstellung des ABS Bremssignals 12 bereitgestellt wird. Beispielsweise kann das Bremssignal ein Signal sein, welches die Bremsanlage derart ansteuert, dass eine herkömmliche ABS Bremsung ausgeführt wird bzw. werden soll, und das Steuersignal ausgelegt sein, das Bremssignal zu überlagern und/oder anzupassen, so dass die Abweichung $\boldsymbol{x}$ und somit Schwankungen und/oder Schwingungen im Rad-Fahrwerk-System während des Bremsvorgangs reduziert werden.

Insgesamt bietet die Erfindung somit vorzugsweise ein Bremsmomentkorrekturmodul, welches beispielsweise zur Nachrüstung von Fahrzeugen geeignet ist, welche beispielsweise bereits mit ABS ausgerüstet sind. Dazu umfasst das Bremsmomentkorrekturmodul insbesondere das Zustandsbeobachtermodul 10 und ein Zustandsreglermodul (insbesondere in Form des Signalmoduls 14), welche getrennt voneinander oder auch integral als eine Funktionseinheit insbesondere als ein Schaltkreis implementiert sein können.

Dem Ermitteln der Abweichung $\boldsymbol{x}$ und dem Bereitstellen des Steuersignals liegt dabei eine mathematische Darstellung der Dynamik des Rad-Fahrwerk-Systems, d.h. eine Zustandsraumdarstellung, zu Grunde. Dabei wird die Dynamik der Viertelfahrzeugecke mathematisch dargestellt, in welcher sich das Rad befindet, für dessen Bremsanlage ein Steuersignal bereitgestellt werden soll.

Auf Basis der Zustandsraumdarstellung wird es gemäß der bevorzugten Ausführungsform damit möglich, eine Regelstrecke zu bestimmen, mit welcher die Kraftschwankungen und/oder Schwingungen im Rad-Fahrwerk-System regelbar sind, wobei durch die Bremsanlage eine an dem Rad ausübbare Bremsmomentänderung $u = \Delta M_{Ry}$ (bzw. $u = \Delta M_{ay}$) die einzige kontrollierbare Eingangsgröße bzw. die Bremsanlage des Rades der (insbesondere einzige) Aktor sein soll. In anderen Worten soll die Regelstrecke erlauben, die Kraftschwankungen und/oder Schwingungen im Rad-Fahrwerk-System (insbesondere ausschließlich) mittels des Bremsmoments $M_{Ry}$ (bzw. $M_{ay}$) zu reduzieren.

Der Zweck der Zustandsraumdarstellung ist vorzugsweise, das Rad-Fahrwerk-System bzw. die Viertelfahrzeugecke in einer Regelstrecke durch eine Differenzialgleichung

$$\dot{\boldsymbol{x}}(t) = \boldsymbol{A} \cdot \boldsymbol{x}(t) + \boldsymbol{B} \cdot u(t)$$

und eine Ausgangsgleichung

$$\boldsymbol{y}(t) = \boldsymbol{C} \cdot \boldsymbol{x}(t) + \boldsymbol{D} \cdot u(t)$$

auf Basis einer Systemmatrix $\boldsymbol{A}$, einer Eingangsmatrix $\boldsymbol{B}$, einer Ausgangsmatrix $\boldsymbol{C}$ und einer Durchgangsmatrix $\boldsymbol{D}$ dar-

zustellen, soweit externe Störungen (z.B. durch Fahrbahnunebenheiten) und Messrauschen (der Sensoren) außer Acht gelassen werden. Die Ausgangsgleichung beschreibt den Einfluss des Zustands $x(t)$ des Systems (einschließlich des Regelkreiseingangs $u(t)$) auf die beobachtbaren (bzw. messbaren) Größen $y(t)$ (Ausgangsgröße). Der Parameter $t$ steht dabei für die Zeit und indiziert, dass die entsprechenden Größen in dieser zeitabhängigen bzw. zeitvarianten Zustandsraumdarstellung von der Zeit abhängen.

Insbesondere ist die Abweichung $x$ dabei $x = \tilde{x} - x_0$, wobei $\tilde{x}$ eine Vektorgröße sein kann, welche mehrere Komponenten, wie etwa eine longitudinale Aufbauposition $\tilde{x}_A$, eine longitudinale Geschwindigkeit des Aufbaus $\dot{\tilde{x}}_A$, eine vertikale Radposition $\tilde{z}_R$, eine vertikale Geschwindigkeit des Rades $\dot{\tilde{z}}_R$, eine longitudinale Radposition $\tilde{x}_R$, eine longitudinale Geschwindigkeit des Rades $\dot{\tilde{x}}_R$, eine longitudinale Position der reifengefederten Masse $\tilde{x}_a$, eine vertikale Position der reifengefederten Masse $\tilde{z}_a$, einen Drehwinkel der reifengefederten Masse $\tilde{\Theta}_a$, eine longitudinale Position der Reifengürtelmasse $\tilde{x}_b$, eine vertikale Position der Reifengürtelmasse $\tilde{z}_b$, einen Drehwinkel der Reifengürtelmasse $\tilde{\Theta}_b$ und/oder eine longitudinale Position der Kontaktmasse $\tilde{x}_c$ umfassen kann.

Gemäß dieser bevorzugten Ausführungsform wird eine Zustandsraumdarstellung mit Hilfe eines möglichst vollständigen analytischen, physikalischen Modells bzw. einer mathematischen Beschreibung der Viertelfahrzeugecke genutzt.

**Fig. 2** zeigt eine schematische Darstellung dieses möglichst umfassenden bzw. vollständigen analytischen, physikalischen Modells gemäß der ersten bevorzugten Ausführungsform, in dem die Viertelfahrzeugecke mit vier Komponenten mit entsprechenden Massen, Trägheitsmomenten und Freiheitsgraden beschrieben ist. Der obere Teil von Fig. 2 stellt dabei die Freiheitsgrade, Massen, Federungen und Dämpfungen dar, welche insbesondere für die longitudinale Richtung und/oder die Radumfangsrichtung bzw. Umfangsrichtung relevant sind. Der untere Teil von Fig. 2 stellt dabei die Freiheitsgrade, Massen, Federungen und Dämpfungen dar, welche insbesondere für die vertikale Richtung bzw. Vertikalrichtung relevant sind.

Eine mechanische Koppelung zwischen verschiedenen Massen ist jeweils als ein Feder-Dämpfer-Element dargestellt. Die Zustandsraumdarstellung bildet dynamische Werte der jeweiligen Zustände jeder Masse gegen einen entsprechenden stationären bzw. vorbestimmten Zustand ab, also die Abweichung gegenüber dem vorbestimmten Wert des Zustands. In anderen Worten stellen die abgebildeten Zustände gemäß der ersten bevorzugten Ausführungsform Komponenten des Vektors $x(t)$ der Abweichung $x$ des momentanen (absoluten) Wertes (bzw. Gesamtwertes) $\tilde{x}$ von dem Vektor des vorbestimmten Wertes (Sollwerts) $x_0$ des Zustands bzw. des Sollzustands des Rad-Fahrwerk-Systems dar.

Wie in Fig. 2 dargestellt, beschreibt die Zustandsraumdarstellung gemäß der ersten bevorzugten Ausführungsform vier Massen, welche jeweils durch Feder-Dämpfer-Elemente dargestellt miteinander gekoppelt sind. Die vier Massen sind gemäß der ersten bevorzugten Ausführungsform die anteilige Masse des Aufbaus $m_A$, die reifengefederte Masse $m_a$ zusammen mit einer anteiligen Masse des Reifens, welche mit der Felge rotiert, die Reifengürtelmasse $m_b$ und die Kontaktmasse $m_c$, welche im Folgenden erläutert werden.

Die anteilige Masse des Aufbaus $m_A$ hat dabei einen translatorischen Freiheitsgrad in vertikaler Richtung. Die vertikale Position des Aufbaus wird im Folgenden mit $\tilde{z}_A$ bezeichnet, die Abweichung vom vorbestimmten Wert der vertikalen Position des Aufbaus $z_{A0}$, d.h. vom Sollwert $z_{A0}$, ist mit $z_A$ bezeichnet.

Die dynamische Bewegung des Fahrzeugaufbaus in longitudinaler Richtung wird in dieser bevorzugten Ausführungsform wegen der großen Massenträgheit vernachlässigt.

Die reifengefederte Masse $m_a$ umfassend eine anteiligen Masse des Reifens, welche mit der Felge rotiert, hat dabei drei Freiheitsgrade, nämlich in der longitudinalen und der vertikalen Richtung sowie der Rotationsrichtung. Die Werte, welche die reifengefederte Masse $m_a$ zusammen mit der anteiligen Masse des Reifens bezüglich dieser Frei-heitsgrade einnimmt, sind mit $\tilde{x}_a$, $\tilde{z}_a$ und $\tilde{\Theta}_a$ bezeichnet. Deren Abweichungen vom entsprechend vorbestimmten Wert $x_{a0}$, $z_{a0}$ bzw. $\Theta_{a0}$ sind mit $x_a$, $z_a$ bzw. $\Theta_a$ bezeichnet.

Die Reifengürtelmasse $m_b$ hat dabei drei Freiheitsgrade in der longitudinalen und vertikalen Richtung sowie der Rotationsrichtung. Die Werte, welche die Reifengürtelmasse $m_b$ bezüglich dieser Freiheitsgrade einnimmt, sind mit $\tilde{x}_b$, $\tilde{z}_b$ und $\tilde{\Theta}_b$ bezeichnet. Deren Abweichungen vom entsprechend vorbestimmten Wert $x_{b0}$, $z_{b0}$ bzw. $\Theta_{b0}$, sind mit $x_b$, $z_b$ bzw. $\Theta_b$ bezeichnet.

Die Kontaktmasse $m_c$ zwischen dem Reifengürtel und der Fahrbahn hat einen tangentialen, bzw. longitudinalen Freiheitsgrad auf der Fahrbahnebene. Der Wert, den die Kontaktmasse $m_c$ bezüglich dieses Freiheitsgrads einnehmen kann, ist als $\tilde{x}_c$ bezeichnet. Die Abweichung vom entsprechend vorbestimmten Wert $x_{c0}$ ist mit $x_c$ bezeichnet.

Die Dynamik der anteiligen Masse des Aufbaus $m_A$ ist durch die Bewegungsgleichung

$$m_A \ddot{\tilde{z}}_A = k_{fz}\big(\dot{\tilde{z}}_a - \dot{\tilde{z}}_A\big) + c_{fz}(\tilde{z}_a - \tilde{z}_A)$$

gegeben. Dabei stehen $c_{fz}$ für die Vertikalsteifigkeit der Radaufhängung und $k_{fz}$ für die Vertikaldämpfung der Radaufhängung.

Die Dynamik der reifengefederten Masse $m_a$ ist durch die Bewegungsgleichungen

$$m_a \ddot{\tilde{x}}_a = \tilde{F}_{abx} - k_{fx}\big(\dot{\tilde{x}}_a - \dot{\tilde{x}}_A\big) + c_{fx}(\tilde{x}_a - \tilde{x}_A)$$

$$m_a \ddot{\tilde{z}}_a = \tilde{F}_{abz} - k_{fz}\big(\dot{\tilde{z}}_a - \dot{\tilde{z}}_A\big) - c_{fz}(\tilde{z}_a - \tilde{z}_A)$$

$$I_{ay}\ddot{\tilde{\theta}}_a = \tilde{M}_{aby} - \tilde{M}_{ay}$$

beschrieben. Dabei stehen $c_{fx}$ für die Längssteifigkeit der Radaufhängung und $k_{fx}$ für die Längsdämpfung der Radaufhängung.

Die internen Kräfte und das Moment in der Reifenseitenwand zwischen $m_a$ und $m_b$ ergeben sich dabei zu

$$\tilde{F}_{abx} = k_{bx}\big(\dot{\tilde{x}}_b - \dot{\tilde{x}}_a\big) + c_{bx}(\tilde{x}_b - \tilde{x}_a) - k_{bz}\dot{\tilde{\theta}}_a(\tilde{z}_b - \tilde{z}_a)$$

$$\tilde{F}_{abz} = k_{bz}\big(\dot{\tilde{z}}_b - \dot{\tilde{z}}_a\big) + c_{bz}(\tilde{z}_b - \tilde{z}_a) + k_{bx}\dot{\tilde{\theta}}_a(\tilde{x}_b - \tilde{x}_a)$$

$$\tilde{M}_{aby} = k_{b\theta}\left(\dot{\tilde{\theta}}_b - \dot{\tilde{\theta}}_a\right) + c_{b\theta}\big(\tilde{\theta}_b - \tilde{\theta}_a\big)$$

Dabei stehen $c_{fx}$ für die Längssteifigkeit der Radaufhängung und $k_{fx}$ für die Längsdämpfung der Radaufhängung. Außerdem stehen $c_{fz}$ für die Vertikalsteifigkeit der Radaufhängung und $k_{fz}$ für die Vertikaldämpfung der Radaufhängung. Außerdem stehen $c_{rz}$ Vertikalsteifigkeit des Reifens bzw. der Laufstreifenmischung und $k_{rz}$ für die Vertikaldämpfung des Reifens bzw. der Laufstreifenmischung. Außerdem stehen $c_{rx}$ für die longitudinale Steifigkeit des Reifens bzw. der Laufstreifenmischung und $k_{rx}$ für die longitudinale Dämpfung des Reifens bzw. der Laufstreifenmischung. Außerdem stehen $c_{bx}$ für die longitudinale Seitenwandsteifigkeit (des Reifens) und $k_{bx}$ für die longitudinale Seitenwanddämpfung (des Reifens). Außerdem stehen $c_{bz}$ für die vertikale Seitenwandsteifigkeit (des Reifens) und $k_{bz}$ für die vertikale Seitenwanddämpfung (des Reifens). Schließlich stehen $c_{b\theta}$ für die Torsionssteifigkeit der Seitenwand des Reifens und $k_{b\theta}$ für die Torsionsdämpfung der Seitenwand des Reifens.

Vorzugsweise weist das Rad einen Reifengürtel auf, wobei die Dynamik des Reifengürtels durch die Bewegungsgleichungen

$$m_b \ddot{\tilde{x}}_b = \tilde{F}_{bcx} - \tilde{F}_{abx}$$

$$m_b \ddot{\tilde{z}}_b = \tilde{F}_{bcz} - \tilde{F}_{abz}$$

$$I_{by}\ddot{\tilde{\theta}}_b = \tilde{M}_{bcy} - \tilde{M}_{aby}$$

beschrieben ist. Interne Kräfte und ein Moment bzw. Drehmoment am Reifengürtel, d.h. zwischen den Massen $m_b$ und $m_c$ sind durch die Gleichungen

$$\tilde{F}_{bcx} = \cos\tilde{\beta} \cdot \tilde{F}_{cx} + \sin\tilde{\beta} \cdot \tilde{F}_{cz}$$

$$\tilde{F}_{bcz} = -\sin\tilde{\beta} \cdot \tilde{F}_{cx} + \cos\tilde{\beta} \cdot \tilde{F}_{cz}$$

$$\tilde{M}_{bcy} = r_{dyn}f_r\tilde{F}_{cz} - r_{dyn}\tilde{F}_{cx}$$

beschrieben. Dabei ist $r_{dyn}$ der dynamische Rollhalbmesser des Rades und $f_r$ der Rollwiderstandsbeiwert. Die Normalkraft $\tilde{F}_{cN}$ zwischen Reifen bzw. Rad und der Fahrbahn, auf welcher das Rad steht oder rollt, ist durch die Gleichung

$$\tilde{F}_{cN} = \tilde{F}_{cz} = q_{Fz2}\rho_z^2 + q_{Fz1}\rho_z$$

bestimmt. Die Parameter $q_{Fz1}$ und $q_{FZ2}$ sind dabei Koeffizienten eines Polynoms zweiter Ordnung zur Beschreibung der leicht progressiven Zunahme der Kraft mit zunehmender Verformung des Rades bzw. des Reifens. Die Verformung des Reifens $\rho_z$ im Kontakt mit der Fahrbahn wird durch die folgende Gleichung ausgedrückt:

$$\rho_z = (\tilde{w} - \tilde{z}_a)\cos\tilde{\beta}$$

Dabei beschreiben $\tilde{w}$ und $\tilde{\beta}$ Koordinaten einer Störung $\tilde{w}$ z.B. aufgrund von Fahrbahnunebenheiten. Dabei wird in dieser bevorzugten Ausführungsform die Störung $\tilde{w}(t) = [\tilde{w}\ \tilde{\beta}]^T$ durch die Höhe $\tilde{w}$ und die Steigung $\tilde{\beta}$ einer Fahrbahnunebenheit beschrieben.

Die Kraft im tangentialen Feder-Dämpfer-Element zwischen $m_b$ und $m_c$ wird durch den mathematischen Zusammenhang

$$\tilde{F}_{cx} = k_{rx}(\dot{\tilde{x}}_c - \dot{\tilde{x}}_b) + c_{rx}(\tilde{x}_c - \tilde{x}_b)$$

beschrieben.

Die Dynamik der Kontaktmasse wird durch die Bewegungsgleichung für die Kontaktmasse $m_c$ beschrieben:

$$m_c\ddot{\tilde{x}}_c = \tilde{F}_{csx} - \tilde{F}_{cx}$$

Die Tangentialkraft $\tilde{F}_{csx}$ zwischen der Kontaktmasse bzw. dem Reifenlatsch und der Fahrbahnoberfläche wird durch den Reibwert $\tilde{\mu}$ und die Normalkraft $\tilde{F}_{cN}$ bestimmt.

$$\tilde{F}_{csx} = \tilde{\mu} \cdot \tilde{F}_{cN} = f(\tilde{\lambda}) \cdot \tilde{F}_{cN}$$

Der Reibwert $\tilde{\mu}$ ist vorzugsweise anhand einer vorbestimmten Reibwert-Schlupf-Kurve bzw. $\mu$-$\lambda$-Kurve $f(\lambda)$ bestimmt. Die $\mu$-$\lambda$-Kurve $f(\tilde{\lambda})$ kann beispielsweise in einem Kontrollsystem des Fahrzeugs bzw. in einer Kontrolleinheit, welche beispielsweise zur Steuerung bzw. Regelung der Bremsanlage dient, hinterlegt sein.

In einer Ausführungsform ist der Reibwert vorzugsweise anhand der $\mu$-$\lambda$-Kurve vom Schlupfwert abhängig und kann beispielsweise bei vorgegebener $\mu$-$\lambda$-Kurve anhand des ermittelten Schlupfwertes ermittelt werden. Das Ermitteln des Schlupfwertes kann ein Berechnen und/oder Messen des Schlupfwertes umfassen.

Gemäß einer bevorzugten Ausführungsform wird das Zustandsmodell derart aufgebaut, dass die Bewegungsgleichungen um einen stationären Arbeitspunkt $(\lambda_0, \mu_0)$ auf der $\mu$-$\lambda$-Kurve linearisiert werden, wobei sich der absolute Schupfwert $\tilde{\lambda} = \lambda_0 + \lambda$ über dessen Abweichung $\lambda$ vom Arbeitspunkt $\lambda_0$ darstellen lässt. Analoges gilt für den Reibwert. Der Arbeitspunkt $(\lambda_0, \mu_0)$ kann dabei beispielsweise einem Punkt entsprechen, welcher ausgelegt ist, eine vorbestimmte Bremswirkung zu erzielen. Beispielsweise kann die Bremswirkung, welche am Arbeitspunkt $(\lambda_0, \mu_0)$ erwartet wird, einer optimalen Bremswirkung entsprechen, welche ein Bremsregler unter idealen Bedingungen, d.h. ohne störende Einflüsse beispielsweise aufgrund von Kraftschwankungen und/oder Schwingungen des Rad-Fahrwerk-Systems, erzielen würde. Eine derartige Bremskraft, welche am Arbeitspunkt $(\lambda_0, \mu_0)$ erzielt wird, soll im Folgenden als $\tilde{F}_{BF}$ bezeichnet werden. In einer anderen bevorzugten Ausführungsform wird der Arbeitspunkt anhand eines vorgegebenen Schlupfwertes $\lambda_0$

festgelegt (z.B. $\lambda_0 = 0{,}1$).

Der absolute Reibwert $\tilde{\mu}$ oder dessen Abweichung $\mu$ vom Arbeitspunkt $\mu_0$ kann dabei in einem Kraftfahrzeug während eines Bremsvorgangs beispielsweise auf Basis einer Ermittlung der Drehwinkelbeschleunigung des Rades bzw. Winkelbeschleunigung des Rades $\dot{\tilde{\omega}}_R$ bestimmt werden, während das Rad kurzzeitig unterbremst wird und/oder der Bremsdruck bei dem entsprechenden Rad kurzzeitig auf Null reduziert wird. In anderen Worten kann eine Bestimmung des Reibwerts $\tilde{\mu}$, insbesondere des Reibwerts $\mu_0$ am Arbeitspunkt der $\mu$-$\lambda$-Kurve, dadurch erfolgen, dass die Bremse des entsprechenden Rades teilweise oder vollständig gelöst wird und die sich daraus ergebende Drehwinkelbeschleunigung des Rades bzw. Winkelbeschleunigung des Rades $\dot{\tilde{\omega}}_R$ ermittelt bzw. gemessen wird. Unterschiedliche Reibwerte $\tilde{\mu}$ an der Kontaktfäche zwischen Reifen und Fahrbahn können dabei einen unterschiedlichen Einfluss auf die resultierende Drehwinkelbeschleunigung des Rades bzw. Winkelbeschleunigung des Rades $\dot{\tilde{\omega}}_R$ haben. Beispielsweise ist für größere Reibwerte $\tilde{\mu}$ eine größere Änderung der Drehwinkelbeschleunigung des Rades bzw. Winkelbeschleunigung des Rades $\dot{\tilde{\omega}}_R$ zu erwarten, als für kleinere Reibwerte. Aus der gemessenen bzw. ermittelten Winkelbeschleunigung des Rades $\dot{\tilde{\omega}}_R$ kann zusammen mit dem im System zumindest teilweise bekannten Trägheitsmoment des Rades bzw. mit dem Massenträgheitsmoment der drehenden Masse $I_{Ry}$ ein Drehmoment bzw. eine Radumfangskraft ermittelt werden, welches aus der kurzzeitigen Unterbremsung bzw. Lösung der Bremse des entsprechenden Rades hervorgeht. Aus diesem Drehmoment kann ferner der Reibwert $\tilde{\mu}$ bei dem vor dem Lösen der Bremse vorliegenden Schlupf $\tilde{\lambda}$ ermittelt werden. Insbesondere kann auf diese Weise durch die Ermittlung des Reibwerts bei einem momentanen Schlupf des Rades, welcher dem Schlupf $\lambda_0$ am Arbeitspunkt entspricht, auch der Reibwert $\mu_0$ am Arbeitspunkt ermittelt werden. Durch eine mehrmalige Durchführung einer derartigen Bestimmung der Radumfangskraft bzw. des Reibwerts bei verschiedenen vorliegenden Schlupfwerten, insbesondere um den Schlupf $\lambda_0$ am Arbeitspunkt herum, kann ferner die Steigung der linearen Näherung der Umfangskraft-Schlupf-Kurve bzw. der $\mu$-$\lambda$-Kurve bzw. des linearisierten Verlaufs des Reibwerts $\tilde{\mu}$ mit dem Schlupf $\tilde{\lambda}$ ermittelt werden. Somit steht ein Verfahren zur Bestimmung des Reibwertes $\mu$ und der Steigung der linearisierten $\mu$-$\lambda$-Kurve um den Arbeitspunkt herum zur Verfügung. Eine Bestimmung des Reibwerts und/oder der Steigung der linearisierten $\mu$-$\lambda$-Kurve kann beispielsweise mehrmals während eines Bremsvorgangs, insbesondere in regelmäßigen Zeitabständen, erfolgen, um auch frequent und/oder spontan auftretende Reibwertänderungen, etwa durch Änderungen des Fahrbahnbelags, bei der Bereitstellung des Steuersignals für die Bremsanlage auf effiziente Weise zu berücksichtigen. Alternativ oder zusätzlich können jedoch auch andere Verfahren verwendet werden, mit welchen sich der Reibwert und die Steigung der linearisierten $\mu$-$\lambda$-Kurve zuverlässig und schnell bestimmen lassen.

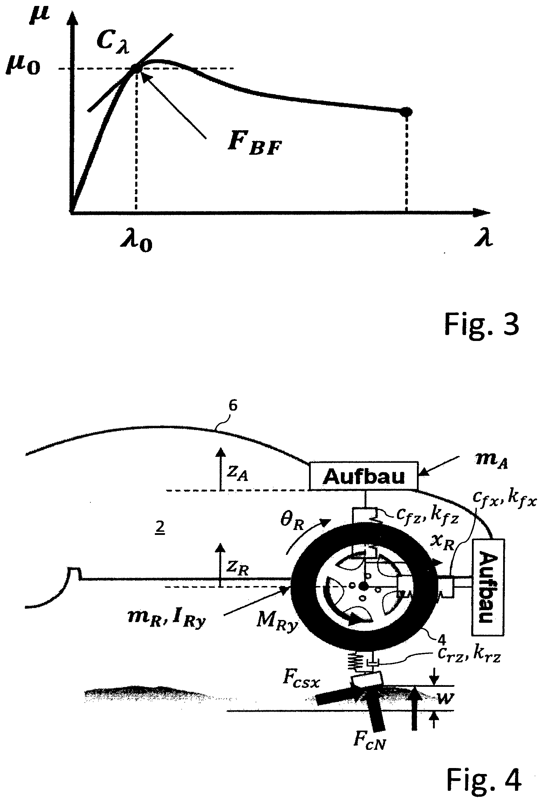

**Fig. 3** zeigt eine beispielhafte Reibwert-Schlupf-Kurve, bei welcher der Reibwert $\tilde{\mu}$ auf der vertikalen Achse gegen den Schlupf $\tilde{\lambda}$ auf der horizontalen Achse aufgetragen ist. Der Verlauf der $\mu$-$\lambda$-Kurve kann beispielsweise für ein Rad-Fahrwerk-System bzw. für ein bestimmtes Fahrzeug bzw. für eine bestimmte Kombination aus Reifen und Fahrbahnbelag vorbestimmt und kann in einer Kontrolleinheit hinterlegt werden. Bevorzugt ist der Verlauf der $\mu$-$\lambda$-Kurve, insbesondere die erste Ableitung nach dem Schlupf, für verschiedene Fahrbahnbeläge bzw. Fahrbahnbeschaffenheiten ähnlich, so dass sich von dem vorbestimmten Verlauf keine großen Abweichungen ergeben, selbst wenn die absoluten Werte des Reibwerts $\tilde{\mu}$ für die verschiedenen Fahrbahnbeläge bzw. Fahrbahnbeschaffenheiten unterschiedlich sind. Der Arbeitspunkt $(\lambda_0, \mu_0)$ kann insbesondere derart gewählt werden, dass an diesem Arbeitspunkt eine besonders effiziente Bremswirkung erzielt wird oder dass der Schlupf konstant bleibt.

Gemäß der ersten bevorzugten Ausführungsform wird ein Steuersignal für die Bremsanlage derart bereitgestellt, dass die Abweichung $\boldsymbol{x}$ des Zustands des Rad-Fahrwerk-Systems $\tilde{\boldsymbol{x}}$ von dem vorbestimmten Wert $\boldsymbol{x}_0$ des Zustands reduziert wird, wobei eine Abweichung des Schlupfes $\lambda$ des Rades von dem vorbestimmten Schlupf $\lambda_0$ am Arbeitspunkt $(\lambda_0, \mu_0)$ reduziert wird. Idealerweise befindet sich das Rad-Fahrwerk-System während eines Bremsvorgangs am Arbeitspunkt $(\lambda_0, \mu_0)$, d.h. das Rad weist den Schlupf $\lambda_0$ auf, während der Zustand des Rad-Fahrwerk-Systems den vorbestimmten Wert $\boldsymbol{x}_0$ einnimmt und somit die Abweichung $\boldsymbol{x}$ gleich Null ist.

Da Abweichungen vom Arbeitspunkt, welche typischerweise während eines Bremsvorgangs auftreten können, nur einen geringen Teil der $\mu$-$\lambda$-Kurve, also nur einen sehr begrenzten Schlupfbereich umfassen, werden die jeweiligen Abweichungen im Folgenden als lineare Abweichungen von den jeweiligen Werten am Arbeitspunkt betrachtet.

Bei einer Linearisierung um den Arbeitspunkt der $\mu$-$\lambda$-Kurve können alle Parameter als Summe aus einem stationären Teil und einer kleinen Abweichung davon betrachtet werden:

$$\tilde{z}_A = z_{A0} + z_A$$

$$\tilde{x}_a = x_{a0} + x_a$$

$$\tilde{z}_a = z_{a0} + z_a$$

$$\tilde{\theta}_a = \theta_{a0} + \theta_a$$

$$\tilde{x}_b = x_{b0} + x_b$$

$$\tilde{z}_b = z_{b0} + z_b$$

$$\tilde{\theta}_b = \theta_{b0} + \theta_b$$

Die Eingangsgröße $\tilde{M}_{ay}$ sowie die Komponenten der Störgröße werden ebenfalls wie folgt in linearisierter Form formuliert:

$$\tilde{M}_{ay} = M_{ay0} + M_{ay}$$

$$\tilde{w} = w_0 + w$$

$$\tilde{\beta} = \beta_0 + \beta$$

Die sich damit ergebende linearisierte Version der Bewegungsgleichungen lautet somit:

$$m_A \ddot{z}_A = k_{fz}(\dot{z}_a - \dot{z}_A) + c_{fz}(z_a - z_A)$$

$$m_a \ddot{x}_a = F_{abx} - k_{fx}\dot{x}_a - c_{fx}x_a$$

$$m_a \ddot{z}_a = F_{abz} - k_{fz}(\dot{z}_a - \dot{z}_A) - c_{fz}(z_a - z_A)$$

$$l_{ay}\ddot{\theta}_a = M_{aby} - M_{ay}$$

$$m_b \ddot{x}_b = F_{bcx} - F_{abx}$$

$$m_b \ddot{z}_b = F_{bcz} - F_{abz}$$

$$l_{by}\ddot{\theta}_b = M_{bcy} - M_{aby}$$

$$m_c \ddot{x}_c = F_{csx} - F_{cx}$$

Die linearisierte Version der internen Kräfte und das Moment bzw. Drehmoment in der Reifenseitenwand zwischen $m_a$ und $m_b$ lautet:

$$F_{abx} = k_{bx}(\dot{x}_b - \dot{x}_a) + c_{bx}(x_b - x_a) - k_{bz}\Omega(z_b - z_a) - k_{bz}\dot{\theta}_a(z_{b0} - z_{a0})$$

$$F_{abz} = k_{bz}(\dot{z}_b - \dot{z}_a) + c_{bz}(z_b - z_a) + k_{bx}\Omega(x_b - x_a) + k_{bx}\dot{\theta}_a(x_{b0} - x_{a0})$$

$$M_{aby} = k_{b\theta}(\dot{\theta}_b - \dot{\theta}_a) + c_{b\theta}(\theta_b - \theta_a)$$

Die linearisierte Version der externen Kräfte und Moment am Reifengürtel lautet:

$$F_{bcx} = F_{cx} + \beta \cdot F_{cz0}$$

$$F_{bcz} = -\beta \cdot F_{cx} + F_{cz} = -\beta \cdot F_{BF} + F_{cz}$$

$$M_{bcy} = M_{cy} - r_{dyn}F_{bcx} = M_{cy} - r_{dyn}(F_{cx} + \beta \cdot F_{cz0})$$

Die linearisierte Version der Kraft im tangentialen Feder-Dämpfer-Element zwischen $m_b$ und $m_c$ lautet:

$$F_{cx} = k_{rx}(\dot{x}_c - \dot{x}_b) + c_{rx}(x_c - x_b)$$

Die linearisierte Version der Kräfte und Moment im Reifenlatsch lautet:

$$F_{cN} = F_{cz} = c_{rz}(w - z_a)$$

$$F_{csx} = \mu \cdot F_{cN} = f(\lambda) \cdot F_{cN}$$

$$F_{csx} = \mu F_{cN0} + \mu_0 F_{cN} = C_\lambda \lambda F_{cN0} + \mu_0 F_{cN} = C_\lambda \left( \frac{r_{dyn}\dot{\theta}_b - x_c}{V_{ax}} \right) F_{cN0} + \mu_0 c_{rz}(w - z_b)$$

$$M_{cy} = r_{dyn}f_r F_{cN}$$

mit

$$c_{rz} = 2q_{Fz2}\rho_{z0} + q_{Fz1}$$

wobei $\rho_{z0}$ die vertikale Reifenverformung, die der Radlast entspricht, ist und $V_{ax}$ die aktuelle Geschwindigkeit der Radmitte ist.

Gemäß der ersten bevorzugten Ausführungsform wird der Zustand durch einen $16 \times 1$ Zustandsvektor $x(t)$ beschrieben, wobei die Komponenten die linearisierten Abweichungen der Werte der entsprechenden Freiheitsgrade von den entsprechenden vorbestimmten Werten am Arbeitspunkt umfassen. Insbesondere setzt sich gemäß dieser bevorzugten Ausführungsform der Zustandsvektor aus 8 Weg- bzw. Positionskomponenten und 8 Geschwindigkeitskomponenten zusammen.

$$x(t) = [z_A \quad x_a \quad z_a \quad \theta_a \quad x_b \quad z_b \quad \theta_b \quad x_c \quad \dot{z}_A \quad \dot{x}_a \quad \dot{z}_a \quad \dot{\theta}_a \quad \dot{x}_b \quad \dot{z}_b \quad \dot{\theta}_b \quad \dot{x}_c]^T$$

Gemäß der ersten bevorzugten Ausführungsform ergibt sich eine $16 \times 16$ Systemmatrix $A(t)$ aus der linearisierten Version der Bewegungsgleichungen, welche die Dynamik bzw. die Eigendynamik des Rad-Fahrwerk-Systems beschreibt. Es handelt sich bei der Systemmatrix $A(t)$ um eine quadratische Matrix, wobei die Anzahl der Dimensionen in jeder Richtung der Dimension des Zustandsvektors entspricht. Weist der Zustandsvektor eine andere Anzahl von Dimensionen auf, so ist auch die Dimensionierung der Systemmatrix entsprechend anzupassen. Solange man eine Beeinflussung des Rad-Fahrwerk-System (z.B. über eine Eingangsgröße eines Regelkreises oder äußere Störungen) außer Acht lässt, wird das System mit der Differentialgleichung

$$\dot{x}(t) = A \cdot x(t)$$

beschrieben. Diese Gleichung beschreibt somit die Eigendynamik des Rad-Fahrwerk-Systems in einer linearisierten Form. Erfindungsgemäß wird aber auf die Dynamik des Systems gezielt Einfluss genommen, indem eine Bremsmomentänderung u(t) bewirkt wird. Außerdem wirken während der Fahrt z.B. durch Fahrbahnunebenheiten Störungen $w(t)$ auf das Rad-Fahrwerk-System, die dessen Bewegung ebenfalls beeinflussen.

Die (äußeren) Einflüsse auf das System sind gemäß der ersten bevorzugten Ausführungsform die Bremsmomentänderung $u(t)$ am Rad als Eingangssignal sowie die Höhe $w$ und die Steigung $\beta$ der Fahrbahnunebenheit als Störung $w(t) = [w\ \beta]^T$. Vorzugsweise ist die Bremsmomentänderung am Rad die einzige Eingangsgröße der Regelung. Mit einer Eingangsmatrix $B$ und einer Störeingangsmatrix $E$ wird der Zustandsraum folglich durch die Zustandsdifferenzialgleichung

$$\dot{x}(t) = A \cdot x(t) + B \cdot u(t) + E \cdot w(t)$$

beschrieben. Mit einer Durchgangsmatrix $D$ und einer Störausgangsmatrix $F$ des Systems ergibt sich als Ausgangsgleichung:

$$y(t) = C \cdot x(t) + D \cdot u(t) + F \cdot w(t)$$

Dabei ist die Eingangsmatrix $B(t)$ eine $16 \times 1$ Matrix der Form

$$B(t) = \begin{bmatrix} 0 & 0 & 0 & 0 & 0 & 0 & 0 & 0 & 0 & 0 & 0 & -\dfrac{1}{I_{ay}} & 0 & 0 & 0 & 0 \end{bmatrix}^T$$

und beschreibt den Einfluss der Bremsmomentänderung $u(t)$ auf den Zustand bzw. die Abweichung $x(t)$.
Die Störeingangsmatrix $E(t)$ lautet:

$$E(t) = \begin{bmatrix} 0 & 0 & 0 & 0 & 0 & 0 & 0 & 0 & 0 & 0 & 0 & 0 & 0 & \dfrac{c_{rz}}{m_b} & \dfrac{r_{dyn}f_r c_{rz}}{I_{by}} & \dfrac{\mu_0 c_{rz}}{m_c} \\ 0 & 0 & 0 & 0 & 0 & 0 & 0 & 0 & 0 & 0 & 0 & 0 & \dfrac{F_{cN0}}{m_b} & -\dfrac{F_{BF}}{m_b} & 0 & 0 \end{bmatrix}^T$$

und beschreibt den Einfluss der Störgröße $w(t) = [w\ \beta]^T$ auf die Abweichung $x$.
Gemäß Fig. 2 sind in der ersten bevorzugten Ausführungsform 8 messbare Sensorsignale aus dem System vorhanden, mit welchen der $8 \times 1$ Ausgangsvariablenvektor bzw. die Ausgangsgröße $y(t)$ bestimmt werden kann:

$$y(t) = \begin{bmatrix} z_A & x_a & z_a & \theta_a & \dot{z}_A & \dot{x}_a & \dot{z}_a & \dot{\theta}_a \end{bmatrix}^T$$

Die Ausgangsmatrix $C(t)$ lautet

$$C(t) = \begin{bmatrix} 1 & 0 & 0 & 0 & 0 & 0 & 0 & 0 & 0 & 0 & 0 & 0 & 0 & 0 & 0 & 0 \\ 0 & 1 & 0 & 0 & 0 & 0 & 0 & 0 & 0 & 0 & 0 & 0 & 0 & 0 & 0 & 0 \\ 0 & 0 & 1 & 0 & 0 & 0 & 0 & 0 & 0 & 0 & 0 & 0 & 0 & 0 & 0 & 0 \\ 0 & 0 & 0 & 1 & 0 & 0 & 0 & 0 & 0 & 0 & 0 & 0 & 0 & 0 & 0 & 0 \\ 0 & 0 & 0 & 0 & 0 & 0 & 0 & 0 & 1 & 0 & 0 & 0 & 0 & 0 & 0 & 0 \\ 0 & 0 & 0 & 0 & 0 & 0 & 0 & 0 & 0 & 1 & 0 & 0 & 0 & 0 & 0 & 0 \\ 0 & 0 & 0 & 0 & 0 & 0 & 0 & 0 & 0 & 0 & 1 & 0 & 0 & 0 & 0 & 0 \\ 0 & 0 & 0 & 0 & 0 & 0 & 0 & 0 & 0 & 0 & 0 & 1 & 0 & 0 & 0 & 0 \end{bmatrix}$$

Sie beschreibt den Zusammenhang zwischen der Abweichung *x* und der Ausgangsgröße *y*.

Mit diesem Zustandsmodell kann beispielsweise eine Übertragungsfunktion zwischen einer beliebigen Eingangs- und Ausgangsgröße ermittelt werden. Eine derartige Übertragungsfunktion kann beispielsweise zur Bereitstellung eines Steuersignals dienen, mit welchem die Abweichung *x* mittels einer auf dem Steuersignal basierenden Bremsmomentänderung *u* reduziert werden kann.

Da unter Umständen der Wert des momentanen (absoluten) Zustands $\tilde{x}$ bzw. der Abweichung *x* nicht bezüglich aller Freiheitsgrade unmittelbar messbar ist oder ein vollständiges Bestimmen des Zustands hinsichtlich aller Freiheitsgrade beispielsweise aus technischen Gründen nicht sinnvoll bzw. sehr aufwendig sein könnte, kann ein Zustandsbeobachter zur Schätzung solcher Zustände sinnvoll und/oder notwendig sein. Insbesondere kann dadurch unter Umständen eine aufwendige Messung der Störgrößen *w* und *β*, also der Höhe und der Steigung einer Fahrbahnunebenheit unterbleiben.

Gemäß der ersten bevorzugten Ausführungsform wird zur Bereitstellung des Steuersignals das oben-genannte vollständige Zustandsmodell berücksichtigt, worin die Schwingungen aller vier Massen, d.h. die anteilige Masse des Aufbaus $m_A$, die reifengefederte Masse $m_a$ zusammen mit einer anteiligen Masse des Reifens, welche mit der Felge rotiert, die Reifengürtelmasse $m_b$ und die Kontaktmasse $m_c$, und die Kraftschwankungen zwischen den Massen berücksichtigt werden.

Jedoch haben die Erfinder erkannt, dass beispielsweise Achsschwingungen und eine Torsionsschwingung des Rades (d.h. gleichphasige Schwingung der reifengefederten Masse und des Reifengürtels) die größten Amplituden während der Bremsung aufweisen, während eventuell anderweitig auftretende Schwingungen lediglich kleinere Amplituden aufweisen oder zumindest einen geringeren Einfluss auf die Dynamik des Rad-Fahrwerk-Systems bzw. das Bremsverhalten haben. Die Erfinder haben somit erkannt, dass das Zustandsmodell gemäß der ersten bevorzugten Ausführungsform hinsichtlich der berücksichtigten Freiheitsgrade bzw. Dimensionen reduziert werden kann, ohne dass notwendigerweise große Verluste der Systemgüte auftreten.

In der zweiten bevorzugten Ausführungsform wird solch ein reduziertes Zustandsmodell erläutert. **Fig. 4** zeigt eine schematische Darstellung eines reduzierten Zustandsmodells bzw. Ersatzmodells des Rad-Fahrwerk-Systems in einer zweiten bevorzugten Ausführungsform, wobei gemäß der zweiten bevorzugten Ausführungsform die reifengefederte Masse zusammen mit dem Reifengürtel als ein komplettes Bauteil mit der Masse $m_R$ betrachtet wird. Ferner bezeichnet $m_A$ die anteilige Masse des Aufbaus und $I_{Ry}$ das Massenträgheitsmoment der drehenden Masse des Rades.

Die Bewegungsgleichungen des reduzierten Zustandsmodells gemäß der zweiten bevorzugten Ausführungsform stellen sich durch die folgenden vier Bewegungsgleichungen dar:

$$m_A \ddot{\tilde{z}}_A = k_{fz}\left(\dot{\tilde{z}}_R - \dot{\tilde{z}}_A\right) + c_{fz}(\tilde{z}_R - \tilde{z}_A)$$

$$m_R \ddot{\tilde{x}}_R = \tilde{F}_{crx} - k_{fx}\dot{\tilde{x}}_R - c_{fx}\tilde{x}_R$$

$$m_R \ddot{\tilde{z}}_R = \tilde{F}_{crz} - k_{fz}\left(\dot{\tilde{z}}_R - \dot{\tilde{z}}_A\right) - c_{fz}(\tilde{z}_R - \tilde{z}_A)$$

$$I_{Ry} \ddot{\tilde{\theta}}_R = \tilde{M}_{cry} - \tilde{M}_{Ry}$$

Die externen Kräfte und das Drehmoment am Rad lauten dabei:

$$\bar{F}_{crx} = \cos\bar{\beta} \cdot \bar{F}_{cx} + \sin\bar{\beta} \cdot \bar{F}_{cz}$$

$$\bar{F}_{crz} = -\sin\bar{\beta} \cdot \bar{F}_{cx} + \cos\bar{\beta} \cdot \bar{F}_{cz}$$

$$\widetilde{M}_{cry} = r_{dyn}f_r\bar{F}_{cz} - r_{dyn}\bar{F}_{crx}$$

Die Normal- und Tangentialkräfte zwischen Rad bzw. Reifen und Fahrbahn lauten wie im Zustandsmodell gemäß der ersten bevorzugten Ausführungsform:

$$\bar{F}_{cN} = \bar{F}_{cz} = q_{Fz2}\rho_z^2 + q_{Fz1}\rho_z$$

$$\tilde{F}_{csx} = \tilde{F}_{cx} = \mu \cdot \tilde{F}_{cN} = f(\lambda) \cdot \tilde{F}_{cN}$$

Die Verformung des Reifes wird durch folgenden Ausdruck bestimmt:

$$\rho_z = (\widetilde{w} - \tilde{z}_R)\cos\bar{\beta}$$

Die Linearisierung um den stationären Arbeitspunkt ($\lambda_0$, $\mu_0$) auf der µ-λ-Kurve wird auf gleiche Weise wie für die erste bevorzugte Ausführungsform durchgeführt. Die linearisierte Version der Bewegungsgleichungen lautet demnach gemäß der zweiten bevorzugten Ausführungsform:

$$m_A\ddot{z}_A = k_{fz}(\dot{z}_R - \dot{z}_A) + c_{fz}(z_R - z_A)$$

$$m_R\ddot{x}_R = F_{crx} - k_{fx}\dot{x}_R - c_{fx}x_R$$

$$m_R\ddot{z}_R = F_{crz} - k_{fz}(\dot{z}_R - \dot{z}_A) - c_{fz}(z_R - z_A)$$

$$I_{Ry}\ddot{\theta}_{Ry} = M_{cry} - M_{Ry}$$

Die linearisierte Version der Kräfte und des Moments bzw. Drehmoments gemäß der zweiten bevorzugten Ausführungsform lautet:

$$F_{crx} = F_{cx} + \beta \cdot F_{cz0}$$

$$F_{crz} = -\beta F_{cx0} + F_{cz} = -\beta F_{BF} + F_{cz}$$

$$M_{cry} = r_{dyn}f_rF_{cz}$$

$$F_{cN} = F_{cz} = c_{rz}(w - z_R)$$

$$F_{csx} = F_{cx} = \mu F_{cN0} + \mu_0 F_{cN} = C_\lambda\lambda F_{cN0} + \mu_0 F_{cN} = C_\lambda\frac{r_{dyn}\dot{\theta}_R}{V_{Rx}}F_{cN0} + \mu_0 c_{rz}(w - z_r)$$

mit

$$c_{rz} = 2q_{Fz2}\rho_{z0} + q_{Fz1} \quad .$$

wobei $\rho_{z0}$ die vertikale Reifenverformung, die der Radlast entspricht, ist und $V_{Rx}$ die aktuelle Geschwindigkeit der Radmitte ist.

Der Zustandsvektor setzt sich gemäß der zweiten bevorzugten Ausführungsform aus einem 4 × 1 Wegvektor und einem 4 × 1 Geschwindigkeitsvektor zusammen:

$$x(t) = \begin{bmatrix} z_A & x_R & z_R & \theta_R & \dot{z}_A & \dot{x}_R & \dot{z}_R & \dot{\theta}_R \end{bmatrix}^T$$

Die 8 × 8 Systemmatrix $A(t)$ ergibt sich aus der linearisierten Version der Bewegungsgleichungen.

Das Eingangssignal $u(t)$ und die Störung $w(t)$ bleiben unverändert im Vergleich zur ersten bevorzugten Ausführungsform.

Die 8 × 1 Eingangsmatrix $B(t)$ lautet:

$$B(t) = \begin{bmatrix} 0 & 0 & 0 & 0 & 0 & 0 & 0 & -\dfrac{1}{I_{Ry}} \end{bmatrix}^T$$

Die 8 × 2 Störeingangsmatrix $E(t)$ lautet:

$$E(t) = \begin{bmatrix} 0 & 0 & 0 & 0 & 0 & \dfrac{\mu_0 c_{rz}}{m_R} & \dfrac{c_{rz}}{m_R} & \dfrac{r_{dyn}f_r c_{rz}}{m_R} \\ 0 & 0 & 0 & 0 & 0 & \dfrac{F_{cN0}}{m_R} & -\dfrac{F_{BF}}{m_R} & 0 \end{bmatrix}^T$$

Der Zustandsraum bzw. das Zustandsmodell gemäß der zweiten bevorzugten Ausführungsform birgt den Vorteil, dass der (absolute) Wert des Zustands $\tilde{x}$ bzw. die Abweichung $x$ mit vertretbarem Aufband ermittelt werden können. D.h. dass der Wert des Zustands hinsichtlich aller Freiheitsgrade mit vertretbarem Aufwand ermittelt bzw. gemessen werden kann.

Eine dritte bevorzugte Ausführungsform basiert auf der zweiten bevorzugten Ausführungsform und wurde um die längsdynamische Eigenschaft eines gesamten Fahrzeugs erweitert.

Wie bereits in der zweiten bevorzugten Ausführungsform wird auch in der dritten bevorzugten Ausführungsform der Reifengürtel nicht mehr separat mit drei Freiheitsgraden betrachtet, sondern zusammen mit der reifengefederten Masse als Einheit des Rades mit der Masse $m_R$ betrachtet. Das Rad hat dabei drei Freiheitsgrade, nämlich jeweils in der Längs-, Vertikal- und Drehrichtung.

Der Freiheitsgrad der Fahrzeugmasse bzw. Aufbaumasse bzw. der anteiligen Masse des Aufbaus $m_A$ sowie die Federsteifigkeiten und Dämpfungen zwischen dem Fahrzeugaufbau und dem Rad bleiben im Vergleich zu den ersten beiden bevorzugten Ausführungsformen unverändert. Auch werden die Eingangs- und Ausgangsgrößen der zweiten bevorzugten Ausführungsform in gleicher Weise in der dritten bevorzugten Ausführungsform verwendet.

Die internen Kräfte in der Radaufhängung, d.h. zwischen den Massen $m_A$ und $m_R$ lauten:

$$F_{ARx} = k_{fx}\dot{x}_R + c_{fx}x_R$$

$$F_{ARz} = k_{az}(\dot{z}_R - \dot{z}_A) + c_{fz}(z_R - z_A)$$

Aufgrund eines Bremsnickens können Kopplungseffekte zwischen der Längs- und Vertikaldynamik des Fahrzeugs und/oder des Aufbaus und/oder des Rades während eines Bremsmanövers auftreten. Um derartige Koppelungseffekte in dem Zustandsmodell gemäß der dritten bevorzugten Ausführungsform abbilden zu können, wird das Zustandsmodell um die längsdynamische Eigenschaft des Gesamtfahrzeugs erweitert.

Die Abbremsung *a* des Gesamtfahrzeugs während eines Bremsvorgangs, wie etwa während eines ABS-Bremsvorgangs ergibt sich wie im Folgenden beschrieben aus der gesamten Bremskraft der Vorder- und Hinterachse $F_{B,v} + F_{B,h}$ und der Fahrzeugmasse bzw. der Gesamtmasse des Fahrzeugs $m_{Fzg}$:

$$a = \frac{-\ddot{x}_{Fzg}}{g} = \frac{F_{B,v} + F_{B,h}}{m_{Fzg} \cdot g} = \frac{(1 + DB) \cdot F_{B,v}}{m_{Fzg} \cdot g}$$

wobei $DB = F_{B,h}/F_{B,v}$ den Bremskraftverteilungsfaktor darstellt. Die Abbremsung *a* bzw. die Bremsverzögerung bzw. Bremsbeschleunigung wurde dabei auf die Erdbeschleunigung normiert.

Eine Kraft $F_B$ am jeweiligen Radumfang ergibt sich durch Division eines an der Bremsscheibe wirkenden Bremsmomentes $M_{Bb}$ durch den dynamischen Rollhalbmesser des Rades $r_{dyn}$. Für die ganze Achse ist der Betrag zu verdoppeln, wenn an der Achse zwei Räder ausgebildet bzw. angebracht sind, wovon hier ausgegangen werden soll.

$$F_B = 2 \cdot \frac{M_{Bb}}{r_{dyn}} = \left(\frac{2}{r_{dyn}}\right) \cdot p_{Hyd} \cdot A_{Bk} \cdot r_{Bs,med} \cdot C^*$$

mit

$$r_{Bs,med} = \frac{1}{2} \cdot (d_{Bs} - d_{Bk})$$

$$C^* = 2 \cdot \mu_{Bb}$$

wobei die genannten Parameter folgendes darstellen:

$A_{Bk}$: die wirksame Kolbenfläche,
$r_{Bs,med}$: der mittlere Reibradius bzw. der Wirkradius der Bremse,
$d_{Bs}$: der Scheibendurchmesser,
$d_{Bk}$: der Kolbendurchmesser,
$\mu_{Bb}$: der Reibwert zwischen der Bremsscheibe und dem Bremsbelag.

In einem Sonderfall der Festabstimmung mit $p_{Hyd,v} = p_{Hyd,h}$, das heißt dass der Hydraulikdruck zur Bremsung der Vorderräder gleich dem Hydraulikdruck zur Bremsung der Hinterräder ist, und mit den Annahmen, dass der dynamische Rollhalbmesser des Rades $r_{dyn}$ und der Reibwert zwischen der Bremsscheibe und dem Bremsbelag für die Vorder- und Hinterachse gleich ist, d.h. $r_{dyn,v} = r_{dyn,h}$ und $\mu_{Bb,v} = \mu_{Bb,h}$, ergibt sich der Bremskraftverteilungsfaktor zu:

$$DB = \frac{A_{Bk,v} \cdot (d_{Bs,v} - d_{Bk,v})}{A_{Bk,h} \cdot (d_{Bs,h} - d_{Bk,h})}$$

Geht man anstatt dessen beispielhaft von einem Bremskraftverteilungsfaktor *DB* von 0,44 aus, überträgt die Vorderachse des Fahrzeugs ca. 70% der Gesamtbremskraft.

Eine Achslastverschiebung kann dabei eine Nickbewegung des Aufbaus verursachen und zu einer dynamischen Radlaständerung führen. Mit Berücksichtigung einer Radlastverlagerung auf die Vorderachse und eines Bremsnickausgleichs ergibt sich die dynamische Radlaständerung $F_{z,dyn}$ im Viertelfahrzeugmodell bzw. Zustandsmodell zu:

$$F_{z,dyn} = \frac{1}{2} \cdot (1 + DB) \cdot F_{B,v} \cdot \frac{h}{l} = (1 + DB) \cdot F_{cx} \cdot \frac{h}{l} = k_1 \cdot F_{cx}$$

Mit dieser Erweiterung des Viertelfahrzeugmodells um die längsdynamische Eigenschaft des Gesamtfahrzeugs ist die dynamische Radlaständerung $F_{z,dyn}$ nicht mehr eine unabhängige Eingangsgröße des Zustandsmodells, sondern mit der durch die Bremsmomentänderung $u$ bzw. $M_{ay}$ erzeugten Umfangskraft(änderung) im Reifenlatsch verbunden. Die Anzahl der unabhängigen Eingangsgrößen des Zustandsmodells wird somit um eine Eingangsgröße bzw. eine Dimension reduziert. Nun dienen nur das Bremsmoment bzw. die Bremsmomentänderung am Rad $M_{ay}$ und einer Fußpunkterregung der Fahrbahn bzw. Störung aufgrund einer Fahrbahnunebenheit **w** als Anregungsquelle des Berechnungsmodells.

Die Normal- und Tangentialkraft zwischen Reifen und Fahrbahn lautet gemäß der dritten bevorzugten Ausführungsform:

$$\tilde{F}_{cz} = c_{rz}(\tilde{w} - \tilde{z}_R) + k_{rz}(\dot{\tilde{w}} - \dot{\tilde{z}}_R)$$

$$\tilde{F}_{cx} = \tilde{\mu} \cdot F_{cN} = f(\lambda) \cdot F_{cN}$$

Die Bewegungsgleichungen der jeweiligen Massen lauten:

$$m_A \ddot{\tilde{z}}_A = \tilde{F}_{ARz} - F_{z,dyn}$$

$$m_R \ddot{\tilde{x}}_R = \tilde{F}_{cx} - \tilde{F}_{ARx}$$

$$m_R \ddot{\tilde{z}}_R = \tilde{F}_{cz} - \tilde{F}_{ARz}$$

$$l_{Ry} \ddot{\tilde{\theta}}_R = -r_{dyn} \tilde{F}_{cx} - \tilde{M}_{Ry}$$

Die Linearisierung um einen stationären Arbeitspunkt $(\lambda_0, \mu_0)$ auf der $\mu$-$\lambda$-Kurve wird ebenfalls für die Erstellung der Bewegungsgleichungen durchgeführt. Im realen Fall kann dieser stationäre Arbeitspunkt $(\lambda_0, \mu_0)$ frei definiert werden. Beispielsweise kann der Arbeitspunkt in gleicher oder ähnlicher Weise definiert werden, wie dies bei einem herkömmlichen ABS-Bremssystem der Fall ist.

Gemäß der dritten bevorzugten Ausführungsform wird der Arbeitspunkt als kurz vor dem maximalen Kraftschlussbeiwert bzw. $\mu_0 = 0{,}95 \cdot \mu_{max}$ angenommen bzw. definiert. Diese Randbedingung oder Vorgabe ist auch in jeder anderen bevorzugten Ausführungsform möglich.

Die linearisierte Version der Kräfte und des Drehmoments lautet:

$$F_{ARx} = k_{Rx} \dot{x}_R + c_{fx} x_R$$

$$F_{ARz} = k_{fz}(\dot{z}_R - \dot{z}_A) + c_{fz}(z_R - z_A)$$

$$F_{cz} = c_{rz}(w - z_R) + k_{rz}(\dot{w} - \dot{z}_R)$$

$$F_{cx} = \mu F_{cz0} + \mu_0 F_{cz} = C_\lambda \lambda F_{cz0} + \mu_0 c_{rz} z + \mu_0 k_{rz}(\dot{w} - \dot{z}_R)$$

wobei $F_{cz0}$ die statische Radlast ist und $V_{Rx}$ die aktuelle Geschwindigkeit der Radmitte bzw. des Radmittelpunkts ist.

Die linearisierte Version der Bewegungsgleichungen lautet nun:

$$m_A \ddot{z}_A = F_{ARz} - F_{z,dyn}$$

$$m_R \ddot{x}_R = F_{cx} - F_{ARx}$$

$$m_R \ddot{z}_R = F_{cz} - F_{ARz}$$

$$I_{Ry} \ddot{\theta}_R = -r_{dyn} F_{cx} - M_{Ry}$$

Der 8× 1 Zustandsvektor bzw. der Vektor der Abweichung des Zustands **x** setzt sich dabei aus einem $4 \times 1$ Wegvektor und einem $4 \times 1$ Geschwindigkeitsvektor zusammen:

$$x(t) = \begin{bmatrix} z_A & x_R & z_R & \theta_R & \dot{z}_A & \dot{x}_R & \dot{z}_R & \dot{\theta}_R \end{bmatrix}^T$$

Die $8 \times 8$ Systemmatrix A(t) ergibt sich aus der linearisierten Version der Bewegungsgleichungen und nimmt gemäß der dritten bevorzugten Ausführungsform die folgende Form an:

$$A = \begin{bmatrix} 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 1 & 0 \\ 0 & 0 & 0 & 0 & 0 & 0 & 0 & 1 \\ -\dfrac{c_{fz}}{m_A} & 0 & \dfrac{c_{fz} - k_1 \mu_0 c_{rz}}{m_A} & 0 & -\dfrac{k_{fz}}{m_A} & 0 & \dfrac{k_{fz} - k_1 \mu_0 k_{rz}}{m_A} & \dfrac{k_1 C_\lambda r_{dyn} F_{cz0}}{V_x m_A} \\ 0 & -\dfrac{c_{fx}}{m_R} & -\dfrac{\mu_0 c_{rz}}{m_R} & 0 & 0 & -\dfrac{k_{fx}}{m_R} & -\dfrac{\mu_0 k_{rz}}{m_R} & \dfrac{C_\lambda r_{dyn} F_{cz0}}{V_x m_R} \\ \dfrac{c_{fz}}{m_R} & 0 & -\dfrac{c_{fz} + c_{rz}}{m_R} & 0 & \dfrac{k_{fz}}{m_R} & 0 & -\dfrac{k_{fz} + k_{rz}}{m_R} & 0 \\ 0 & 0 & \dfrac{r_{dyn} \mu_0 c_{rz}}{I_{Ry}} & 0 & 0 & 0 & \dfrac{r_{dyn} \mu_0 k_{rz}}{I_{Ry}} & -\dfrac{C_\lambda r_{dyn}^2 F_{cz0}}{V_x I_{Ry}} \end{bmatrix}$$

Die $8 \times 1$ Eingangsmatrix **B** lautet:

$$B = \begin{bmatrix} 0 & 0 & 0 & 0 & 0 & 0 & 0 & -\dfrac{1}{I_{Ry}} \end{bmatrix}^T$$

Die $8 \times 2$ Störeingangsmatrix **E** lautet:

$$E = \begin{bmatrix} 0 & 0 & 0 & 0 & \dfrac{k_1 \mu_0 c_{rz}}{m_A} & \dfrac{\mu_0 c_{rz}}{m_R} & \dfrac{c_{rz}}{m_R} & -\dfrac{r_{dyn} \mu_0 c_{rz}}{I_{Ry}} \\ 0 & 0 & 0 & 0 & \dfrac{k_1 \mu_0 k_{rz}}{m_A} & \dfrac{\mu_0 k_{rz}}{m_R} & \dfrac{k_{rz}}{m_R} & -\dfrac{r_{dyn} \mu_0 k_{rz}}{I_{Ry}} \end{bmatrix}^T$$

Die Ausgangsgröße y(t) wird durch einen Ausgangsgrößenvektor dargestellt, welcher gemäß der dritten bevorzugten Ausführungsform ein $4 \times 1$ Vektor ist und die folgende Form aufweist:

$$y(t) = \begin{bmatrix} \ddot{z}_A & \ddot{x}_R & \ddot{z}_R & \ddot{\theta}_R \end{bmatrix}^T$$

Die 4 × 8 Ausgangsmatrix *C* besteht aus den Zeilen 5 bis 8 der Systemmatrix A und ergibt sich folglich zu:

$$C = \begin{bmatrix} A_5 \\ A_6 \\ A_7 \\ A_8 \end{bmatrix}$$

Die 4 × 1 Durchgangsmatrix *D* besteht aus den Zeilen 5 bis 8 der Eingangsmatrix $B_A$ und ergibt sich folglich zu:

$$D = \begin{bmatrix} B_{A,5} \\ B_{A,6} \\ B_{A,7} \\ B_{A,8} \end{bmatrix}$$

Die 4 × 2 Störmatrix *F* besteht aus den Zeilen 5 bis 8 der Eingangsstörmatrix $B_B$ und ergibt sich folglich zu:

$$F = \begin{bmatrix} B_{B,5} \\ B_{B,6} \\ B_{B,7} \\ B_{B,8} \end{bmatrix}$$

Somit ist das reduzierte Zustandsraummodell gemäß der dritten bevorzugten Ausführungsform mit insgesamt 8 Zustandsgrößen und insbesondere 18 Parametern aufgebaut.

Im Folgenden wird anhand einer Analyse der Steuer- und Beobachtbarkeit für dieses reduzierte Zustandsmodell dargelegt, dass das Rad-Fahrwerk-System über die Ausgangsgrößen steuerbar bzw. regelbar und beobachtbar ist.

Eine Analyse nach dem KALMAN-Kriterium zeigt an, dass das System bzw. das reduzierte Zustandsmodell sowohl vollständig steuerbar sowie vollständig beobachtbar ist. D.h. alle Zustandsgrößen dieses Systems können durch die Eingangsgröße, d.h. durch die Bremsmomentänderung $u$ bzw. $M_{ay}$ gesteuert und durch die Messgrößen bzw. die Ausgangsgröße *y* beobachtet werden. Ein System ist vorzugsweise dann regelbar, wenn diese beiden Bedingungen erfüllt sind. Die Feststellung der vollständigen Steuerbarkeit und Beobachtbarkeit des Systems anhand von Kriterien kann eine Voraussetzung für einen Reglerentwurf sein.

Da die Zustandsgrößen bzw. die Abweichung *x* dieses reduzierten Zustandsraummodells bzw. Zustandsmodells gemäß der dritten bevorzugten Ausführungsform aufgrund des Mehraufwands vorzugsweise nicht direkt gemessen werden, können sie mit Hilfe eines Zustandsbeobachters aus den Messgrößen geschätzt werden. Ein Beobachter kann insbesondere dann entworfen werden, wenn das Referenzsystem über die vorhandenen Messgrößen beobachtbar ist. Daher ist die Feststellung der vollständigen Beobachtbarkeit anhand von Kriterien, die für das System geprüft werden, eine notwendige Voraussetzung für den Beobachterentwurf.

Der Entwurf des Zustandsbeobachters beschäftigt sich mit der Frage, wie aus einer Eingangsfolge bzw. Eingangsgröße bzw. aus dem Bremsmoment ($u_k$) und einer gemessenen Ausgangsgröße bzw. Ausgangsfolge ($y_k$) der Zustand $x_{k+m}$, $m > 0$ eines dynamischen Systems geschätzt werden kann.

Aufgrund des oben genannten Prinzips kommt wegen zu erwartenden, unbekannten, stochastischen Fahrbahnunebenheiten in der Regelstrecke bei einem Entwurf eines optimalen Zustandsreglers insbesondere ein Kaimanfilter zum Einsatz. In anderen Worten wird ein optimaler Zustandsbeobachter verwendet bzw. ermittelt, der die Zustände der Regelstrecke bzw. die Abweichung *x* schätzt und ein quadratisches Gütekriterium minimiert.

Dem Entwurf des Kalmanfilters liegen die Messung der Ausgangsgröße bzw. Ausgangsgrößen *y* und das Zustandsraummodell bzw. Zustandsmodell der Regelstrecke bzw. des Rad-Fahrwerk-Systems gemäß der dritten bevorzugten Ausführungsform zugrunde.

Gemäß der dritten bevorzugten Ausführungsform wird die vertikale Aufbaubeschleunigung $\ddot{z}_A$ mittels eines am und/oder im Aufbau angebrachten oder ausgebildeten Beschleunigungssensors gemessen. Ferner wird vorzugsweise mittels eines oder mehrerer Radbeschleunigungssensoren, welche im und/oder am Rad und/oder in und/oder an der Radaufhängung ausgebildet oder angebracht sind die longitudinale Radbeschleunigung $\ddot{x}_R$ sowie die vertikale Radbeschleunigung $\ddot{z}_R$ gemessen. Ferner wird vorzugsweise die Drehwinkelrate des Rades $\dot{\theta}_R$ insbesondere mittels eines am Rad angebrachten Drehbeschleunigungssensors direkt oder indirekt gemessen und/oder durch eine weitere Kontrolleinheit bereitgestellt, insbesondere sofern die Drehwinkelrate des Rades $\dot{\theta}_R$ bereits anderweitig gemessen und/oder ermittelt wird und daher im System ohnehin bekannt ist.

Die genannten Sensoren und das oben-erläuterte Zustandsraummodell können die Voraussetzungen hinsichtlich der Beobachtbarkeit und der Steuerbarkeit des Rad-Fahrwerk-Systems erfüllen.

Da das Zustandsraummodell zeitkontinuierlich ist und die Sensorsignale der Beschleunigungssensoren vorzugsweise zu diskreten Zeitpunkten bzw. Abtastzeiten in bestimmten Zeitabständen $T_a$ erfasst werden und die Berechnung auf Basis dieser erfassten Sensorsignale typischerweise mit einem Computerprogramm durchgeführt wird, kann eine zeitdiskrete Darstellung des Zustandsmodells bzw. des Zustandsraummodells vorteilhaft oder notwendig sein. Eine zeitdiskrete Darstellung des Zustandsraummodells kann beispielsweise auf einer Transformation des zeitkontinuierlichen Zustandsraummodells in ein zeitdiskretes Zustandsraummodell erfolgen.

Gemäß der dritten bevorzugten Ausführungsform ist das zeitdiskrete Zustandsraummodell, in welchem jeweils der Wert des Zustands $\tilde{x}$ bzw. die Abweichung $x$ zu diskreten Abtastzeiten in einem zeitlichen Abstand $T_a$ ermittelt wird, folgendermaßen definiert:

$$\Sigma : \begin{cases} x_{k+1} = \Phi x_k + \Gamma u_k + G w_k, & x(0) = x_0 \\ y_k = C x_k + D u_k + F w_k + v_k \end{cases}$$

mit

$$\Phi = e^{A T_a}$$

$$\Gamma = \int_0^{T_a} e^{A\tau} d\tau \, B$$

$$G = \int_0^{T_a} e^{A\tau} d\tau \, E$$

und dem Zustand $x \in \Re^n$, dem deterministischen Eingang $u \in \Re^p$, dem Ausgang $y \in \Re^r$, der Störung $w \in \Re^q$, einem Messrauschen v sowie den Matrizen $\Phi \in \Re^{n \times n}$, $\Gamma \in \Re^{n \times p}$, $G \in \Re^{n \times q}$, $C \in \Re^{r \times n}$, $D \in \Re^{r \times p}$ und $F \in \Re^{r \times q}$.

Ausgehend von diesem linearen, zeitinvarianten, zeitdiskreten System bzw. Zustandsmodell bzw. Zustandsraummodell wird der Kalmanfilter entworfen. Dem Entwurf des Kaimanfilters liegen die folgenden drei Annahmen zugrunde:

Bezüglich der Störung $w$ und des Messrauschens $v$ wird vorausgesetzt, dass gilt

$$E(v_k) = 0$$

$$E(w_k) = 0$$

$$E\left(v_k v_j^T\right) = \hat{R}\delta_{kj}$$

$$E\left(w_k w_j^T\right) = \hat{Q}\delta_{kj}$$

$$E\left(w_k v_j^T\right) = 0$$

mit $\hat{Q} \geq 0$, $\hat{R} \geq 0$ sowie $F\hat{Q}F^T + \hat{R} > 0$, dem Kroneckersymbol $\delta_{kj} = 1$ für $k = j$, $\delta_{kj} = 0$ für $k \neq j$ und dem Erwartungswert $E(...)$. Dabei sind $\hat{Q}$ als Kovarianzmatrix der Störung $w$ und $\hat{R}$ als Kovarianzmatrix des Messrauschens $v$ Diagonalmatrizen.

Der Erwartungswert des Anfangswertes bzw. des vorbestimmten Wertes $x_0$ des Zustands und die Kovarianzmatrix des Anfangsfehlers sind durch

$$E(x_0) = m_0$$

$$E([x_0 - \hat{x}_0][x_0 - \hat{x}_0]^T) = P_0 \geq 0$$

mit dem Schätzwert $\hat{x}_0$ des Anfangswerts $x_0$ gegeben.

Die Störung $w_k$, $k \geq 0$ und das Messrauschen $v_l$, $l \geq 0$ sind mit dem Anfangswert $x_0$ nicht korreliert. Es gilt

$$E(w_k x_0^T) = 0$$

$$E(v_l x_0^T) = 0$$

Die Messrauschen-Kovarianzmarix $\hat{R}$ kann beispielsweise durch die gemessenen Signale bzw. Sensorsignale der jeweiligen Messkanäle bei stehendem Rad-Fahrwerk-System bzw. Fahrzeug bestimmt werden. In ähnlicher Weise kann beispielsweise die Störung-Kovarianzmarix $\hat{Q}$ durch die gemessenen Signale der jeweiligen Messkanäle beim auf der Fahrbahnoberfläche freirollenden Reifen-Fahrwerk-System bestimmt werden.

Die derart ermittelte Messrauschen-Kovarianzmarix $\hat{R}$ und Störung-Kovarianzmarix $\hat{Q}$ kann beispielsweise einmal bestimmt werden und dann in der Kontrolleinheit hinterlegt werden. Alternativ können die Messrauschen-Kovarianzmarix $\hat{R}$ und die Störung-Kovarianzmarix $\hat{Q}$ während der Benutzung des Fahrzeugs bei stehendem Fahrzeug bzw. bei freirollender Fahrt ermittelt werden. Dies kann beispielsweise immer dann geschehen, wenn das Fahrzeug steht bzw. frei rollt, oder in vorbestimmten Zeitabständen. Eine regelmäßige Messung der Messrauschen-Kovarianzmarix $\hat{R}$ und der Störung-Kovarianzmarix $\hat{Q}$ kann den Vorteil bieten, dass die momentanen Fahrbahngegebenheiten, wie etwa die Rauigkeit und/oder Unebenheit der Fahrbahn in besonders effizienter Weise berücksicht werden können, da beispielsweise eine fortlaufende Aktualisierung der Messrauschen-Kovarianzmarix $\hat{R}$ und der Störung-Kovarianzmarix $\hat{Q}$ erfolgen kann.

Gemäß der dritten bevorzugten Ausführungsform verwendet der Kalmanfilter das Zustandsmodell sowie die Eingangs- und Ausgangssignale des Rad-Fahrwerk-Systems, um die Systemzustände bzw. die Abweichung $x$ zu berechnen bzw. zu schätzen. Jedoch kann der Kalmanfilter dafür nicht auf alle Eingangssignale zugreifen, da die Störgrößen $w$ und $\beta$ nicht bekannt sind bzw. nicht ermittelt werden bzw. nicht ermittelt werden können. Das Eingangssignal, d.h. das Bremsmoment $u$ welches durch den angesteuerten Aktor, nämlich die Bremsanlage, erzeugt wird, ist im System bekannt, während die anderen Eingangssignale, die als Störgrößen wirken, unbekannt sind. Aus diesem Grund können die aus dem Kalmanfilter geschätzten Werte des Zustands bzw. die geschätzte Abweichung $\hat{x}_k$ von dem vorbestimmten Wert des Zustands $x_0$ von der tatsächlichen Abweichung $x_k$ abweichen.

Die Unterschiede der geschätzten Abweichung $\hat{x}_k$ von dem vorbestimmten Wert des Zustands $x_0$ von der tatsächlichen Abweichung $x$ werden, wenn sie im System aufgrund der Iteration bekannt werden, mit einer Kalman-Verstärkungsmatrix multipliziert und mit den geschätzten Zuständen überlagert, um eventuelle Ungenauigkeiten zu korrigieren und die geschätzte Abweichung $\hat{x}_k$ anzupassen. Die Verstärkungen werden in jeder Iterationsschleife aktualisiert und konvergieren vorzugsweise gegen einen stationären Endwert.

Die Messrauschen-Kovarianzmarix $\hat{R}$ und die Störung-Kovarianzmarix $\hat{Q}$ werden auch zur Berücksichtigung von Störungen des Prozesses und der verwendeten Sensoren eingesetzt.

Die optimale Schätzung von $x_k$ unter Berücksichtigung von $0, \cdots, j$ Messungen wird mit $\hat{x}(k|j)$ bezeichnet. Führt man die Abkürzung $\hat{x}_{k+1} = \hat{x}(k+1|k)$ ein, errechnet sich die optimale Schätzung $\hat{x}_{k+1}$ des Zustandes $x_{k+1}$ des Rad-Fahrwerk-Systems gemäß des zeitdiskreten Zustandsraummodells der dritten bevorzugten Ausführungsform unter Berücksichtigung von $I = 0, \cdots, k$ Messungen nach der Iterationsvorschrift

$$\hat{x}_{k+1} = \Phi \hat{x}_k + \Gamma u_k + \Phi \hat{P}_k C^T \left( C \hat{P}_k C^T + FQF^T + R \right)^{-1} (y_k - C\hat{x}_k - Du_k)$$

mit der Kovarianzmatrix des Schätzfehlers

$$P(k+1|k) = \Phi P(k|k-1)\Phi^T + G\hat{Q}G^T$$
$$- \Phi P(k|k-1)C^T \left( C P(k|k-1)C^T + F\hat{Q}F^T + \hat{R} \right)^{-1} C P(k|k-1)\Phi^T$$

und den Anfangswerten $\hat{x}(0|-1) = x_0$ und $P(0|-1) = P_0$. Beispielsweise kann als Anfangswert $P_0 = 0$ gewählt werden.

Der vorbestimmte Wert $x_0$ des Zustands kann beispielsweise wie folgt gewählt werden

$$x_0 = \begin{bmatrix} z_{A0} & x_{R0} & z_{R0} & \theta_{R0} & \dot{z}_{A0} & \dot{x}_{R0} & \dot{z}_{R0} & \dot{\theta}_{R0} \end{bmatrix}^T$$

wobei die einzelnen Komponenten die jeweiligen vorbestimmten Werte hinsichtlich der entsprechenden Freiheitsgrade darstellen, welche beispielsweise die folgenden Werte aufweisen können:

$$z_{A0} = -\rho_0$$

$$x_{R0} = 0$$

$$z_{R0} = -\rho_0$$

$$\theta_{R0} = 0$$

$$\dot{z}_{A0} = 0$$

$$\dot{x}_{R0} = v_0$$

$$\dot{z}_{R0} = 0$$

$$\dot{\theta}_{R0} = v_0 / r_{dyn}$$

wobei

$\rho_0$ = die Radfederung bei der definierten Radlast
$v_0$ = Anfangsgeschwindigkeit der Bremsung
$r_{dyn}$ = dynamischer Halbmesser des Rades bzw. dynamischer Rollhalbmesser.

Der Term $\Phi \hat{P}_k \Phi^T$ beschreibt die Änderung der Kovarianzmatrix infolge der Systemdynamik, $G\hat{Q}G^T$ gibt die Erhöhung der Fehlervarianz infolge der Störung $w$ an und der verbleibende Ausdruck mit negativem Vorzeichen beschreibt, wie sich die Fehlervarianz durch Hinzunahme der Information neuer Messungen verringert.

Führt man die Abkürzungen $\hat{x}_{k+1} = \hat{x}(k+1|k)$, $\hat{x}_k = \hat{x}(k|k-1)$, $P_k = P(k|k-1)$ und $P_{k+1} = P(k+1|k)$ ein, kann man die optimale Schätzung $\hat{x}_k$ und die Kovarianzmatrix des Schätzfehlers auch in der kompakten Form

$$\hat{x}_{k+1} = \Phi\hat{x}_k + \Gamma u_k + \hat{K}_k(y_k - C\hat{x}_k - Du_k)$$

mit

$$\hat{K}_k = \Phi\hat{P}_k C^T \left(C\hat{P}_k C^T + F\hat{Q}F^T + \hat{R}\right)^{-1}$$

und

$$\hat{P}_{k+1} = \Phi\hat{P}_k\Phi^T + G\hat{Q}G^T - \Phi\hat{P}_k C^T \left(C\hat{P}_k C^T + F\hat{Q}F^T + R\right)^{-1} C\hat{P}_k\Phi^T$$

darstellen, wobei die letztere Gleichung der diskreten Riccati-Gleichung entspricht. Im Vergleich zum vollständigen LUENBERGER-Beobachter ist der Unterschied zu erkennen, dass der Kalmanfilter ein vollständiger Beobachter mit einer zeitvarianten Beobachterverstärkungsmatrix $\hat{K}_k$ ist. Der Erwartungswert des Beobachtungsfehlers $e_k = x_k - \hat{x}_k$ genügt der Iterationsvorschrift

$$E(e_{k+1}) = E\left(\Phi x_k + Gw_k - \Phi\hat{x}_k - \hat{K}_k(Cx_k + Fw_k + v_k - C\hat{x}_k)\right)$$

$$= E\left((\Phi - \hat{K}_k C)(x_k - \hat{x}_k) + Gw_k - \hat{K}_k(Fw_k + v_k)\right) = (\Phi - \hat{K}_k C)E(e_k)$$

Falls also $\hat{x}_0 = E(x_0) = m_0$ gesetzt wird, gilt $E(e_k) = 0$ für alle $k \geq 0$. Weiter sieht man an den obigen Gleichungen für $\hat{K}_k$ und $\hat{P}_{k+1}$, dass ausgehend vom Startwert $P_0$ die Fehlerkovarianzmatrix $P_k$ und damit auch $\hat{K}_k$ ohne Kenntnis der Messgrößen $y_k$ für alle $k \geq 0$ vorwegberechnet und im Rechner zwischengespeichert werden können.

Folglich steht nun mittels des Kalmanfilters der geschätzte Zustandsvektor $\hat{x}_k$ zu jedem Zeitpunkt $k$ für einen Zustandsregler zur Verfügung.

Im Folgenden wird ein optimaler Zustandsregler beispielhaft erläutert, wie er insbesondere in der dritten bevorzugten Ausführungsform für das Rad-Fahrwerk-System Anwendung finden kann. Der optimale Zustandsregler basiert dabei insbesondere auf dem Zustandsraummodell gemäß der dritten bevorzugten Ausführungsform in Kombination mit einem Zustandsbeobachter auf Basis des voran beschriebenen Kalmanfilters. Der Zustandsregler soll vorzugsweise den Wert $\tilde{x}$ des Zustands auf den vorbestimmten Wert $x_0$ des Zustands zurückführen bzw. die Abweichung $x$ reduzieren und/oder auf Null zurückführen, d.h. alle Zustandsgrößen idealerweise auf Null regeln.

Der Ausgangspunkt der Betrachtungen ist das lineare, zeitinvariante, zeitdiskrete Zustandsmodell des Rad-Fahrwerk-Systems beispielsweise gemäß der dritten bevorzugten Ausführungsform, in dem die Ausgangsgröße $y$ gemessen werden kann. Die Regelungsaufgabe besteht nun insbesondere darin, das Gütefunktional

$$J(x_0) = E\left(\sum_{k=0}^{N-1}(\hat{x}_k^T Q\hat{x}_k + u_k Ru_k + 2u_k N\hat{x}_k)\right) + E(\hat{x}_N^T S\hat{x}_N)$$

$$= E\left(\sum_{k=0}^{N-1}[\hat{x}_k^T \quad u_k]\begin{bmatrix}Q & N^T \\ N & R\end{bmatrix}\begin{bmatrix}\hat{x}_k \\ u_k\end{bmatrix}\right) + E(\hat{x}_N^T S\hat{x}_N)$$

$$= E\left(\sum_{k=0}^{N-1}[\hat{x}_k^T \quad u_k]L\begin{bmatrix}\hat{x}_k \\ u_k\end{bmatrix}\right) + E(\hat{x}_N^T S\hat{x}_N)$$

auf Basis der im Kalmanfilter geschätzten bzw. berechneten Zustände $\hat{x}_k$ für geeignete Gewichtungsmatrizen bzw.

Gewichtungsparameter $Q \in \mathbb{R}^{n \times n}$, $R$, $N \in \mathbb{R}^{1 \times n}$ und für die positiv semi-definiten Gewichtungsmatrizen

$L \in \mathbb{R}^{(n+1) \times (n+1)}$ und $S \in \mathbb{R}^{n \times n}$ bezüglich einer Steuerfolge bzw. zeitlichen Folge von Bremsmomentänderungen $u_0, u_1, \cdots, u_{N-1}$ unter der Nebenbedingung des zeitdiskreten Zustandsraummodells der dritten bevorzugten Ausführungsform so zu minimieren, dass das Regelgesetz nur von den messbaren Ausgangsgrößen bzw. der messbaren Ausgangsgröße $y$ abhängt. Wegen des quadratischen Gütekriteriums des Gütefunktionals $J$ ist ein derartiger Regelentwurf auch unter dem Namen LQR (engl. Linear Quadratic Regulator)-Problem bekannt.

Die Kombination aus Regler und Beobachter wird LQG (engl. Linear-Quadratic-Gaussian Regulator) bzw. "dynamischer Regler" genannt. Da das Kalmanfilter auf der rekursiven Minimum-Varianz-Schätzung beruht, wird das LQG-Regelungsproblem optimal durch die Kombination eines LQR-Zustandsreglers und eines Kalmanfilter-Beobachters gelöst. Im Folgenden wird der Entwurf des LQR-Reglers im Zusammenhang mit dem im letzten Abschnitt aufgebauten Kalmanfilter beschrieben. Dafür wird das auch dem Kalmanfilter zugrundeliegende zeitdiskrete, lineare, zeitinvariante Zustandsraummodell gemäß der dritten bevorzugten Ausführungsform betrachtet und es gelten auch die drei Annahmen zum Entwurf des Kalmanfilters.

Das LQR-Problem lässt sich beispielsweise mit nachfolgender Vorgehensweise lösen. Die eindeutige Lösung der Optimierungsaufgabe $\min_k J$ für das lineare, zeitinvariante, zeitdiskrete Zustandsmodell des Rad-Fahrwerk-Systems mit der symmetrischen positiv semi-definiten Matrix $S$, der symmetrischen positiv semi-definiten Matrix

$$L = \begin{bmatrix} Q & N^T \\ N & R \end{bmatrix}$$

und dem positiven Parameter $(R + \Gamma^T S \Gamma)$ ist durch das Regelgesetz

$$u_k = K x_k$$

mit der Regelmatrix

$$K = -(R + \Gamma^T S \Gamma)^{-1}(N + \Gamma^T S \Phi)$$

gegeben. $S$ ist dabei die symmetrische, positiv definite Lösung der zeitdiskreten Matrix-Riccatigleichung.

$$\Phi^T S \Phi - S - (\Phi^T S \Gamma + N)(\Gamma^T S \Gamma + R)^{-1}(\Gamma^T S \Phi + N^T) + Q = 0$$

Auf Basis des Kalmanfilters wird der dynamische Regler mit optimaler Ausgangsrückführung für das System im Folgenden in der zeitdiskreten Form

$$\hat{x}_{k+1} = \Phi \hat{x}_k + \Gamma u_k + \hat{K}_k(y_k - C\hat{x}_k - Du_k)$$

$$u_k = K \hat{x}_k$$

mit

$$K = -(R + \Gamma^T S \Gamma)^{-1}(N + \Gamma^T S \Phi)$$

$$\widehat{P}_{k+1} = \Phi\widehat{P}_k\Phi^T + G\widehat{Q}G^T - \Phi\widehat{P}_kC^T\left(C\widehat{P}_kC^T + F\widehat{Q}F^T + \widehat{R}\right)^{-1}C\widehat{P}_k\Phi^T$$

$$\widehat{K}_k = \Phi\widehat{P}_kC^T\left(C\widehat{P}_kC^T + F\widehat{Q}F^T + \widehat{R}\right)^{-1}$$

und der Randbedingung $P_N = S \geq 0$ und der Anfangsbedingung $\widehat{P}_0 \geq 0$ zusammengefasst. Insbesondere wird dabei die symmetrische, positiv definite Lösung der zeitdiskreten Matrix-Riccatigleichung $S$, wenn es um Kalmanfilter geht, als $P$ bezeichnet. Beide haben vorzugsweise dieselbe Bedeutung.

Die Bestimmung der symmetrischen positiv semi-definiten Matrix $S$ und der Regelmatrix $K$ kann beispielsweise in MATLAB durch die Funktion $dlqr(\Phi, \Gamma, Q, R, N)$ erfolgen, die die Zeithorizontlösung $S$ der entsprechenden zeitdiskreten Riccatigleichung zurückgibt und somit die optimale Regelmatrix $K$ berechnet.

Je größer der Stellgrößengewichtungsparameter $R$ ist, desto kleiner werden die erforderlichen Stellgrößen. Weiter kann durch eine sehr hohe Gewichtung eines bestimmten Zustands mittels der Zustandsgewichtungsmatrix $Q$ erreicht werden, dass im geschlossenen Kreis dieser Zustand sehr schnell nach null abklingt. Gemäß der dritten bevorzugten Ausführungsform wird die Kopplungsmatrix $N$ vorzugsweise auf null gesetzt, da die Zustände vorzugsweise mit der Stellgröße entkoppelt sind.

Da das Ziel dieses Zustandsreglers ist, die Resonanzamplitude aller Eigenschwingungsmoden im Reifen-Fahrwerk-Systems zu minimieren, ist die Zustandsgewichtungsmatrix $Q$ vorzugsweise gleich der Multiplikation der Einheitsmatrix mit einer Konstanten. Diese Konstante kann die Magnitude der Reglerverstärkungen beeinflussen, deshalb wird diese vorzugsweise so gesetzt, dass die Magnitude des resultierenden Regelinputs in der gleichen Größenordnung wie die Störungsmagnitude liegt. Da es nur eine regelbare Eingangsgröße im System gibt und es nicht notwendig ist, die Regelamplitude der Eingangsgröße zu verkleinern, wird der Stellgrößengewichtungsparameter R vorzugsweise auf 1 gesetzt.

Auf Basis dieser Zustandsraumdarstellung und des beschriebenen Entwurfs des Zustandsbeobachters und des Zustandsreglers können die nachfolgend beschriebenen Mindestfälle oder Kombinationen der Mindestfälle durch die Reduzierung entsprechender Freiheitsgrade abgeleitet werden.

Für eine Nutzung des technischen Effekts der beanspruchten Erfindung ist es nicht notwendigerweise erforderlich, die vertikale Aufbaubeschleunigung $\ddot{z}_A$, die longitudinale Radbeschleunigung $\ddot{x}_R$, die vertikale Radbeschleunigung $\ddot{z}_R$ und die Drehwinkelrate des Rades $\dot{\theta}_R$ gleichzeitig zu ermitteln und/oder zu messen. Vielmehr kann es ausreichend sein, lediglich eine oder einen Teil der Beschleunigungen bzw. die Raddrehzahl als Ausgangsgröße zu ermitteln. In diesem Fall reduzieren sich die Dimensionen der Vektoren und Matrizen des Zustandsraummodells bzw. Zustandsmodells zur Beschreibung des Zustands des Rad-Fahrwerk-Systems entsprechend, wobei die Dimensionen, welche unberücksichtigt bleiben, aus den jeweiligen Vektoren und Matrizen herausfallen. Es ist dabei lediglich zu berücksichtigen, dass vorzugsweise zumindest die Dimension der Drehwinkelrate des Rades $\dot{\theta}_R$ erhalten bleibt, da über diese Dimension bzw. Größe das Bremsmoment bzw. die Bremsmomentänderung $u$, welches erfindungsgemäß eine Eingangsgröße ist, mit der Dynamik des Rad-Fahrwerk-Systems koppelt. Eine Reduzierung von Kraftschwankungen und/oder Schwingungen des Rad-Fahrwerk-Systems bezüglich einer geringeren Anzahl berücksichtigter Dimensionen kann ausreichend sein, da mit einer derartigen Verringerung auch eine Verringerung Kraftschwankungen und/oder Schwingungen des Rad-Fahrwerk-Systems bezüglich der verbleibenden, unberücksichtigten Freiheitsgrade erreicht werden kann.

Es soll daher im Folgenden beispielhaft für solche reduzierte Fälle, in welchen eine geringere Anzahl von Dimensionen berücksichtigt werden, eine vierte bevorzugte Ausführungsform beschrieben werden.

Gemäß der vierten bevorzugten Ausführungsform wird für den Zustand des Rad-Fahrwerk-Systems der Wert der Drehwinkelrate des Rades $\dot{\theta}_R$ sowie der Wert bezüglich der longitudinalen Bewegung des Rades $x_R$ berücksichtigt.

Wenn die longitudinalen Freiheitsgrade des Rades berücksichtigt werden, ergeben sich die linearisierten Bewegungsgleichungen wie folgt:

$$m_{R}\ddot{x}_R = F_{cx} - F_{ARx}$$

$$I_{Ry}\ddot{\theta}_R = -r_{dyn}F_{cx} - M_{Ry}$$

wobei

$$F_{ARx} = k_{Rx}\dot{x}_R + c_{fx}x_R$$

$$F_{cx} = \mu F_{cz0} + \mu_0 F_{cz} = C_\lambda \lambda F_{cz0} + \mu_0 c_{rz}w + \mu_0 k_{rz}\dot{w}$$

$$\lambda = \frac{r_{dyn}\dot{\theta}_R - \dot{x}_R}{V_x}$$

Der Zustandsvektor bzw. die Abweichung *x* stellt sich gemäß der vierten bevorzugten Ausführungsform als ein $3 \times 1$ Vektor dar:

$$x(t) = [x_R \quad \dot{x}_R \quad \dot{\theta}_R]^T$$

Die $3 \times 3$ Systemmatrix *A(t)* ergibt sich aus der linearisierten Version der Bewegungsgleichungen.

$$A = \begin{bmatrix} 0 & 1 & 0 \\ -\dfrac{c_{fx}}{m_R} & -\left(\dfrac{k_{Rx}}{m_R} + \dfrac{C_\lambda F_{cz0}}{m_R V_x}\right) & \dfrac{C_\lambda r_{dyn}F_{cz0}}{m_R V_x} \\ 0 & \dfrac{r_{dyn}C_\lambda F_{cz0}}{I_{Ry}V_x} & -\dfrac{C_\lambda r_{dyn}^2 F_{cz0}}{I_{Ry}V_x} \end{bmatrix}$$

Die $3 \times 1$ Eingangsmatrix *B* lautet:

$$B = \begin{bmatrix} 0 & 0 & -\dfrac{1}{I_{Ry}} \end{bmatrix}^T$$

Die $3 \times 2$ Störeingangsmatrix *E* lautet:

$$E = \begin{bmatrix} 0 & \dfrac{\mu_0 c_{rz}}{m_R} & -\dfrac{r_{dyn}\mu_0 c_{rz}}{I_{Ry}} \\ 0 & \dfrac{\mu_0 k_{rz}}{m_R} & -\dfrac{r_{dyn}\mu_0 k_{rz}}{I_{Ry}} \end{bmatrix}^T$$

Nach der Analyse der Messbarkeit der Zustandsgrößen werden die messbaren Beschleunigungen als Komponenten des Ausgangsgrößenvektors angenommen. Der $2 \times 1$ Ausgangsgrößenvektor *y(t)* ergibt sich zu:

$$y(t) = [\ddot{x}_R \quad \dot{\theta}_R]^T$$

Die $2 \times 3$ Ausgangsmatrix *C* ergibt sich zu:

$$C = \begin{bmatrix} -\dfrac{c_{fx}}{m_R} & -\left(\dfrac{k_{Rx}}{m_R} + \dfrac{C_\lambda F_{cz0}}{m_R V_x}\right) & \dfrac{C_\lambda r_{dyn}F_{cz0}}{m_R V_x} \\ 0 & 0 & 1 \end{bmatrix}$$

Die $2 \times 2$ Störausgangsmatrix *F* ergibt sich zu:

$$F = \begin{bmatrix} \dfrac{\mu_0 c_{rz}}{m_R} & \dfrac{\mu_0 k_{rz}}{m_R} \\ 0 & 0 \end{bmatrix}$$

Mit diesen Vektoren und Matrizen kann sodann in gleicher Weise, wie mit Bezug auf die dritte bevorzugte Ausführungsform ausführlich dargelegt, eine Rückführmatrix und darauf basierend ein Steuersignal für die Bremsanlage bereitgestellt werden.

Ferner soll im Folgenden beispielhaft in einer fünften bevorzugten Ausführungsform ein weiteres reduziertes Zustandsmodell dargelegt werden. In der fünften bevorzugten Ausführungsform werden die Drehwinkelrate des Rades $\dot{\theta}_R$ sowie die longitudinale und die vertikale Beschleunigung des Rades berücksichtigt.

Wenn die longitudinalen und vertikalen Freiheitsgrade des Rades und die Drehwinkelrate des Rades $\dot{\theta}_R$ berücksichtigt werden, ergeben sich die linearisierten Bewegungsgleichungen wie folgt:

$$m_R \ddot{x}_R = F_{cx} - F_{ARx}$$

$$m_R \ddot{z}_R = \tilde{F}_{cz} - F_{ARz}$$

$$I_{Ry} \ddot{\theta}_R = -r_{dyn} F_{cx} - M_{Ry}$$

wobei

$$F_{ARx} = k_{Rx} \dot{x}_R + c_{fx} x_R$$

$$\tilde{F}_{ARz} = k_{fz} \dot{z}_R + c_{fz} z_R$$

$$F_{cz} = c_{rz}(w - z_R) + k_{rz}(\dot{w} - \dot{z}_R)$$

$$F_{cx} = \mu F_{cz0} + \mu_0 F_{cz} = C_\lambda \lambda F_{cz0} + \mu_0 c_{rz}(w - z_R) + \mu_0 k_{rz}(\dot{w} - \dot{z}_R)$$

Der Zustandsvektor stellt sich gemäß der fünften bevorzugten Ausführungsform als ein $5 \times 1$ Wegvektor dar.

$$x(t) = \begin{bmatrix} x_R & z_R & \dot{x}_R & \dot{z}_R & \dot{\theta}_R \end{bmatrix}^T$$

Die $5 \times 5$ Systemmatrix $A(t)$ ergibt sich aus der linearisierten Version der Bewegungsgleichungen.

$$A = \begin{bmatrix} 0 & 1 & 0 & 0 & 0 \\ 0 & 0 & 0 & 1 & 0 \\ -\dfrac{c_{fx}}{m_R} & -\dfrac{\mu_0 c_{rz}}{m_R} & -\left(\dfrac{k_{Rx}}{m_R} + \dfrac{C_\lambda F_{cz0}}{m_R V_x}\right) & -\dfrac{\mu_0 k_{rz}}{m_R} & +\dfrac{C_\lambda r_{dyn} F_{cz0}}{m_R V_x} \\ 0 & 0 & -\dfrac{(c_{rz} + c_{fz})}{m_R} & -\dfrac{(k_{rz} + k_{fz})}{m_R} & 0 \\ 0 & \dfrac{r_{dyn} \mu_0 c_{rz}}{I_{Ry}} & \dfrac{r_{dyn} C_\lambda F_{cz0}}{I_{Ry} V_x} & \dfrac{r_{dyn} \mu_0 k_{rz}}{I_{Ry}} & \dfrac{C_\lambda r_{dyn}^2 F_{cz0}}{I_{Ry} V_x} \end{bmatrix}$$

Die 5 × 1 Eingangsmatrix $B$ lautet:

$$B = \begin{bmatrix} 0 & 0 & 0 & 0 & -\dfrac{1}{I_{Ry}} \end{bmatrix}^T$$

Die 5 × 2 Störeingangsmatrix E lautet:

$$E = \begin{bmatrix} 0 & 0 & \dfrac{\mu_0 c_{rz}}{m_R} & \dfrac{c_{rz}}{m_R} & -\dfrac{r_{dyn}\mu_0 c_{rz}}{I_{Ry}} \\[3mm] 0 & 0 & \dfrac{\mu_0 k_{rz}}{m_R} & \dfrac{k_{rz}}{m_R} & -\dfrac{r_{dyn}\mu_0 k_{rz}}{I_{Ry}} \end{bmatrix}^T$$

Nach der Analyse der Messbarkeit der Zustandsgrößen werden die vier messbaren Beschleunigungen als Komponenten des Ausgangsgrößenvektors angenommen. Der 3 × 1 Ausgangsgrößenvektor $y(t)$ ergibt sich zu:

$$y(t) = \begin{bmatrix} \ddot{x}_R & \ddot{z}_R & \dot{\theta}_R \end{bmatrix}^T$$

Die 3 × 5 Ausgangsmatrix $C$ ergibt sich zu:

$$C = \begin{bmatrix} -\dfrac{c_{fx}}{m_R} & -\dfrac{\mu_0 c_{rz}}{m_R} & -\left(\dfrac{k_{Rx}}{m_R} + \dfrac{C_\lambda F_{cz0}}{m_R V_x}\right) & -\dfrac{\mu_0 k_{rz}}{m_R} & +\dfrac{C_\lambda r_{dyn} F_{cz0}}{m_R V_x} \\[3mm] 0 & 0 & -\dfrac{(c_{rz}+c_{fz})}{m_R} & -\dfrac{(k_{rz}+k_{fz})}{m_R} & 0 \\[3mm] 0 & 0 & 0 & 0 & 1 \end{bmatrix}$$

Die 3 × 2 Störausgangsmatrix $F$ ergibt sich zu:

$$F = \begin{bmatrix} \dfrac{\mu_0 c_{rz}}{m_R} & \dfrac{\mu_0 k_{rz}}{m_R} \\[3mm] \dfrac{c_{rz}}{m_R} & \dfrac{k_{rz}}{m_R} \\[3mm] 0 & 0 \end{bmatrix}$$

Wenn darüber hinaus der vertikale Freiheitsgrad der anteiligen Masse des Aufbaus noch im Reifen-Fahrwerk-System berücksichtigt wird, ergibt sich wiederum das Zustandsraummodell wie in der dritten bevorzugten Ausführungsform dargestellt.

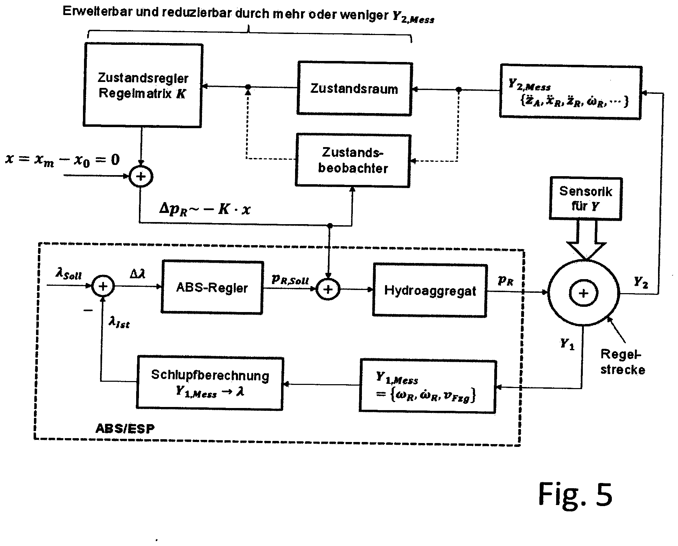

**Fig. 5** zeigt eine schematische Skizze des Funktionsprinzips einer erfindungsgemäßen Vorrichtung gemäß einer bevorzugten Ausführungsform, welche ausgelegt ist, einen anderweitigen Bremsregler zu ergänzen bzw. zu erweitern, um das erfindungsgemäße Verfahren nutzen zu können. Der anderweitige Bremsregler kann dabei beispielsweise einen herkömmlichen Regler eines Antiblockiersystems (ABS) und/oder eines elektronischen Stabilitätsprogramms (ESP) umfassen, welche oftmals in Kraftfahrzeugen zur Anwendung kommen. Eine Erweiterung eines derartigen anderweitigen Bremsreglers kann den Vorteil haben, dass durch die dadurch gegebene Möglichkeit, das erfindungsgemäße Verfahren durchzuführen, Schwingungen und/oder Kraftschwankungen im Rad-Fahrwerk-System von derartigen Kraftfahrzeugen reduziert und/oder minimiert werden können. Dadurch kann beispielsweise ein kürzerer Bremsweg erzielt werden und/oder die Sicherheit im Straßenverkehr erhöht werden, insbesondere während Bremsvorgängen, besonders bevorzugt während Bremsvorgängen, bei denen der anderweitige Bremsregler von der ABS Funktion Gebrauch macht.

Beispielsweise kann ein anderweitiger Bremsregler ausgelegt sein, während eines Bremsvorgangs, welcher beispielsweise durch eine Betätigung eines Bremspedals durch den Fahrer des Kraftfahrzeugs eingeleitet wird, einen dem Bremspedaldruck angepassten Bremsdruck bereitzustellen. Insbesondere kann der anderweitige Bremsregler ausgelegt sein, während des Bremsvorgangs einen vorbestimmten Sollwert des Schlupfes $\lambda_{soll}$ bzw. $\lambda_0$ einzuhalten bzw. zuzulassen bzw. zu erzielen.

Beispielsweise kann der anderweitige Bremsregler einen ABS-Regler umfassen, welcher ausgelegt ist, ein Bremssignal bereitzustellen, welches ein Hydroaggregat dazu veranlassen kann, einen Bremsdruck $p_{R,Soll}$ bereitzustellen. Der Bremsdruck $p_R$ kann beispielsweise der Druck sein, den das Hydroaggregat mittels eines Bremsklotzes auf eine Bremsscheibe beaufschlagt, um das mit der Bremsschiebe verbundene Rad zu bremsen.

Beispielsweise kann ein Sensor oder mehrere Sensoren vorgesehen sein, welche eine Ausgangsgröße $Y_{1,Mess}$ ermitteln. Die Ausgangsgröße $Y_1$ bzw. $Y_{1,Mess}$ kann dabei beispielsweise die Raddrehzahl $\omega_R$ und/oder die Drehwinkelbeschleunigung des Rades $\dot{\omega}_R$ und oder die Geschwindigkeit bzw. die Schwerpunktsgeschwindigkeit des Fahrzeugs umfassen. Ferner kann der anderweitige Bremsregler anhand der Ausgangsgröße $Y_{1,Mess}$ eine Schlupfberechnung vornehmen, um den Schlupf $\lambda$ bzw. $\lambda_{Ist}$ des Rades zu ermitteln. Mittels eines Vergleichs des ermittelten Schlupfes $\lambda_{Ist}$ und des Sollschlupfes $\lambda_{soll}$ kann dann beispielsweise von dem anderweitigen Bremsregler die Abweichung $\Delta\lambda$ des $\lambda_{Ist}$ von dem Sollschlupf $\lambda_{soll}$ bestimmt werden, um sodann das Bremssignal anzupassen, um die Abweichung des Schlupfes $\Delta\lambda$ zu reduzieren.

Erfindungsgemäß kann gemäß einer bevorzugten Ausführungsform ein weiterer Sensor oder eine Mehrzahl von weiteren Sensoren vorgesehen sein, um eine erweiterte Ausgangsgröße $Y_2$ bzw. $Y_{2,Mess}$ zu messen und/oder zu ermitteln. Beispielsweise kann die erweiterte Ausgangsgröße $Y_{2,Mess}$ diverse Beschleunigungen umfassen, wie mit Bezug auf die vorherigen bevorzugten Ausführungsformen erläutert wurde. Insbesondere kann die erweiterte Ausgangsgröße $Y_2$ die vertikale Beschleunigung des Aufbaus $\ddot{z}_A$, die longitudinale Beschleunigung des Rades $\ddot{x}_R$, die vertikale Beschleunigung des Rades $\ddot{z}_R$, sowie die Drehwinkelbeschleunigung des Rades $\dot{\omega}_R$ umfassen. Daraus kann sodann unter Verwendung eines Zustandsraummodells bzw. Zustandsmodells, wie mit Bezug auf vorhergehende bevorzugte Ausführungsformen beschrieben, die Abweichung $x$ des Wertes $\tilde{x}$ des Zustands von dem vorbestimmten Wert des Zustands $x_0$ bzw. $x_{Soll}$ ermittelt werden. Dies beruht dabei vorzugsweise auf einer mathematischen Darstellung des Zustandsraums des Rad-Fahrwerk-Systems, beispielsweise gemäß einer der vorhergehend erläuterten bevorzugten Ausführungsformen, einer eventuellen Verwendung eines Zustandsbeobachters und auf Basis eines Zustandsreglers zur Bestimmung einer Rückführmatrix $K$.

Insbesondere dann, wenn nicht alle Zustandsgrößen mit vertretbarem Aufwand messbar sind, müssen die nicht messbaren Zustandsgrößen mit einem Zustandsbeobachter geschätzt werden. Die gemessene oder beobachtete Abweichung $x$ bzw. $\hat{x}$ des Zustands kann beispielsweise mit der Rückführmatrix $K$ multipliziert werden und mit dem vorbestimmten Wert $x_0$ bzw. dem Sollwert $x_{Soll}$ verglichen werden. Da das Ziel dieser Zustandsregelung ist, die Schwingungen und/oder Kraftschwankungen innerhalb des Reifen-Fahrwerk-Systems während der ABS-Bremsung bzw. während des Bremsvorgangs zu minimieren, werden vorzugsweise alle Größen des Vektors $x_{Soll}$ auf Null gesetzt. Die Regelabweichung des Zustandsreglers $-K \cdot x$ kann dann in die Stellgröße $\Delta p_R$ umgerechnet und durch das Stellglied des Regelkreises, d.h. das Hydroaggregat und/oder die Bremsanlage, in die Regelstrecke zurückgeführt werden. Durch diese Zustandsregelung ist die Abweichung $x$ stets auf den Zielvektor $x_{soll}$ zu regeln.

Besonders bevorzugt wird die Rückführmatrix $K$ derart ermittelt, dass ein bereitgestelltes, darauf basierendes Steuersignal ausgelegt ist, die Abweichung $x$ auf Null zu reduzieren.

Das bereitgestellte Steuersignal ist vorzugsweise derart ausgelegt, das Hydroaggregat zur Bereitstellung eines Zusatzbremsdrucks $\Delta p_R \sim -K \cdot x$ bzw. die Bereitstellung des bisherigen Bremsdrucks $p_R$, welcher durch den anderweitigen Bremsregler bestimmt wurde, entsprechend anzupassen. Die Kopplung einer Kontrolleinheit zur Bereitstellung eines erfindungsgemäßen Steuersignals mit dem anderweitigen Bremsschlupfregler hat den Vorteil, dass gegebenenfalls eine Schlupfregelung eines ABS-Reglers des herkömmlichen Bremsreglers unverändert bestehen bleiben kann, sofern keine Abweichung $x$ ermittelt wird. Der zustandsabhängige Zusatzbremsdruck $\Delta p_R$ kann zum Sollbremsdruck aus dem Bremsschlupfregler $p_{R,Soll}$ addiert werden bzw. das erfindungsgemäße Steuersignal mit dem Bremssignal des anderweitigen Bremsreglers addiert werden, bevor der Solldruck in Ventilspannungen $U_{Vent}$ für die Ein- und Auslassventile des Hydroaggregates umgerechnet wird. Das Konzept der Zustandsregelung benötigt dabei vorzugsweise lediglich eine zusätzliche Summationsstelle nach der Berechnung des Sollbremsdrucks im ABS-Algorithmus. D.h. mit $\Delta p_R = 0$ ist eine serienmäßige ABS-Regelung gegeben, so dass die Zustandsregelung optimal bei einem sonst unveränderten ABS eingesetzt werden kann. Wird im Fehlerfall eine Abschaltung der erfindungsgemäßen Bereitstellung des Steuersignals bzw. der Zustandsregelung vorgenommen, arbeitet auch diese Bremsanlage mit dem anderweitigen Bremsregler, d.h. gegebenenfalls wie mit einer üblichen Serien-ABS-Regelung.

Auf diese Weise erlaubt es das Verfahren bzw. eine Vorrichtung gemäß dieser bevorzugten Ausführungsform, die Funktionalität eines anderweitigen Bremsreglers, etwa eines herkömmlichen ABS und/oder ESP-Reglers, zu erweitern um die Vorteile der Erfindung nutzen zu können. Dies kann beispielsweise durch die Bereitstellung einer Kontrolleinheit bzw. Steuereinheit geschehen, welche ausgelegt ist, ein erfindungsgemäßes Verfahren auszuführen und mit einem anderweitigen Bremsregler zu interagieren.

Alternativ kann eine erfindungsgemäße Steuereinheit auch ausgelegt sein, die Funktionalitäten eines anderweitigen Bremsreglers, insbesondere eines herkömmlichen ABS und/oder ESP-Reglers mit zu übernehmen, so dass lediglich eine Steuereinheit ausreichend ist und keine anderweitige Steuereinheit bzw. Kontrolleinheit erforderlich ist.

Die Zustandsraumdarstellung der Regelstrecke bzw. des Rad-Fahrwerk-Systems kann je nach Anforderung an die Modellgenauigkeit sowie die Messbarkeit und Beobachtbarkeit der Zustandsgrößen unterschiedlich gewählt werden. Die Dimension des Zustandsvektors und deshalb auch der Regelmatrix bzw. Rückführmatrix ist daher bei unterschiedlichen Zustandsraumdarstellungen erweiterbar und/oder reduzierbar und/oder anpassbar.

In Fig. 5 sind beispielsweise die vertikale Aufbaubeschleunigung $\ddot{z}_A$, die longitudinale und vertikale Radträgerbeschleunigung $\ddot{x}_R$ und $\ddot{z}_R$, die Raddrehzahl $\omega_R$ und die Raddrehbeschleunigung $\dot{\omega}_R$ als messbare Ausgangsgrößen genannt, da sie in der Realität mit wenig Aufwand durch Einbau von geeigneter Sensorik erfasst werden können. Die Beschleunigungen sind durch Einbau von Beschleunigungsaufnehmern messbar. Das Raddrehzahlsignal des individuellen Rades kann beispielsweise bereits von einem herkömmlichen ABS/ESP-Regler erfasst werden und die Raddrehbeschleunigung kann dabei beispielsweise aus dem Raddrehzahlsignal bestimmt werden und/oder durch Einbau eines Drehbeschleunigungssensors gemessen werden.

Die Analyse des reduzierten Zustandsraummodells zeigt eine vollständige Steuer- und Beobachtbarkeit des Systems. D.h. jeder Freiheitsgrad des Rad-Fahrwerk-Systems kann mit Hilfe des entsprechenden Sensors durch die Eingangsgröße beobachtet werden.

Die vollständige Steuerbarkeit bzw. Beobachtbarkeit des Zustandsraummodells gemäß der zweiten bevorzugten Ausführungsform zeigt an, dass die im Vergleich zum Zustandsraummodell gemäß der ersten bevorzugten Ausführungsform nicht mehr berücksichtigten Freiheitsgrade des Reifengürtels und der Kontaktmasse von den anderen steuerbaren Zustandsgrößen abhängig sind. Aufgrund dieser Abhängigkeit ist zu erwarten, dass sie ebenfalls durch die Regelung bzw. Minimierung der steuerbaren Zustandsgrößen auch reduziert werden. Diese Erwartung wurde bereits durch Simulationsergebnisse überprüft und bestätigt. Ausgehend davon lassen sich daher vier Mindestfälle bzw. Mindestanforderungen der Zustandsregelung ableiten:

1) Einbau eines Beschleunigungsaufnehmers für $\ddot{z}_A$ zur Regelung der vertikalen Aufbaudynamik bzw. der vertikalen Aufbauschwingung.

2) Einbau eines Beschleunigungsaufnehmers für $\ddot{x}_R$ zur Regelung der longitudinalen Radaufhängungsdynamik bzw. der longitudinalen Achsschwingung.

3) Einbau eines Beschleunigungsaufnehmers für $\ddot{z}_R$ zur Regelung der vertikalen Radaufhängungsdynamik bzw. der vertikalen Achsschwingung.

4) Verwendung eines ABS-Drehzahlsignals zum Ermitteln der Raddrehzahl $\omega_R$ oder Einbau eines Drehbeschleunigungssensors zum Ermitteln der Drehwinkelbeschleunigung des Rades $\dot{\omega}_R$ zur Regelung der Reifenrotationsdynamik bzw. der Drehschwingung des Rades.

Die vier Mindestfälle können vorzugsweise beliebig kombiniert werden, damit mehrere Schwingungsanteile gleichzeitig in der Regelstrecke ausgeregelt werden können.

**Bezugszeichenliste und Parameter**

2　　　Fahrzeug
4　　　Rad
6　　　Aufbau
8A　　Aufbausensor
8R　　Radsensor
10　　 Zustandsbeobachtermodul
12　　 Kontrolleinheit zur Bereitstellung des ABS Bremssignals
14　　 Signalmodul

$\tilde{x}$　　(momentaner) Wert (Absolutwert) des Zustands des Rad-Fahrwerk-Systems
$x_0$　　vorbestimmter Wert (Sollwert) des Zustands des Rad-Fahrwerk-Systems
$x$　　 Beobachtungswert einer Abweichung des Wertes $\tilde{x}$ vom Sollwert $x_0$
$x_k$　　Beobachtungswert $x$ zum Zeitpunkt $k$
$u$　　 Eingangsgröße, Bremsmomentänderung $\Delta M_{ay}$

$u_k$    Eingangsgröße, Bremsmomentänderung $u$ zum Zeitpunkt $k$

$\mathbf{y}$    Ausgangsgröße (Messgröße)

$\mathbf{y}_k$    Ausgangsgröße (Messgröße) $\mathbf{y}$ zum Zeitpunkt $k$

$\mathbf{w}$    Störgröße

$\mathbf{w}_k$    Störgröße $\mathbf{w}$ zum Zeitpunkt $k$

$\mathbf{v}$    Messrauschen

$\mathbf{v}_k$    Messrauschen $\mathbf{v}$ zum Zeitpunkt $k$

$\mathbf{A}$    System matrix

$\mathbf{B}$    Eingangsmatrix

$\mathbf{C}$    Ausgangsmatrix

$\mathbf{D}$    Durchgangsmatrix

$\mathbf{E}$    Störeingangsmatrix

$\mathbf{F}$    Störausgangsmatrix

$\phi$    zeitdiskrete Systemmatrix

$\Gamma$    zeitdiskrete Eingangsmatrix

$\mathbf{G}$    zeitdiskrete Störeingangsmatrix

$J$    Funktional des linear-quadratischen Reglers

E(...)    Erwartungswert der Größe ...

$\mathbf{N}$    Koppelungsmatrix

$\mathbf{Q}$    Zustandsgewichtungsmatrix

$\mathbf{R}$    Stellgrößengewichtungsparameter

$\mathbf{S}$    Lösungsmatrix

$\hat{\mathbf{K}}_k$    Beobachterverstärkermatrix

$\hat{\mathbf{P}}_k$    Schätzfehler-Kovarianzmatrix

$\hat{\mathbf{Q}}$    Störung-Kovarianzmatrix

$\hat{\mathbf{R}}$    Messrauschen-Kovarianzmatrix

Bei den nachfolgenden aufgelisteten Koordinaten des Zustands des Rad-Fahrwerk-Systems wird bezeichnet:

     der Absolutwert durch $\tilde{}$;
     der Sollwert (im Arbeitspunkt) durch den Index "0"; und
     die Abweichung des Absolutwerts vom Sollwert ansonsten

$\tilde{x}_A,\ x_{A0},\ x_A$    longitudinale Aufbauposition

$\tilde{z}_A,\ z_{A0},\ z_A$    vertikale Aufbauposition

$\tilde{x}_R,\ x_{R0},\ x_R$    longitudinale Radposition

$\tilde{z}_R,\ z_{R0},\ z_R$    vertikale Radposition

$\tilde{\Theta}_R,\ \Theta_{R0},\ \Theta_R$    Drehwinkel des Rades

$\tilde{x}_a,\ x_{a0},\ x_a$    longitudinale Position der reifengefederten Masse

$\tilde{z}_a,\ z_{a0},\ z_a$    vertikale Position der reifengefederten Masse

$\tilde{x}_b,\ x_{b0},\ x_b$    longitudinale Position der Reifengürtelmasse

$\tilde{z}_b,\ z_{b0},\ z_b$    vertikale Position der Reifengürtelmasse

$\tilde{x}_c,\ x_{c0},\ x_c$    longitudinale Position der Kontaktmasse

$\tilde{\Theta}_a,\ \Theta_{a0},\ \Theta_a$    Drehwinkel der reifengefederten Masse

$\tilde{\Theta}_b,\ \Theta_{b0},\ \Theta_b$    Drehwinkel der Reifengürtelmasse

$\omega_R$    Winkelgeschwindigkeit des Rades

$m_R$    Masse des Rades

$m_A$    (anteilige) Masse des Aufbaus

$m_a$    reifengefederte Masse

$m_b$    Reifengürtelmasse

$m_c$    Kontaktmasse zwischen Reifengürtel und Fahrbahn

$I_{Ry}$    Massenträgheitsmoment der drehenden Masse

$h$    Schwerpunkthöhe

| | |
|---|---|
| $l$ | Radstand |
| $r_{dyn}$ | dynamischer Rollhalbmesser |
| $f_r$ | Rollwiderstandsbeiwert |
| $c_{fx}$ | Längssteifigkeit der Radaufhängung |
| $k_{fx}$ | Längsdämpfung der Radaufhängung |
| $c_{fz}$ | Vertikalsteifigkeit der Radaufhängung |
| $k_{fz}$ | Vertikaldämpfung der Radaufhängung |
| | |
| $c_{rz}$ | Vertikalsteifigkeit des Reifens bzw. der Laufstreifenmischung |
| $k_{rz}$ | Vertikaldämpfung des Reifens bzw. der Laufstreifenmischung |
| $c_{rx}$ | longitudinale Steifigkeit des Reifens bzw. der Laufstreifenmischung |
| $k_{rx}$ | longitudinale Dämpfung des Reifens bzw. der Laufstreifenmischung |
| $c_{bx}$ | longitudinale Seitenwandsteifigkeit (des Reifens) |
| $k_{bx}$ | longitudinale Seitenwanddämpfung (des Reifens) |
| $c_{bz}$ | vertikale Seitenwandsteifigkeit (des Reifens) |
| $k_{bz}$ | vertikale Seitenwanddämpfung (des Reifens) |
| $c_{b\theta}$ | Torsionssteifigkeit (des Rades) |
| $k_{b\theta}$ | Torsionsdämpfung (des Rades) |
| $\rho_{z0}$ | vertikale Reifenverformung |
| $\mu$ | Reibwert |
| $\lambda$ | Schlupf |
| $\mu_0$ | Reibwert am Arbeitspunkt der Reibwert-Schlupf-Kurve |
| $\lambda_0$ | Schlupf am Arbeitspunkt der Reibwert-Schlupf-Kurve |
| $C_\lambda$ | Schlupfsteifigkeit bei $\mu_0$ |
| $w$ | vertikale Höhe der Fahrbahnunebenheit |
| $\beta$ | Steigung der Fahrbahnunebenheit |
| $\rho_z$ | Verformung des Reifens |
| | |
| $DB$ | Bremskraftverteilungsfaktor |
| $X$ | Bremsnickausgleich (Anti-Dive) |
| $F_{cz0}$ | Statische Radlast |
| $V_x$ | Fahrzeuggeschwindigkeit |

## Patentansprüche

1. Verfahren zur Steuerung einer Bremsanlage eines Rades (4) in einem Fahrzeug (2), in welchem ein Fahrzeugaufbau (6) mittels eines Rad-Fahrwerk-Systems an das Rad (4) gekoppelt ist, umfassend die Schritte:

   - Ermitteln eines Beobachtungswerts $x$, welcher eine Abweichung $\tilde{x} - x_0$ eines momentanen Wertes $\tilde{x}$ eines Bewegungszustandes des Rad-Fahrwerk-Systems von einem Sollwert $x_0$ während eines Bremsvorgangs beschreibt, wobei der Beobachtungswert zumindest eine Komponente umfasst, die den Bewegungszustand in zumindest einem translatorischen Freiheitsgrad des Rades (4) und/oder des Aufbaus (6) beschreibt; und
   - Bereitstellen eines Steuersignals auf Basis einer Rückführmatrix $K$ derart, dass das Steuersignal ausgelegt ist, mittels der Bremsanlage eine Bremsmomentänderung u gemäß

$$u = -K \cdot x$$

   zur Reduzierung des Beobachtungswertes $x$ zu erzeugen, wobei die Rückführmatrix $K$ mittels eines linear-quadratischen Reglers durch die Minimierung eines vom Beobachtungswert $x$ abhängigen Funktionals $J$ bestimmt wird.

2. Verfahren nach Anspruch 1, wobei das Ermitteln des Beobachtungswertes $x$ ein Messen einer Beschleunigung des Rades und/oder des Aufbaus insbesondere in vertikaler und/oder in longitudinaler Richtung umfasst.

3. Verfahren nach Anspruch 1 oder 2, wobei der Beobachtungswert $x$ zumindest eine Komponente eines oder mehrerer der folgenden mechanischen Freiheitsgrade des Rad-Fahrwerk-Systems umfasst:

- eine vertikale Position des Aufbaus (6) $z_A$;
- eine vertikale Geschwindigkeit des Aufbaus (6) $\dot{z}_A$;
- eine vertikale Position des Rades (4) $z_R$;
- eine vertikale Geschwindigkeit des Rades (4) $\dot{z}_R$;
- eine longitudinale Position des Rades (4) $x_R$
- eine longitudinale Geschwindigkeit des Rades (4) $\dot{x}_R$;
- einen Drehwinkel des Rades (4) $\theta_R$;
- eine Drehwinkelrate $\dot{\theta}_R$ des Rades (4) bzw. eine Raddrehzahl $\omega_R$.

4. Verfahren nach einem der vorangegangenen Ansprüche, wobei das Ermitteln des Beobachtungswertes mittels eines Kalman-Filters erfolgt.

5. Verfahren nach Anspruch 4, wobei das Ermitteln des Beobachtungswerts $x$ zu diskreten Zeitpunkten $k$ in zeitlichen Abständen $T_a$ als Beobachtungswert $x_k$ rekursiv gemäß

$$x_{k+1} = \Phi x_k + \Gamma u_k + \Phi \widehat{P}_k C^T \left( C\widehat{P}_k C^T + F\widehat{Q}F^T + \widehat{R} \right)^{-1} \cdot (y_k - Cx_k - Du_k)$$

auf Basis einer rekursiven Bestimmung einer Schätzfehler-Kovarianzmatrix $\widehat{P}_k$ gemäß

$$\widehat{P}_{k+1} = \Phi \widehat{P}_k \Phi^T + G\widehat{Q}G^T - \Phi \widehat{P}_k C^T \left( C\widehat{P}_k C^T + F\widehat{Q}F^T + \widehat{R} \right)^{-1} C\widehat{P}_k \Phi^T$$

anhand von Messwerten $y_k$ einer Ausgangsgröße $y$ und Werten $u_k$ der Bremsmomentänderung $u$ zu den diskreten Zeitpunkten $k$ erfolgt,

wobei $\Phi = e^{AT_a}$ eine zeitdiskrete Systemmatrix, $\Gamma = \int_0^{T_a} e^{A\tau}d\tau\, B$ eine zeitdiskrete Eingangsmatrix und $G = \int_0^{T_a} e^{A\tau}d\tau\, E$ eine zeitdiskrete Störeingangsmatrix des Rad-Fahrwerk-Systems beschreibt, in welchem unter Berücksichtigung von Störungen $w$ aufgrund von Fahrbahnunebenheiten, welche durch eine Störung-Kovarianzmatrix $\widehat{Q}$ beschrieben werden, und von Messrauschen der Messwerte $y_k$, welches durch eine Messrauschen-Kovarianzmatrix $\widehat{R}$ beschrieben wird, die Bedingungen

$$\dot{x} = A \cdot x + B \cdot u + E \cdot w$$

$$y = C \cdot x + D \cdot u + F \cdot w + v$$

mit einer Systemmatrix $A$, einer Eingangsmatrix $B$, einer Ausgangsmatrix $C$, einer Durchgangsmatrix $D$, einer Störeingangsmatrix $E$ und einer Störausgangsmatrix $F$ gelten.

6. Verfahren nach Anspruch 5, wobei das vom Beobachtungswert $x$ abhängige Funktional $J$ die Bedingung

$$J = \mathrm{E}\left( \sum_{k=0}^{n-1} (x_k^T Q x_k + u_k R u_k + 2u_k N x_k) \right) + \mathrm{E}(x_n^T S x_n)$$

mit einer vorgegebenen Zustandsgewichtungsmatrix $Q$, einem Stellgrößengewichtungsparameter $R$ des linear-quadratischen Reglers und einer Kopplungsmatrix $N$ erfüllt,
wobei eine Lösungsmatrix $S$ die positiv definite Lösung der dem linear-quadratischen Regler zugehörigen, zeitdiskreten Matrix-Riccatigleichung ist.

7. Verfahren nach Anspruch 6, wobei die Rückführmatrix $K$ gemäß

$$K = -(R + \Gamma^T S \Gamma)^{-1}(N + \Gamma^T S \Phi)$$

bestimmt wird.

8. Verfahren nach einem der vorhergehenden Ansprüche, wobei der Sollwert $x_0$ des Bewegungszustands des Rad-Fahrwerk-Systems derart bestimmt ist, dass während eines Bremsvorgangs das Rad (4) einen vorbestimmten Schlupfwert $\lambda_0$ einnimmt.

9. Verfahren nach einem der vorangegangenen Ansprüche, wobei das bereitgestellte Steuersignal direkt eine Bremsmomentänderung repräsentiert und das Verfahren außerdem umfasst:

Erzeugen eines resultierenden Bremssignals durch Kombinieren des bereitgestellten Steuersignals mit einem Ausgangssignal eines Bremskraftregelmoduls insbesondere eines Antiblockiersystems oder Antischlupfregelsystems.

10. Vorrichtung zur Steuerung einer Bremsanlage eines Rades (4) in einem Fahrzeug (2), in welchem ein Fahrzeugaufbau (6) mittels eines Rad-Fahrwerk-Systems an das Rad (4) gekoppelt ist, wobei die Vorrichtung umfasst:

- ein Zustandsbeobachtermodul (10) zum Ermitteln eines Beobachtungswerts $x$, welcher eine Abweichung $\tilde{x}$ - $x_0$ eines momentanen Wertes $\tilde{x}$ eines Bewegungszustandes des Rad-Fahrwerk-Systems von einem Sollwert $x_0$ während eines Bremsvorgangs beschreibt, wobei der Beobachtungswert zumindest eine Komponente umfasst, die den Bewegungszustand in zumindest einem translatorischen Freiheitsgrad des Rades (4) und/oder des Aufbaus (6) beschreibt; und
- ein Signalmodul (14) zum Bereitstellen eines Steuersignals auf Basis einer Rückführmatrix $K$ derart, dass das Steuersignal ausgelegt ist, mittels der Bremsanlage eine Bremsmomentänderung $u$ gemäß

$$u = -K \cdot x$$

zur Reduzierung des Beobachtungswertes $x$ zu erzeugen, wobei die Rückführmatrix $K$ mittels eines linear-quadratischen Reglers durch die Minimierung eines vom Beobachtungswert $x$ abhängigen Funktionals $J$ bestimmt wird.

11. Vorrichtung nach Anspruch 10, außerdem umfassend zumindest einen Aufbausensor (8A), welcher ausgelegt ist, eine vertikale Bewegung des Fahrzeugaufbaus (6) und/oder eine longitudinale Bewegung des Aufbaus (6) zu erfassen.

12. Vorrichtung nach Anspruch 10 oder 11, außerdem umfassend zumindest einen Radsensor (8R), welcher ausgelegt ist, im oder am Rad (4) und/oder im oder am Radträger eine vertikale und/oder longitudinale Bewegung des Rades (4) zu erfassen.

13. Vorrichtung nach Anspruch 11 oder 12, wobei der zumindest eine Aufbausensor (8A) und/oder der zumindest eine Radsensor (8R) als Beschleunigungssensor ausgebildet ist.

14. Verfahren nach einem der Ansprüche 10 bis 13, außerdem umfassend Bremssignal-Kombinationsmoduls, welches ausgelegt ist, das bereitgestellte Steuersignal mit einem Ausgangssignal eines Bremskraftregelmoduls insbesondere eines Antiblockiersystems oder Antischlupfregelsystems zu kombinieren, um ein resultierendes Bremssignal zur Zuführung zu einem Aktors der Bremsanlage zu erzeugen.

15. Computerprogrammprodukt umfassend computer-ausführbare Anweisungen, welche, wenn in ein Computersystem geladen und dort ausgeführt, das Computersystem veranlassen, ein Verfahren gemäß einem der Ansprüche 1 bis 9 auszuführen.

## Fig. 1

## Fig. 2

Fig. 3

Fig. 4

Erweiterbar und reduzierbar durch mehr oder weniger $Y_{2,Mess}$

$$x = x_m - x_0 = 0$$

$$\Delta p_R \sim -K \cdot x$$

Fig. 5

Europäisches
Patentamt

European
Patent Office

Office européen
des brevets

# EUROPÄISCHER RECHERCHENBERICHT

Nummer der Anmeldung

EP 17 00 2041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG   (IPC) |
|---|---|---|---|
| Y | WO 03/022651 A1 (KELSEY HAYES CO [US]; BARRON RICHARD J [US]; MILOT DANNY R [US]) 20. März 2003 (2003-03-20) | 1-4,9-15 | INV. B60T8/172 |
| A | * Seite 4, Zeile 1 - Seite 17, Zeile 5; Ansprüche 1-16; Abbildungen 1-9 * <br> * Seite 11, Zeile 6 - Seite 11, Zeile 12 * <br> ----- | 5-8 | |
| Y | EP 0 225 180 A2 (NIPPON DENSO CO [JP]) 10. Juni 1987 (1987-06-10) | 1-4,9-15 | |
| A | * Seite 10, Zeile 11 - Seite 31, Zeile 12 * <br> ----- | 5-8 | |
| A | US 2004/024562 A1 (BARRON RICHARD J [US] ET AL) 5. Februar 2004 (2004-02-05) * das ganze Dokument * ----- | 1 | |

RECHERCHIERTE SACHGEBIETE  (IPC)

B60T

Der vorliegende Recherchenbericht wurde für alle Patentansprüche erstellt

| Recherchenort | Abschlußdatum der Recherche | Prüfer |
|---|---|---|
| München | 8. Mai 2018 | Graniou, Marc |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

..............................................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 00 2041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2018

| Im Recherchenbericht angeführtes Patentdokument | Datum der Veröffentlichung | Mitglied(er) der Patentfamilie | Datum der Veröffentlichung |
|---|---|---|---|
| WO 03022651 A1 | 20-03-2003 | EP 1315646 A1<br>WO 03022651 A1 | 04-06-2003<br>20-03-2003 |
| EP 0225180 A2 | 10-06-1987 | DE 3677161 D1<br>EP 0225180 A2<br>JP H0649446 B2<br>JP S62125944 A<br>US 4848851 A | 28-02-1991<br>10-06-1987<br>29-06-1994<br>08-06-1987<br>18-07-1989 |
| US 2004024562 A1 | 05-02-2004 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Bremswegverkürzungspotential bei Information-saustausch und Koordination zwischen semiaktiver Dämpfung und ABS. Fortschrittberichte VDI, Reihe 12, Verkehrstechnik, Fahrzeugtechnik. VDI-Verlag, 2011, vol. 738

- Modellbasierte Rekonstruktion der Einflußgrößen von Radaufhängungs- und Reifendynamik auf den Schlupf. **SCHWARZ, R. ; WILLIMOWSKI, M. ; WILLIMOWSKI, P.** VDI Berichte. VDI Verlag, 1997, vol. 1350, 155-184